(19)

Europäisches
Patentamt
European
Patent Office
Office européen
des brevets

(11) **EP 2 600 619 A1**

(12) **EUROPEAN PATENT APPLICATION**
published in accordance with Art. 153(4) EPC

(43) Date of publication:
05.06.2013 Bulletin 2013/23

(51) Int Cl.:
*H04N 13/00* (2006.01)    *H04N 7/173* (2011.01)

(21) Application number: 12815404.4

(86) International application number:
PCT/JP2012/067014

(22) Date of filing: 03.07.2012

(87) International publication number:
WO 2013/011834 (24.01.2013 Gazette 2013/04)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: 15.07.2011 JP 2011157199

(71) Applicant: Sony Corporation
Tokyo 108-0075 (JP)

(72) Inventor: TSUKAGOSHI, Ikuo
Tokyo 108-0075 (JP)

(74) Representative: Ealey, Douglas Ralph et al
D Young & Co LLP
120 Holborn
London EC1N 2DY (GB)

(54) **TRANSMITTER, TRANSMISSION METHOD AND RECEIVER**

(57)    Transmission of a PES packet including disparity information is effectively performed.

Left-eye image data and right-eye image data for displaying a stereoscopic image are output. Superimposition information data to be superimposed on an image by the left-eye image data and the right-eye image data is output. Disparity information for providing a disparity is output by shifting the superimposition information to be superimposed on the image by the left-eye image data and the right-eye image data. A transport stream including a PES packet of a video data stream including the image data and a PES packet of a first private data stream including the superimposition information data is transmitted. A PES packet of a second private data stream is multiplexed such that the PES packet arrives at a decoder buffer of a receiving side a predetermined period before the timing of a display time stamp included in the PES packet.

*FIG. 16*

EP 2 600 619 A1

**Description**

TECHNICAL FIELD

The present technology relates to a transmitting apparatus, a transmitting method, and a receiving apparatus. In particular, the present technology relates to a transmitting apparatus, which transmits disparity information for providing a disparity to superimposition information, together with stereoscopic image data having left-eye image data and right-eye image data, a transmitting method, and a receiving apparatus.

BACKGROUND ART

For example, Patent Document 1 has proposed a transmission scheme using television airwaves of stereoscopic image data. In this transmission scheme, stereoscopic image data having left-eye image data and right-eye image data are transmitted to display a stereoscopic image using a binocular disparity.

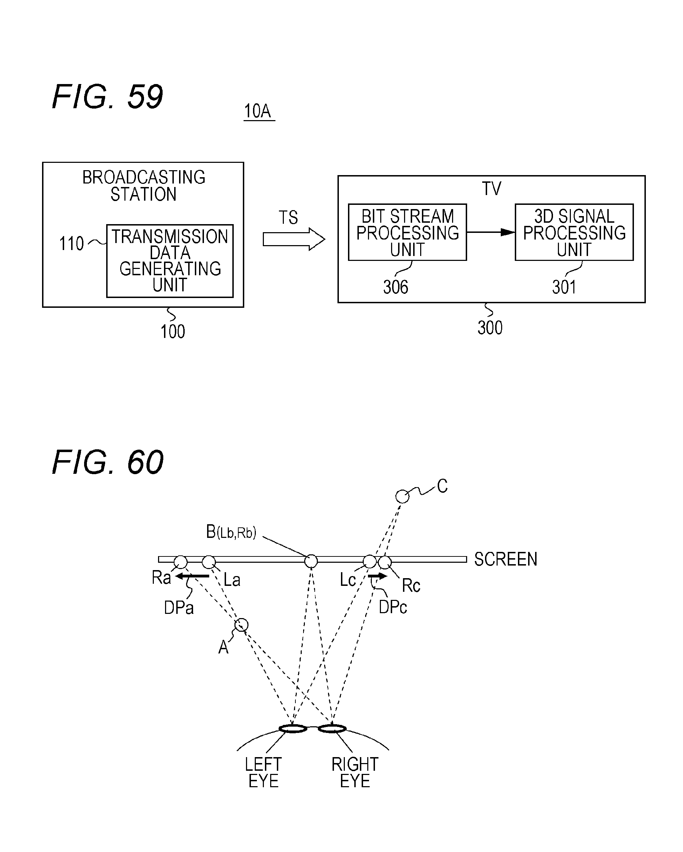

Fig. 60 illustrates the relation between the display positions of left and right images of an object (thing) on a screen and the reproduction position of a stereoscopic image thereof, in a stereoscopic image display using a binocular disparity. For example, as for an object A of which the left image La and the right image Ra are displayed respectively at the right side and the left side on the screen as illustrated, since the left and right lines of sight intersect with each other in front of a screen surface, the reproduction position of a stereoscopic image thereof is in front of the screen surface. DPa denotes a disparity vector of the object A in the horizontal direction.

Also, for example, as for an object B of which the left image Lb and the right image Rb are respectively displayed at the same position on the screen as illustrated, since the left and right lines of sight intersect with each other at the screen surface, the reproduction position of a stereoscopic image thereof is on the screen surface. In addition, for example, as for an object C of which the left image Lc and the right image Rc are displayed respectively at the left side and the right side on the screen as illustrated, since the left and right lines of sight intersect with each other inside the screen surface, the reproduction position of a stereoscopic image thereof is inside the screen surface. DPc denotes a disparity vector of the object C in the horizontal direction.

CITATION LIST

PATENT DOCUMENT

Patent Document 1: Japanese Patent Application Laid-Open No. 2005-6114

SUMMARY OF THE INVENTION

PROBLEMS TO BE SOLVED BY THE INVENTION

As described above, in a stereoscopic image display, a viewer usually perceives the perspective of a stereoscopic image by using a binocular disparity. Also, it is expected that superimposition information superimposed on an image, such as a caption, will be rendered in conjunction with a stereoscopic image display not only as a two-dimensional spatial depth feel but also as a three-dimensional (3D) depth feel. For example, in the case where an image and a caption are displayed in a superimposed (overlaid) manner but not displayed in front of a thing (object) in an image closest in terms of the perspective, a viewer may feel a perspective discrepancy.

Thus, it is considered that disparity information between a left-eye image and a right-eye image is transmitted together with data of superimposition information and a receiving side provides a disparity between left-eye superimposition information and right-eye superimposition information. The disparity information (disparity information of 3D extension) has a specification that requires interpolation at the receiving side while transmitting actual data. Therefore, special consideration is required when PES (Packetized Elementarty Stream) packets including the disparity information are multiplexed into a transport stream. That is, there is a need for a mechanism for controlling the arrival timing of the disparity information to a decoder of the receiving side and the interpolation timing at the decoder.

An object of the present technology is to effectively perform the transmission of PES packets including disparity information.

SOLUTIONS TO PROBLEMS

A concept of the present technology is a transmitting apparatus including:

an image data output unit configured to output left-eye image data and right-eye image data for displaying a stereoscopic image;

a superimposition information data output unit configured to output superimposition information data to be superimposed on an image by the left-eye image data and the right-eye image data;

a disparity information output unit configured to output disparity information for providing a disparity by shifting the superimposition information to be superimposed on the image by the left-eye image data and the right-eye image data; and

a data transmitting unit configured to generate and transmit a transport stream obtained by multiplexing a PES packet of a video data stream including the image data output from the image data output unit, a PES packet of a first private data stream including the superimposition information data output from the superimposition information data output unit, and a PES packet of a second private data stream including the disparity information output from the disparity information output unit,

wherein the data transmitting unit multiplexes the PES packet of the second private data stream such that the PES packet arrives at a decoder buffer of a receiving side a predetermined period before the timing of a display time stamp included in the PES packet.

In the present technology, the image data output unit outputs left-eye image data and right-eye image data for displaying a stereoscopic image. The superimposition information data output unit outputs superimposition information data to be superimposed on an image by the left-eye image data and the right-eye image data. Herein, the superimposition information includes a caption, graphics, a text, and the like that are superimposed on the image. The disparity information output unit outputs disparity information for providing a disparity by shifting the superimposition information to be superimposed on the image by the left-eye image data and the right-eye image data. For example, the superimposition information data may be DVB subtitle data, and the disparity information may be disparity information in units of a region or a subregion included in the region, or disparity information in units of a page including all regions.

The data transmitting unit generates and transmits a transport stream. The transport stream includes a PES packet of a video data stream including the image data, a PES packet of a first private data stream including the superimposition information data, and a PES packet of a second private data stream including the disparity information.

The data transmitting unit multiplexes, for example, the PES packet of the second private data stream such that the PES packet arrives at a decoder buffer of a receiving side a predetermined period before the timing of a display time stamp included in the PES packet. For example, the predetermined period includes at least a period that is necessary to acquire the disparity information by decoding the PES packet of the second private data stream.

In this manner, in the present technology, the PES packet including the disparity information is multiplexed such that the PES packet arrives at the decoder buffer of the receiving side the predetermined period before the timing of the display time stamp included in the PES packet. Therefore, the receiving side can acquire the disparity information by performing decoding or the like in time for the timing of the display time stamp. That is, in the present technology, the transmission of the PES packet including the disparity information can be effectively performed.

Also, in the present technology, for example, the transport stream may include one PES packet of the second private data stream with respect to one PES packet of the first private data stream. The disparity information included in the PES packet of the second private data stream may be disparity information that is sequentially updated within a period during which the superimposition information by the superimposition information data included in the PES packet of the first private data stream is displayed, and may include disparity information of an initial frame, and disparity information of a frame for each of the subsequent update frame intervals.

In this case, the sequentially-updated disparity information (disparity information at a plurality of plotted positions) is transmitted collectively to the receiving side before, for example, the display of the superimposition information. In this case, transmission content is, for example, recording content such as a movie, and the encoding and multiplexing of the disparity information are performed off-line.

Also, in the present technology, for example, the transport stream may include a plurality of PES packets of the second private data stream with respect to one PES packet of the first private data stream. The disparity information included in the plurality of PES packets of the second private data stream may be one or more disparity information that is sequentially updated within a period during which the superimposition information by the superimposition information data included in the PES packet of the first private data stream is displayed.

In this case, the sequentially-updated disparity information (disparity information at a plurality of plotted positions) is transmitted sequentially to the receiving side even after, for example, the display of the superimposition information. In this case, transmission content is, for example, live content such as a sport or a concert, and the encoding and multiplexing of the disparity information are performed in real time. Herein, when one PES packet includes a plurality of pieces of disparity information, a delay occurs, but the read load in a decoder of the receiving side can be reduced because the multiplexing rate of the PES packet is reduced.

In this case, for example, when the PES packet of the second private data stream includes a plurality of pieces of disparity information, the plurality of pieces of disparity information may include disparity information of a frame that is the same as disparity information of an initial frame included in the next PES packet. In this case, when an interval between a plurality of pieces of disparity information is an interval of several frames, display information of each frame can be obtained by performing interpolation.

In this case, for example, when the PES packet of the second private data stream includes a piece of disparity information, the data transmitting unit may multiplex the PES packet of the second private data stream after the second such that the PES packet of the second private data stream arrives at the decoding buffer of the receiving side before the next interpolation frame of the timing of the display time stamp included in the previous PES packet. In this case, when an interval of the disparity information included in each PES packet is an interval of several frames, display information of each frame can be obtained by performing interpolation.

Also, in the present technology, for example, the data transmitting unit may be set such that the timing of the decoding time stamp included in the PES packet of the second private data stream is earlier by a predetermined period than the timing of the display time stamp included in the PES packet. In this case, in the receiving side, decoding can be reliably started in time for the timing of the display time stamp.

Also, in the present technology, for example, the PES packet of the first private data stream and the PES packet of the second private data stream may be set to include synchronization information for synchronizing the display by the superimposition information data with the disparity by the disparity information. In this case, even when the superimposition information data and the disparity information are transmitted in separate PES packets, the receiving side can synchronize the display by the superimposition information data with the shift control by the disparity information.

Also, in the present technology, for example, the transport stream may be set to include association information for associating the PES packet of the first private data stream with the PES packet of the second private data stream, in an inserted manner. In this case, by the association information, for example, the receiving side can easily know that both of the PES packets are associated with each other, and thus can know that both of the PES packets should be decoded.

Also, in the present technology, the PES packet of the second private data stream may be set to include both the disparity information and the superimposition information data. In this case, a 3D-compatible device of the receiving side can perform the 3D display of the superimposition information just by decoding the PES packet of the second private data stream.

Another concept of the present technology is a receiving apparatus including:

a data receiving unit configured to receive a transport stream obtained by multiplexing a PES packet of a video data stream including left-eye image data and right-eye image data for displaying a stereoscopic image, a PES packet of a first private data stream including superimposition information data to be superimposed on an image by the left-eye image data and the right-eye image data, and a PES packet of a second private data stream including disparity information for providing a disparity by shifting the superimposition information to be superimposed on the image by the left-eye image data and the right-eye image data, the PES packet of the second private data stream being multiplexed such that the PES packet arrives at a decoder buffer of a receiving side a predetermined period before the timing of a display time stamp included in the PES packet;

an image data acquiring unit configured to acquire the image data by performing decoding processing on the PES packet of the video data stream extracted from the transport stream received by the data receiving unit;

a decoding buffer configured to temporarily store the PES packet of the first private data stream and the PES packet of the second private data stream extracted from the transport stream received by the data receiving unit;

a superimposition information data acquiring unit configured to acquire the superimposition information data by reading the PES packet of the first private data stream from the decoding buffer and performing decoding processing on the read PES packet;

a disparity information acquiring unit configured to acquire the disparity information by reading the PES packet of the second private data stream from the decoding buffer and performing decoding processing on the read PES packet; and

an image data processing unit configured to provide a disparity to the same superimposition information superimposed on a left-eye image and a right-eye image by using the image data acquired by the image data acquiring unit, the superimposition information data acquired by the superimposition information data acquiring unit, and the disparity information acquired by the disparity information acquiring unit, and obtain data of the left-eye image on which the superimposition information is superimposed and data of the right-eye image on which the superimposition information is superimposed.

Also, in the present technology, for example, a disparity information interpolating unit may be further provided to generate disparity information of any frame interval in a period of a predetermined number of frames by performing interpolation processing on the disparity information that is acquired by the disparity information acquiring unit and is sequentially updated within the period of a predetermined number of frames during which the superimposition information is displayed; and the image data processing unit may use the disparity information of any frame interval that is generated by the disparity information interpolating unit. In this case, when an interval of the disparity information included in each PES packet is an interval of several frames, a shift adjustment can be performed by obtaining, for example, the display information of each frame.

Also, in the present technology, for example, the timing of a decoding time stamp included in the PES packet of the second private data stream may be set to be earlier by a predetermined period than the timing of a display time stamp included in the PES packet; and the disparity information acquiring unit may perform the decoding processing by reading the PES packet of the second private data stream from the decoding buffer at the timing of the decoding time stamp included in the PES packet of the second private data stream. In this way, the disparity information can be acquired by reliably starting the decoding in time for the timing of the display time stamp.

EFFECTS OF THE INVENTION

According to the present technology, the transmission of the PES packet including the disparity information can be effectively performed.

BRIEF DESCRIPTION OF DRAWINGS

Fig. 1 is a block diagram illustrating an example of a configuration of an image transmitting/receiving system according to an embodiment of the present technology.
Fig. 2 is a block diagram illustrating an example of a configuration of a transmission data generating unit in a broadcasting station.
Fig. 3 is a diagram illustrating image data of a 1920x1080 pixel format.
Fig. 4 is a diagram for describing a Top & Bottom scheme, a Side By Side scheme, and a Frame Sequential scheme that are stereoscopic image data (3D image data) transmitting schemes.
Fig. 5 is a diagram for describing an example of detecting a disparity vector of a right-eye image with respect to a left-eye image.
Fig. 6 is a diagram for describing the obtainment of a disparity vector by a block matching scheme.
Fig. 7 is a diagram illustrating an example of an image in the case where a value of a disparity vector of each pixel is used as a luminance value of each pixel.
Fig. 8 is a diagram illustrating an example of a disparity vector of each block.
Fig. 9 is a diagram for describing downsizing processing performed by a disparity information creating unit of the transmission data generating unit.
Fig. 10 is a diagram illustrating an example of a region defined on an image in subtitle data and a subregion defined in the region.
Fig. 11 is a diagram illustrating a configuration of a 2D stream and a 3D extension stream that are included in a transport stream TS in First Type.
Fig. 12 is a diagram illustrating a configuration of a 2D stream and a 3D extension stream that are included in a transport stream TS in Second Type.
Fig. 13 is a diagram for describing the association of a value of a time stamp PTS inserted into a PES header of a 2D stream PES1(1): PES#1 with a value of a time stamp PTS inserted into a PES header of a 3D extension frame PES2(2): PES#2 in First Type.
Fig. 14 is a diagram illustrating an example in which the values of the time stamps PTS of the 2D stream and the 3D extension stream are set to different values.
Fig. 15 is a diagram illustrating another example in which the values of the time stamps PTS of the 2D stream and the 3D extension stream are set to different values.
Fig. 16 is a diagram illustrating an example of multiplexing (off-line) the PES packets of the 2D stream and the 3D extension stream in the transport stream in the case of First Type.
Fig. 17 is a diagram illustrating an example of multiplexing (real-time) the PES packets of the 2D stream and the 3D extension stream in the transport stream TS in the case of First Type.
Fig. 18 is a diagram illustrating an example of multiplexing (off-line) the PES packets of the 2D stream and the 3D extension stream in the transport stream in the case of Second Type.
Fig. 19 is a diagram illustrating an example of multiplexing (real-time) the PES packets of the 2D stream and the 3D extension stream in the transport stream TS in the case of Second Type.
Fig. 20 is a diagram illustrating an example of the case where a PES packet having an SD-DSS (Single Disparity DSS) is transmitted in each frame in order to update the disparity information, that is, the case where the SD-DSS is linked.

Fig. 21 is a diagram illustrating an example of the case where a PES packet having an MD-DSS (Multiple Disparity DSS) is transmitted to reduce the occurrence rate of a PES packet in order to update the disparity information.

Fig. 22 is a diagram illustrating cases where a PES packet having an MD-DSS is used to reduce the occurrence rate of a PES packet in the case where an SD-DSS is linked.

Fig. 23 is a diagram illustrating a specific example of the case where a PES packet having an MD-DSS is multiplexed into a transport stream.

Fig. 24 is a diagram illustrating another specific example of the case where a PES packet having an MD-DSS is multiplexed into a transport stream.

Fig. 25 is a diagram for describing an example of setting a specific timing of a DTS in a PES packet including a DSS.

Fig. 26 is a diagram illustrating an example of a configuration of a transport stream in First Type.

Fig. 27 is a diagram illustrating a structure of a PCS (page_composition_segment) constituting subtitle data.

Fig. 28 is a diagram illustrating the correspondence relation between each value of segment_type and a segment type.

Fig. 29 is a diagram for describing information (Component_type = 0x15, 0x25) representing a 3D subtitle format that is newly defined.

Fig. 30 is a diagram illustrating an example of a configuration of a transport stream in Second Type.

Fig. 31 is a diagram illustrating an example of updating disparity information by using an interval period and the case where an interval period is fixed and is equal to an update period.

Fig. 32 is a diagram illustrating an example of updating disparity information by using an interval period and an example of updating disparity information in the case where an interval period is set to short.

Fig. 33 is a diagram illustrating an example of a configuration of a 3D stream in Second Type.

Fig. 34 is a diagram illustrating an example of updating disparity information in the case of sequentially transmitting DSS segments.

Fig. 35 is a diagram illustrating an example of updating disparity information, in which an update frame interval is expressed in a multiple of an interval duration (ID) as a unit period.

Fig. 36 is a diagram illustrating an example of displaying subtitles, in which two regions as caption display regions are included in a page area (Area for Page-default).

Fig. 37 is a diagram illustrating an example of the disparity information curve of each region and page in the case where disparity information in units of a region and disparity information in units of a page including all regions are included in a DSS segment, as disparity information that is sequentially updated in a caption display period.

Fig. 38 is a diagram illustrating a transmission structure of disparity information of each page and region.

Fig. 39 is a diagram (1/3) illustrating an example of a syntax of the DSS.

Fig. 40 is a diagram (2/3) illustrating an example of a syntax of the DSS.

Fig. 41 is a diagram (3/3) illustrating an example of a syntax of the DSS.

Fig. 42 is a diagram (1/4) illustrating the main data definition contents (semantics) of the DSS.

Fig. 43 is a diagram (2/4) illustrating the main data definition contents (semantics) of the DSS.

Fig. 44 is a diagram (3/4) illustrating the main data definition contents (semantics) of the DSS.

Fig. 45 is a diagram (4/4) illustrating the main data definition contents (semantics) of the DSS.

Fig. 46 is a diagram illustrating the concept of broadcast reception in the case where a set-top box and a television receiver are 3D-compatible devices.

Fig. 47 is a diagram illustrating the concept of broadcast reception in the case where a set-top box and a television receiver are legacy 2D-compatible devices.

Fig. 48 is a diagram illustrating an example of displaying a caption (graphics information) on an image, and the perspective of a background, a near-view object, and the caption.

Fig. 49 is a diagram illustrating an example of displaying a caption on an image, and a left-eye caption LGI and a right-eye caption RGI for displaying the caption.

Fig. 50 is a block diagram illustrating an example of a configuration of a set-top box included in the image transmitting/receiving system.

Fig. 51 is a block diagram illustrating an example (3D-compatible) of a configuration of a bit stream processing unit included in the set-top box.

Fig. 52 is a diagram illustrating an example of a syntax of a multi-decoding descriptor that can be used to associate a 2D stream with a 3D extension stream.

Fig. 53 is a diagram illustrating the contents (semantics) of main information in the example of the syntax of the multi-decoding descriptor.

Fig. 54 is a diagram illustrating an example of a configuration of a transport stream TS of First Type in the case where the multi-decoding descriptor is disposed.

Fig. 55 is a block diagram illustrating another example (2D-compatible) of a configuration of a bit stream processing unit included in the set-top box.

Fig. 56 is a block diagram illustrating an example of a configuration of a television receiver included in the image transmitting/receiving system.

Fig. 57 is a block diagram illustrating another example of a configuration of a set-top box included in the image transmitting/receiving system.

Fig. 58 is a block diagram illustrating another example of a configuration of a television receiver included in the image transmitting/receiving system.

Fig. 59 is a block diagram illustrating an example of a configuration of the image transmitting/receiving system.

Fig. 60 is a diagram for describing the relation between the display positions of left and right images of an object on a screen and the reproduction position of a stereoscopic image thereof, in a stereoscopic image display using a binocular disparity.

MODE FOR CARRYING OUT THE INVENTION

Hereinafter, modes for implementing the invention (hereinafter, referred to as "embodiments") will be described. In addition, the description will be made in the following order.

    1. Embodiments
    2. Modifications

<1. Embodiments>

[Example of Configuration of Image Transmitting/Receiving System]

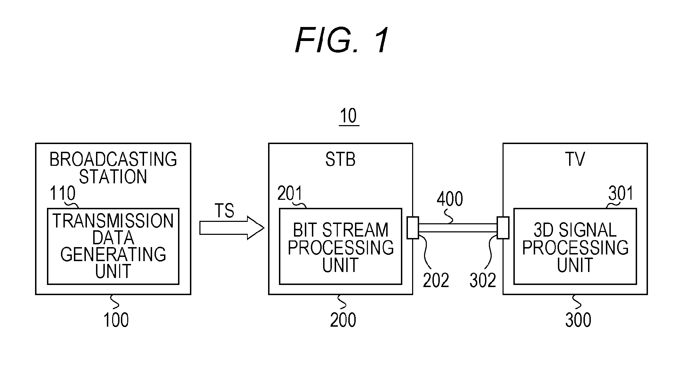

Fig. 1 illustrates an example of a configuration of an image transmitting/receiving system 10 according to an embodiment. The image transmitting/receiving system 10 includes a broadcasting station 100, a set-top box (STB) 200, and a television receiver (TV) 300.

The set-top box 200 and the television receiver 300 are connected by a digital interface of HDMI (High Definition Multimedia Interface). The set-top box 200 and the television receiver 300 are connected by using an HDMI cable 400. The set-top box 200 is provided with an HDMI terminal 202. The television receiver 300 is provided with an HDMI terminal 302. One end of the HDMI cable 400 is connected to the HDMI terminal 202 of the set-top box 200, and the other end of the HDMI cable 400 is connected to the HDMI terminal 302 of the television receiver 300.

[Description of Broadcasting Station]

The broadcasting station 100 transmits a transport stream TS on a broadcast wave. The broadcasting station 100 includes a transmission data generating unit 110 that generates a transport stream TS. The transport stream TS includes stereoscopic image data, audio data, superimposition information data, disparity information, or the like. The stereoscopic image data has a predetermined transmission format, and includes left-eye image data and right-eye image data for displaying a stereoscopic image. In general, the superimposition information is a caption, graphics information, text information, or the like. However, in the embodiment, the superimposition information is a subtitle (caption).

[Example of Configuration of Transmission Data Generating Unit]

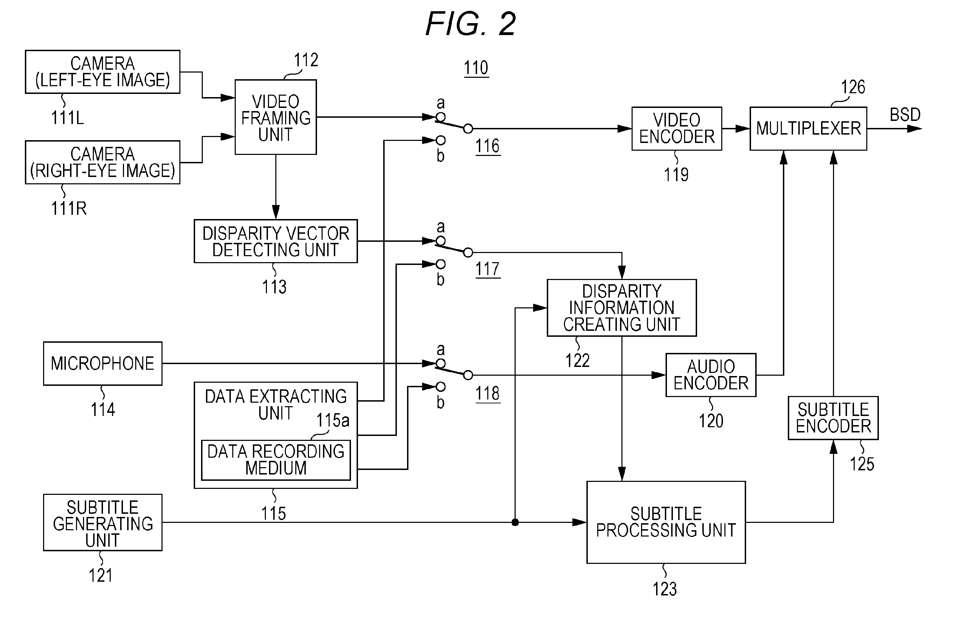

Fig. 2 illustrates an example of a configuration of the transmission data generating unit 110 in the broadcasting station 100. The transmission data generating unit 110 transmits disparity information (disparity vector) in a data structure that can easily cooperate with a DVB (Digital Video Broadcasting) scheme that is one of the existing broadcast standards.

The transmission data generating unit 110 includes cameras 111L and 111R, a video framing unit 112, a disparity vector detecting unit 113, a microphone 114, a data extracting unit 115, and change-over switches 116 to 118. Also, the transmission data generating unit 110 includes a video encoder 119, an audio encoder 120, a subtitle generating unit 121, a disparity information creating unit 122, a subtitle processing unit 123, a subtitle encoder 125, and a multiplexer 126.

The camera 111L captures a left-eye image to obtain left-eye image data for displaying a stereoscopic image. The camera 111R captures a right-eye image to obtain right-eye image data for displaying a stereoscopic image. The video framing unit 112 processes the left-eye image data obtained by the camera 111L and the right-eye image data obtained by the camera 111R, into stereoscopic image data (3D image data) conforming to a transmission scheme. The video framing unit 112 constitutes an image data output unit.

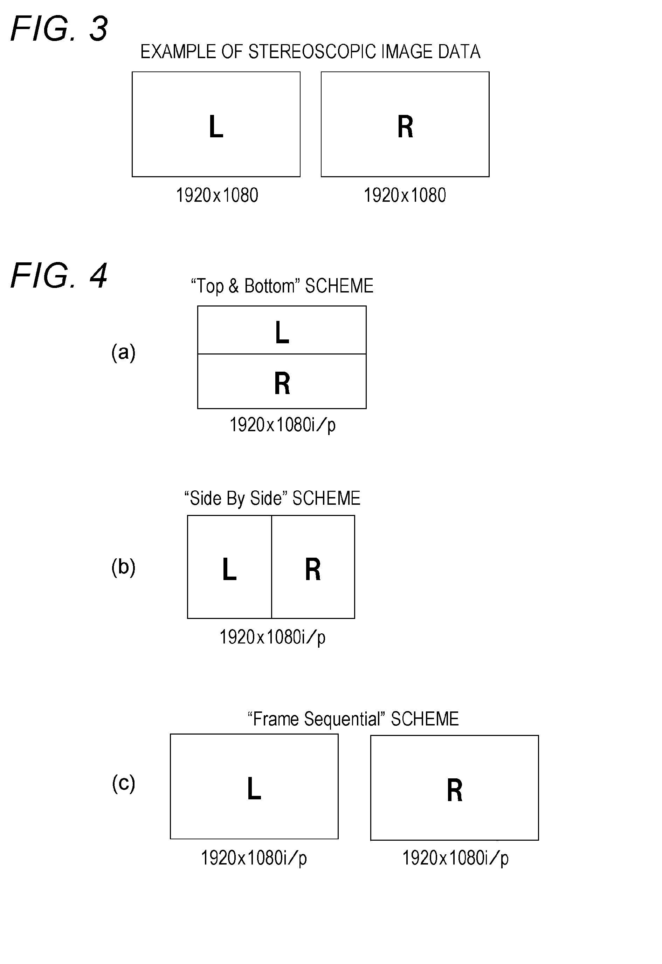

An example of the transmission scheme for transmitting the stereoscopic image data (3D image data) will be described. Herein, although the following first to third transmission schemes will be described as an example, any other transmission schemes may be used to transmit the stereoscopic image data (3D image data). Also, herein, the case where the left-eye (L) image data and the right-eye (R) image data are image data with a predetermined resolution, for example, a 1920x1080 pixel format as illustrated in Fig. 3 will be described as an example.

The first transmission scheme is a Top & Bottom scheme, and is a scheme that transmits each line data of the left-eye image data in the first half of the vertical direction and transmits each line data of the right-eye image data in the second half of the vertical direction as illustrated in Fig. 4(a). In this case, since the lines of the left-eye image data and the right-eye image data are reduced by 1/2, the vertical resolution is reduced by 1/2 with respect to the original signal.

The second transmission scheme is a Side By Side scheme, and is a scheme that transmits pixel data of the left-eye image data in the first half of the horizontal direction and transmits pixel data of the right-eye image data in the second half of the horizontal direction as illustrated in Fig. 4(b). In this case, the horizontal-direction pixel data of each of the left-eye image data and the right-eye image data is reduced by 1/2. The horizontal resolution is reduced by 1/2 with respect to the original signal.

The third transmission scheme is a Frame Sequential scheme, and is a scheme that transmits the left-eye image data and the right-eye image data by being sequentially switched for the respective frames as illustrated in Fig. 4(c). In addition, the Frame Sequential scheme also includes a Full Frame scheme or a Service Compatible scheme for the conventional 2D format.

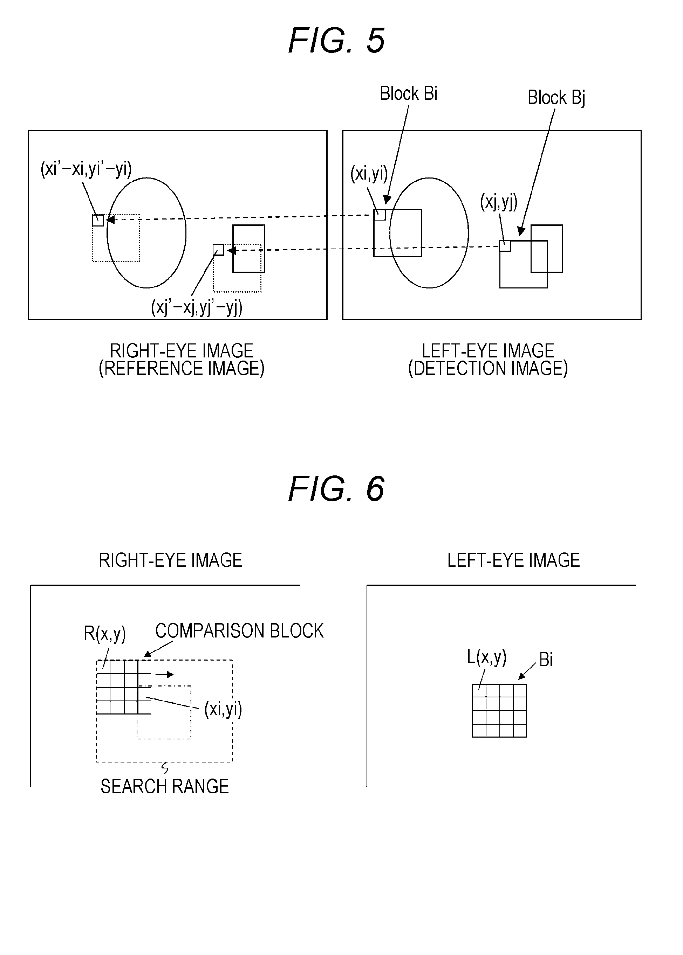

The disparity vector detecting unit 113 detects, for example, a disparity vector for each pixel constituting the image based on the left-eye image data and the right-eye image data. An example of the detection of the disparity vector will be described. Herein, an example of detecting the disparity vector of the right-eye image with respect to the left-eye image will be described. As illustrated in Fig. 5, the left-eye image is used as a detection image, and the right-eye image is used as a reference image. In this example, disparity vectors at the positions (xi, yi) and (xj, yj) are detected.

The case of detecting the disparity vector at the position (xi, yi) will be described as an example. In this case, in the left-eye image, for example, a 4x4, 8x8, or 16x16 pixel block (disparity detection block) Bi is set with the upper left pixel at the position (xi, yi). In the right-eye image, a pixel block matched with the pixel block Bi is searched for.

In this case, in the right-eye image, a search range around the position (xi, yi) is set. Using each pixel within the search range as a sequential attention pixel, a comparison block like the above-described pixel block Bi, for example, a 4x4, 8x8, or 16x16 comparison block is sequentially set.

Between the pixel block Bi and the sequentially-set comparison blocks, the sum of absolute difference values for the respective corresponding pixels is obtained. Herein, as illustrated in Fig. 6, when the pixel value of the pixel block Bi is L(x, y) and the pixel value of the comparison block is R(x, y), the sum of absolute difference values between the pixel block Bi and the comparison blocks is expressed as $\sum | L (x, y) - R(x, y) |$.

When an n number of pixels are included in the search range set in the right-eye image, an n number of sums S1 to Sn are finally obtained and the minimum sum Smin among them is selected. The position (xi', yi') of the upper left pixel is obtained from the comparison block for which the minimum sum Smin is obtained. Accordingly, the disparity vector at the position (xi, yi) is detected as (xi' - xi, yi' - yi). Although not described in detail, for example, a 4x4, 8x8, or 16x16 pixel block Bj with the upper left pixel at the position (xj, yj) is set in the left-eye image, and the disparity vector at the position (xj, yj) is detected through the same process.

Returning to Fig. 2, the microphone 114 obtains audio data by detecting sounds corresponding to the images captured by the cameras 111L and 111R.

The data extracting unit 115 is used in the state of being detachably mounted with a data recording medium 115a. Examples of the data recording medium 115a include a disk-type recording medium and a semiconductor memory. The data recording medium 115a stores the audio data, the superimposition information data, and the disparity vector in association with the stereoscopic image data including the left-eye image data and the right-eye image data. The data extracting unit 115 extracts the stereoscopic image data, the audio data, and the disparity vector from the data recording medium 115a and outputs the same. The data extracting unit 115 constitutes the image data output unit.

Herein, the stereoscopic image data recorded in the data recording medium 115a corresponds to the stereoscopic image data obtained by the video framing unit 112. Also, the audio data recorded in the data recording medium 115a corresponds to the audio data obtained by the microphone 114. Also, the disparity vector recorded in the data recording medium 115a corresponds to the disparity vector detected by the disparity vector detecting unit 113.

The change-over switch 116 selectively extracts the stereoscopic image data obtained by the video framing unit 112 or the stereoscopic image data output from the data extracting unit 115. In this case, in a live mode, the change-over switch 116 is connected to a side a to extract the stereoscopic image data obtained by the video framing unit 112. Also, in a reproduction mode, the change-over switch 116 is connected to a side b to extract the stereoscopic image data output from the data extracting unit 115.

The change-over switch 117 selectively extracts the disparity vector detected by the disparity vector detecting unit 113 or the disparity vector output from the data extracting unit 115. In this case, in the live mode, the change-over switch 117 is connected to a side a to extract the disparity vector detected by the disparity vector detecting unit 113.

Also, in the reproduction mode, the change-over switch 117 is connected to a side b to extract the disparity vector output from the data extracting unit 115.

The change-over switch 118 selectively extracts the audio data obtained by the microphone 114 or the audio data output from the data extracting unit 115. In this case, in the live mode, the change-over switch 118 is connected to a side a to extract the audio data obtained by the microphone 114. Also, in the reproduction mode, the change-over switch 118 is connected to a side b to extract the audio data output from the data extracting unit 115.

The video encoder 119 performs encoding, such as MPEG4-AVC, MPEG2, or VC-1, on the stereoscopic image data extracted by the change-over switch 116, to generate a video data stream (video elementary stream). The audio encoder 120 performs encoding, such as AC3 or AAC, on the audio data extracted by the change-over switch 118, to generate an audio data stream (audio elementary stream).

The subtitle generating unit 121 generates subtitle data as caption data of DVB (Digital Video Broadcasting). The subtitle data is subtitle data for a two-dimensional (2D) image. The subtitle generating unit 121 constitutes a superimposition information data output unit.

The disparity information creating unit 122 performs downsizing processing on the disparity vector (horizontal-direction disparity vector) of each pixel extracted by the change-over switch 117, to generate disparity information of each layer as described below. In addition, the disparity information need not be necessarily generated by the disparity information creating unit 122, and may also be supplied separately from the outside.

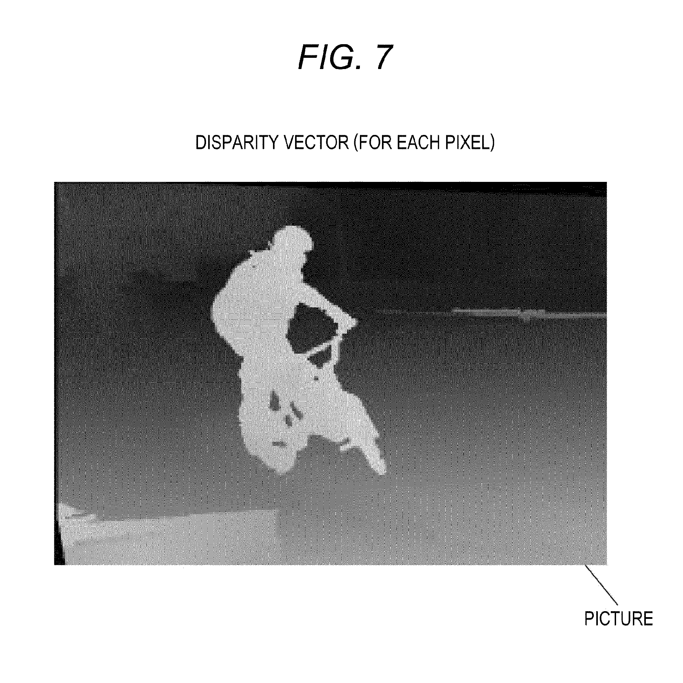

Fig. 7 illustrates an example of depth-direction relative data that is provided as a luminance value of each pixel. Herein, the depth-direction relative data can be treated as a disparity vector of each pixel through a predetermined conversion. In this example, a luminance value of a person portion is set to be high. This means that a disparity vector value of the person portion is large, and thus means that the person portion is perceived as being protrusive in the stereoscopic image display. Also, in this example, a luminance value of a background portion is set to be low. This means that a disparity vector value of the background portion is small, and thus means that the background portion is perceived as being sunken in the stereoscopic image display.

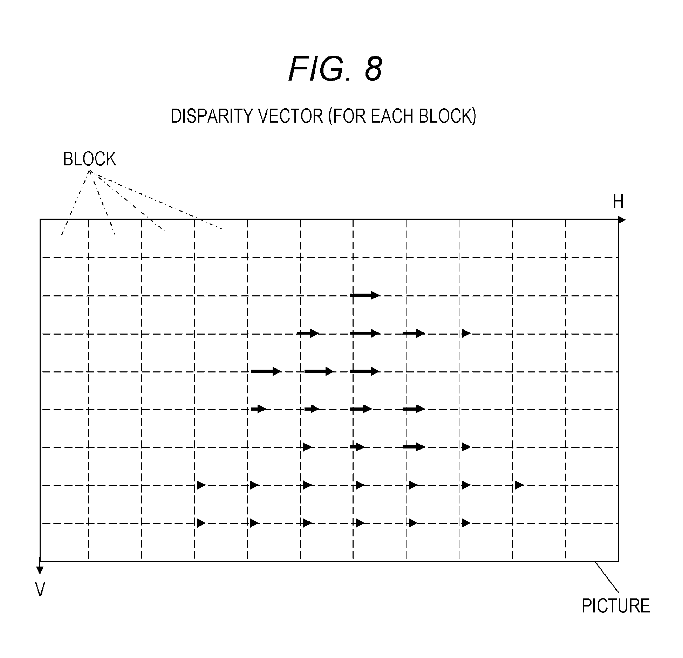

Fig. 8 illustrates an example of a disparity vector of each block. A block corresponds to the upper layer of a pixel located at the lowermost layer. The block is constructed by dividing an image (picture) region into a predetermined size in the horizontal direction and the vertical direction. The disparity vector of each block is obtained, for example, by selecting a disparity vector with the largest value from the disparity vectors of all pixels present in the block. In this example, the disparity vector of each block is represented by an arrow, and the length of the arrow corresponds to the magnitude of the disparity vector.

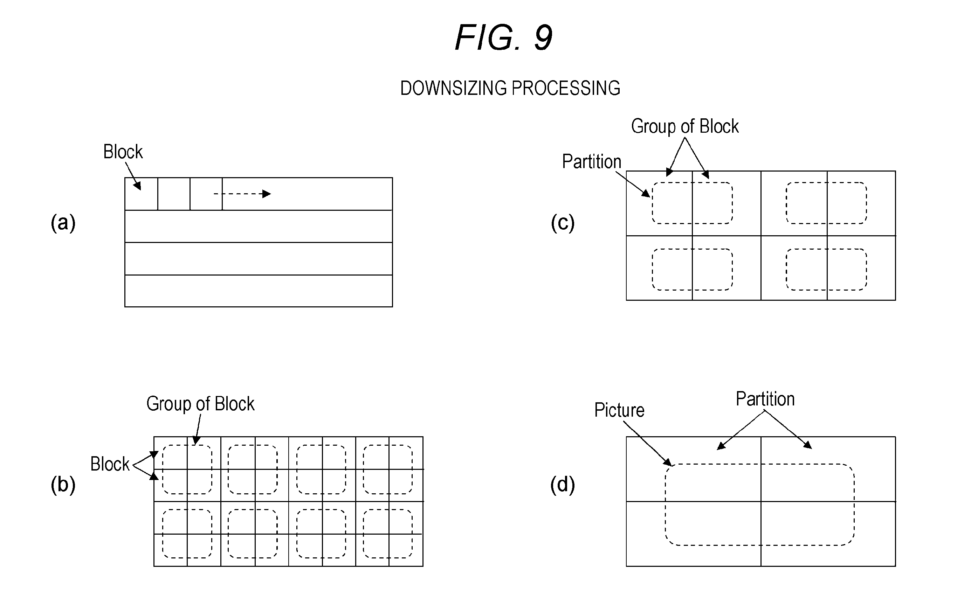

Fig. 9 illustrates an example of the downsizing processing performed by the disparity information creating unit 122. First, as illustrated in Fig. 9(a), the disparity information creating unit 122 obtains a signed disparity vector of each block by using the disparity vector of each pixel. As described above, the block corresponds to the upper layer of a pixel located at the lowermost layer, and is constructed by dividing an image (picture) region into a predetermined size in the horizontal direction and the vertical direction. The disparity vector of each block is obtained, for example, by selecting a disparity vector with the smallest value or a negative disparity vector with the largest absolute value from the disparity vectors of all pixels present in the block.

Next, as illustrated in Fig. 9(b), the disparity information creating unit 122 obtains a disparity vector of each group (Group Of Block) by using the disparity vector of each block. The group corresponds to the upper layer of the block, and is obtained by grouping a plurality of adjacent blocks together. In the example of Fig. 9(b), each group includes four blocks bound by a broken-line box. The disparity vector of each group is obtained, for example, by selecting a disparity vector with the smallest value or a negative disparity vector with the largest absolute value from the disparity vectors of all blocks in the group.

Next, as illustrated in Fig. 9(c), the disparity information creating unit 122 obtains a disparity vector of each partition by using the disparity vector of each group. The partition corresponds to the upper layer of the group, and is obtained by grouping a plurality of adjacent groups together. In the example of Fig. 9(c), each partition includes two groups bound by a broken-line box. The disparity vector of each partition is obtained, for example, by selecting a disparity vector with the smallest value or a negative disparity vector with the largest absolute value from the disparity vectors of all groups in the partition.

Next, as illustrated in Fig. 9(d), the disparity information creating unit 122 obtains a disparity vector of the entire picture (entire image) located at the uppermost layer by using the disparity vector of each partition. In the example of Fig. 9(d), the entire picture includes four partitions bound by a broken-line box. The disparity vector of the entire picture is obtained, for example, by selecting a disparity vector with the smallest value or a negative disparity vector with the largest absolute value from the disparity vectors of all partitions included in the entire picture.

In this way, the disparity information creating unit 122 can obtain the disparity vector of each region of each layer such as the block, the group, the partition, and the entire picture by performing the downsizing processing on the disparity vector of each pixel located at the lowermost layer. Also, in the example of the downsizing processing illustrated in Fig. 9, in addition to the layer of the pixel, the disparity vectors of four layers of the block, the group, the partition, and the entire picture are finally obtained. However, the number of layers, the method of dividing the region of each layer, and the number of regions are not limited thereto.

Returning to Fig. 2, the subtitle processing unit 123 can define a subregion in a region based on the subtitle data generated by the subtitle generating unit 121. Also, the subtitle processing unit 123 sets disparity information for shifting the display position of the superimposition information in the left-eye image and the right-eye image based on the disparity information created by the disparity information creating unit 122. The disparity information can be set for each subregion, region or page.

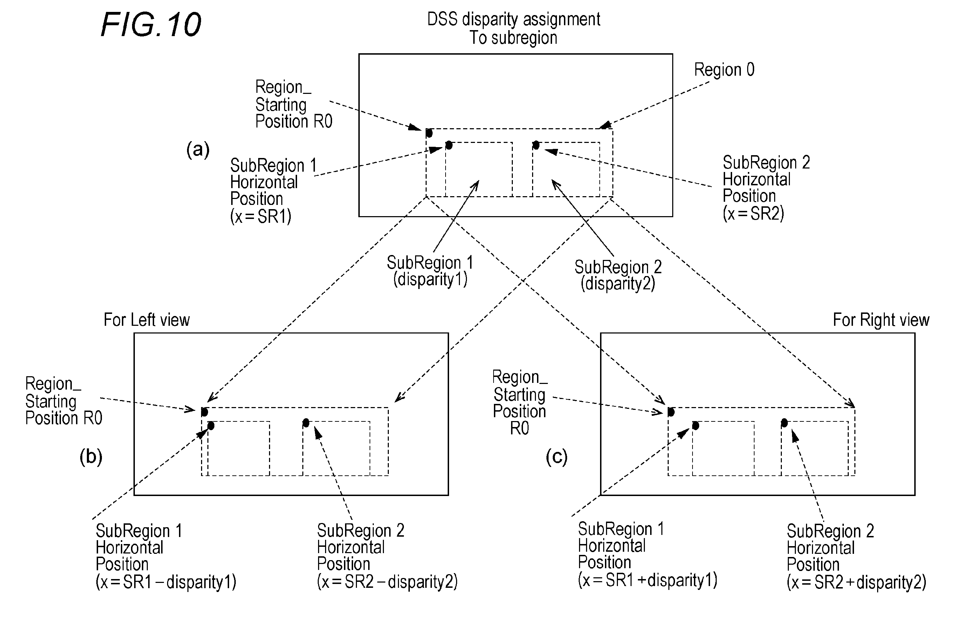

Fig. 10(a) illustrates an example of a region defined on an image in the subtitle data and a subregion defined in the region. In this example, two subregions of SubRegion 1 and SubRegion 2 are defined in Region 0 with Region_Starting Position of R0. The horizontal position x of the SubRegion 1 is SR1, and the horizontal position x of the SubRegion 2 is SR2. In this example, disparity information Disparity 1 is set for subregion SubRegion 1, and disparity information Disparity 2 is set for subregion SubRegion 2.

Fig. 10(b) illustrates an example of the shift adjustment in the subregion in the left-eye image (left view) by the disparity information. Disparity information Disparity 1 is set for a subregion SubRegion 1. Therefore, as for the subregion SubRegion 1, a shift adjustment is performed such that the horizontal position x is SR1 - disparity 1. Also, disparity information Disparity 2 is set for a subregion SubRegion 2. Therefore, as for the subregion SubRegion 2, a shift adjustment is performed such that the horizontal position x is SR2 - disparity 2.

Fig. 10(c) illustrates an example of the shift adjustment in the subregion in the right-eye image (right view) by the disparity information. Disparity information Disparity 1 is set for a subregion SubRegion 1. Therefore, as for the subregion SubRegion 1, a shift adjustment is performed such that the horizontal position x is SR1 + disparity 1 as opposed to the above-described left-eye image. Also, disparity information Disparity 2 is set for a subregion SubRegion 2. Therefore, as for the subregion SubRegion 2, a shift adjustment is performed such that the horizontal position x is SR2 + disparity 2 as opposed to the above-described left-eye image.

The subtitle processing unit 123 outputs display control information such as the disparity information and the region information of the above-described subregion, together with the subtitle data generated by the subtitle generating unit 121. Also, the disparity information may also be set in units of a region or a page, in addition to being set in units of a subregion as described above.

The subtitle data includes segments such as DDS, PCS, RCS, CDS, ODS, and EDS. The DDS (display definition segment) specifies a display size for an HDTV. The PCS (page composition segment) specifies a region position in a page. The RCS (region composition segment) specifies a size of a region or an encoding mode of an object, and also specifies a starting position of the object.

The CDS (CLUT definition segment) specifies a CLUT content. The ODS (object data segment) includes encoded pixel data Pixeldata. The EDS (end of display set segment) indicates the end of the subtitle data starting from the segment of DDS. In this embodiment, the segment of DSS (Display Signaling Segment) is further defined. The above-described display control information is inserted into the segment of DSS.

Returning to Fig. 2, the subtitle encoder 125 generates first and second private data streams (first and second subtitle data streams) as the following First Type and Second Type.

By First Type, the first private data stream (2D stream) including the segments of DDS, PCS, RCS, CDS, ODS, and EDS is generated. Also, by First Type, the second private data stream (3D extension stream) including the segments of DDS, DSS, and EDS is generated. By Second Type, the first private data stream (2D stream) including the segments of DDS, PCS, RCS, CDS, ODS, and EDS is generated. Also, by Second Type, the second private data stream (3D stream) including the segments of DDS, PCS, RCS, DSS, CDS, ODS, and EDS is generated.

The multiplexer 126 multiplexes the PES packets of the respective data streams from the video encoder 119, the audio encoder 120, and the subtitle encoder 125 to obtain a transport stream TS as a multiplexed data stream. That is, the transport stream TS includes a video data stream, an audio data stream, and first and second private data streams as PES streams.

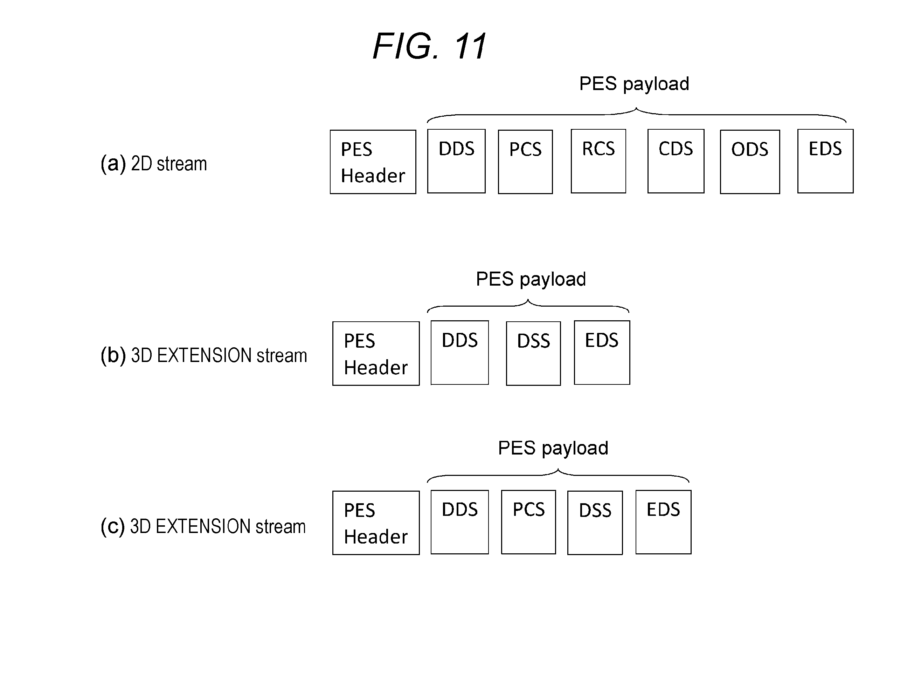

Fig. 11 illustrates a configuration of the first private data stream (2D stream) and the second private data stream (3D extension stream) that are included in the transport stream TS in First Type. Fig. 11(a) illustrates the 2D stream, in which a PES header is disposed at the beginning, followed by a PES payload including the respective segments of DDS, PCS, RCS, CDS, ODS, and EDS.

Also, Fig. 11(b) illustrates the 3D extension stream, in which a PES header is disposed at the beginning, followed by a PES payload including the respective segments of DDS, DSS, and EDS. Also, as illustrated in Fig. 11(c), the 3D extension stream may be configured to include the respective segments of DDS, PCS, DSS, and EDS in the PES payload. In this case, PAGE STATE of PCS is NORMAL CASE, which indicates that there is no change in superimposition data (bitmap).

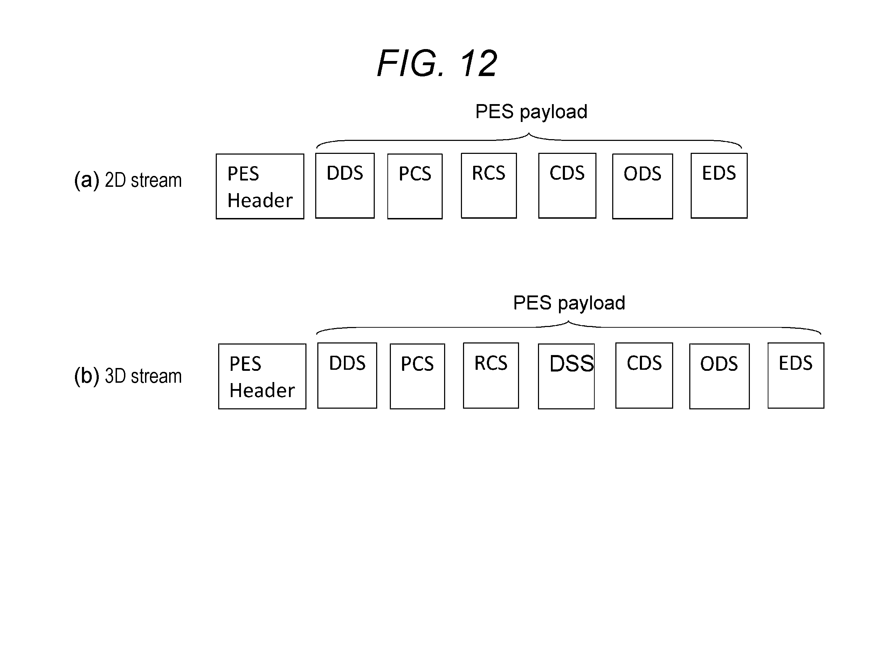

Fig. 12 illustrates a configuration of the first private data stream (2D stream) and the second private data stream (3D extension stream) that are included in the transport stream TS in Second Type. Fig. 12(a) illustrates the 2D stream, in which a PES header is disposed at the beginning, followed by a PES payload including the respective segments of DDS, PCS, RCS, CDS, ODS, and EDS. Also, Fig. 12(b) illustrates the 3D stream, in which a PES header is disposed at the beginning, followed by a PES payload including the respective segments of DDS, PCS, RCS, DSS, CDS, ODS, and EDS.

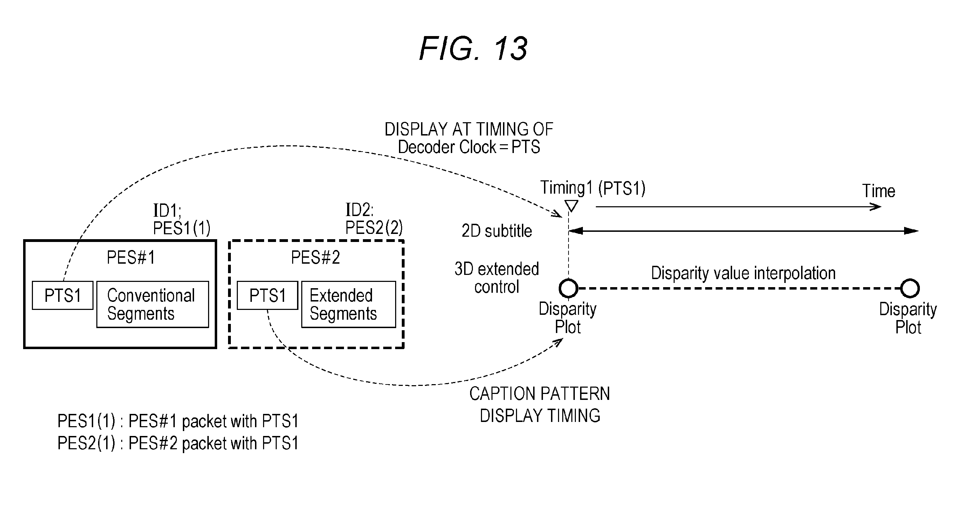

In First Type, the multiplexer 126 includes synchronization information for synchronization between the display of the superimposition information data by the receiving side and the shift control by the disparity information in the 2D stream and the 3D extension stream. Specifically, as illustrated in Fig. 13, the multiplexer 126 is set such that a value of a time stamp PTS (Presentation Time Stamp) inserted into the PES header of the 2D stream PES1(1): PES#1 is associated with a value of a time stamp PTS inserted into the PES header of the 3D extension stream PES2(2): PES#2.

Fig. 13 illustrates an example in which the values of the time stamps PTS (Presentation Time Stamp) of the 2D stream and the 3D extension stream are set to the same value, that is, PTS1. In this case, in the receiving side (decoding side), the display of a caption pattern by the subtitle data (superimposition information data) is started from PTS1, and the shift control by the disparity information for displaying a caption pattern in 3D is also started from PTS1.

Also, in the example of Fig. 13, it is illustrated that the 3D extension stream includes two pieces of disparity information that are disparity information of a PTS1 frame and disparity information of a predetermined subsequent frame. In the receiving side (decoding side), it is indicated that the disparity information of an arbitrary frame between the two frames can be obtained by interpolation processing, and the shift control can be dynamically performed.

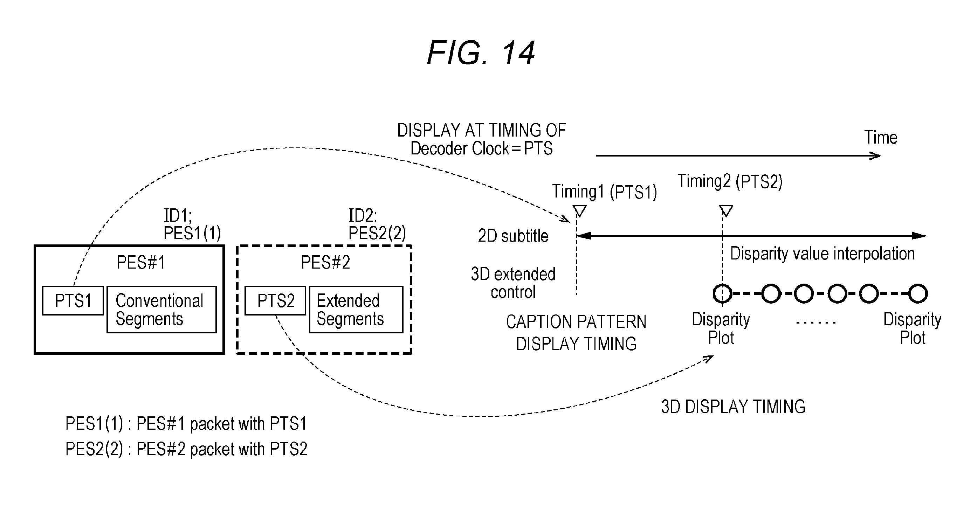

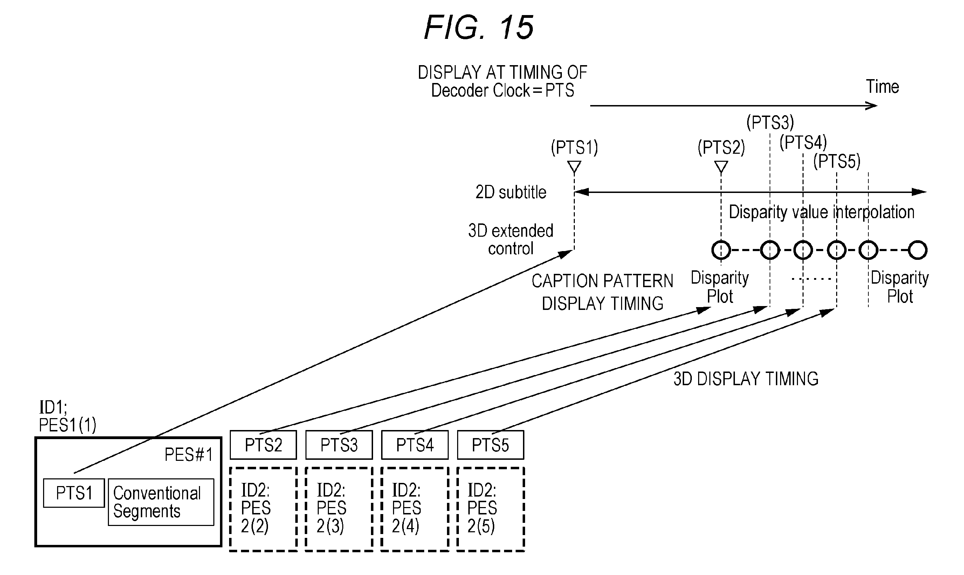

Also, in Fig. 13, "Conventional Segments" included in the 2D stream represent the respective segments of DDS, PCS, RCS, CDS, ODS, and EDS. Also, "Extended Segments" included in the 3D extension stream represent the respective segments of DDS, DSS, and EDS or the respective streams of DDS, PCS, DSS, and EDS. Also, in Fig. 13, "Elementary_PID" of the 2D stream is ID1, and "Elementary_PID" of the 3D extension stream is ID2. The same applies in Figs. 14 and 15 described below.

Fig. 14 illustrates an example in which the values of the time stamps PTS of the 2D stream and the 3D extension stream are set to different values. That is, in the example of Fig. 13, the value of the time stamp PTS of the 2D stream is set to PTS1, and the value of the time stamp PTS of the 3D extension stream is set to PTS2 following PTS1. In this case, in the receiving side (decoding side), the display of a caption pattern by the subtitle data (superimposition information data) is started from PTS1, and the shift control by the disparity information for displaying a caption pattern in 3D is started from PTS2.

Also, in the example of Fig. 14, it is illustrated that the 3D extension stream includes disparity information of a PTS2 frame and disparity information of a plurality of subsequent frames. In the receiving side (decoding side), it is indicated that the disparity information of an arbitrary frame between the plurality of frames can be obtained by interpolation processing, and the shift control can be dynamically performed.

Like Fig. 14, Fig. 15 illustrates an example in which the values of the time stamps PTS of the 2D stream and the 3D extension stream are set to different values. In addition, Fig. 15 illustrates an example in which there is a plurality of 3D extension streams with different time stamp (PTS) values. That is, in the example of Fig. 15, the value of the time stamp PTS of the 2D stream is set to PTS1. Also, the values of the time stamps PTS of a plurality of 3D extension frames are set to PTS2, PTS3, PTS4, ... following PTS1.

In this case, in the receiving side (decoding side), the display of a caption pattern by the subtitle data (superimposition information data) is started from PTS1. Also, the shift control by the disparity information for displaying a caption pattern in 3D is started from PTS2, and then sequential update is performed. Also, in the example of Fig. 15, the plurality of 3D extension streams includes only the disparity information represented by the respective time stamps. In the receiving side (decoding side), it is indicated that the disparity information of an arbitrary frame between the plurality of frames can be obtained by interpolation processing, and the shift control can be dynamically performed.

Also, as described above, the multiplexer 126 multiplexes the PES packets of the respective data streams to obtain a transport stream TS as a multiplexed data stream. Herein, the multiplexer 126 multiplexes the PES packet of the above-described 2D stream such that the PES packet arrives at a decoder buffer of the receiving side a predetermined period before the timing of the PTS (display time stamp) included in the PES packet.

Likewise, the multiplexer 126 multiplexes the PES packet of the above-described 3D extension stream or the 3D stream such that the PES packet arrives at a decoder buffer of the receiving side a predetermined period before the timing of the PTS included in the PES packet. Herein, the arrival of the PES packet means the arrival of the end portion of a PES payload. The same applies in the following.

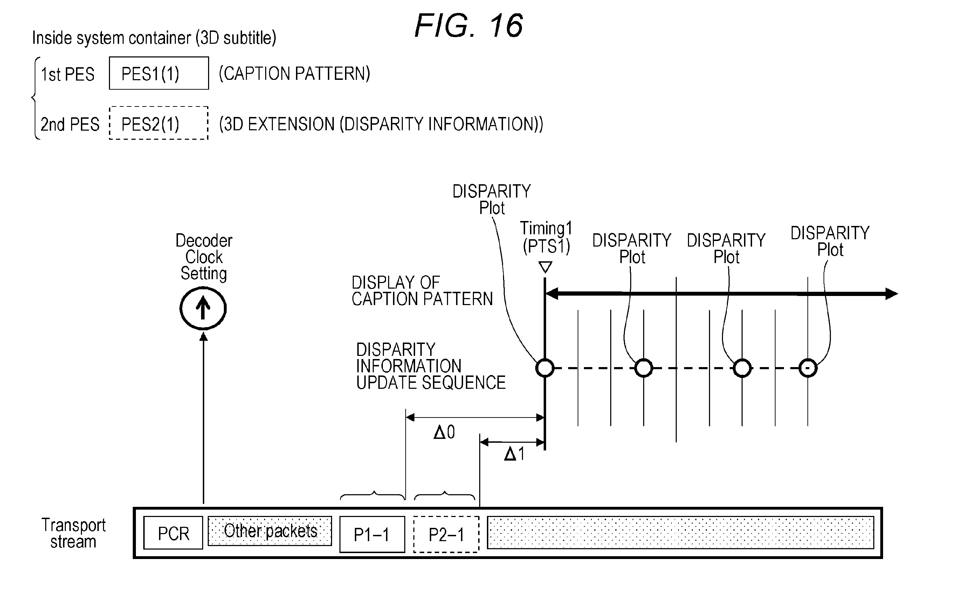

Fig. 16 illustrates an example of multiplexing the PES packets of the 2D stream and the 3D extension stream in the transport stream TS in the case of First Type. This example assumes the above-described reproduction mode in which the transmission content is the recording content such as movie, and illustrates the case where the encoding or multiplexing of the disparity information is performed off-line.

In Fig. 16, PES1(1) as "1st PES" is a PES packet of the 2D stream (see Fig. 11(a)), and is represented as P1-1 in the transport stream TS. Also, PES2(1) as "2nd PES" is a PES packet of the 3D extension stream (see Fig. 11(b)), and is represented as P2-1 in the transport stream TS.

A PCR (Program Clock Reference) is embedded in the transport stream TS. By the PCR, the decoder clock of the receiving side is synchronized with the encoder clock. The display timing of the PES packet P1-1 of the 2D stream in PTS is PTS1, and the display of a caption pattern is started from this timing in the receiving side. Also, the display timing of the PES packet P2-1 of the 3D extension stream in PTS is PTS1, and the shift control by the disparity information for displaying a caption pattern in 3D is also started from PTS1 in the receiving side.

The PES packet P2-1 of the 3D extension stream includes disparity information of four frame positions (disparity plot positions), as well as the PTS1 frame. The receiving side obtains the disparity information of an arbitrary frame interval between the respective disparity plot positions, for example, a 1-frame interval, by interpolation processing. Also, in the following description, for simplicity of description, the receiving side is described as obtaining the disparity information of a 1-frame interval.

It is assumed that the receiving side performs the decoding of the PES packet P1-1 of the 2D stream and the display preparation in a period $\Delta 0$. Therefore, the multiplexer 126 multiplexes the PES packet P1-1 into a transport stream TS such that the PES packet arrives at the decoder buffer of the receiving side at least the period $\Delta 0$ before the timing 1 (PTS1).

Also, it is assumed that the receiving side performs the decoding of the PES packet P2-1 of the 3D extension stream and the interpolation processing of the disparity information of each frame between the respective disparity plot positions in a period $\Delta 1$. Therefore, the multiplexer 126 multiplexes the PES packet P2-1 into a transport stream TS such that the PES packet arrives at the decoder buffer of the receiving side at least the period $\Delta 1$ before the timing 1 (PTS1).

In the receiving side, the PES packet P2-1 of the 3D extension stream is decoded to acquire the disparity information of four disparity plot positions, and the disparity information of each frame between the respective disparity plot positions is obtained by interpolation processing. In the receiving side, in the display period of a caption pattern, the caption pattern is shifted in each frame based on the disparity information acquired as described above such that the caption is superimposed on the left-eye image and the right-eye image. In this case, the caption patterns superimposed on the left-eye image and the right-eye image are provided with a disparity by being shifted in the opposite directions based on the disparity information. Accordingly, in the receiving side, the 3D display of the caption pattern is well performed on a 3D image of recording content such as movie.

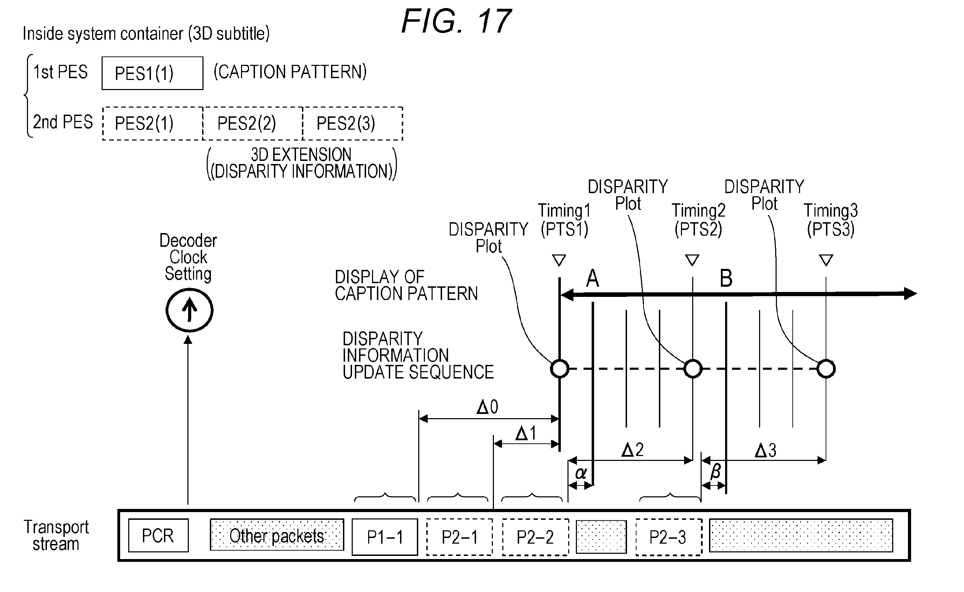

Fig. 17 illustrates an example of multiplexing the PES packets of the 2D stream and the 3D extension stream in the transport stream TS in the case of First Type. This example assumes the above-described live mode in which the transmission content is live content such as a sport or a concert, and illustrates the case where the encoding and multiplexing of the disparity information are performed in real time.

In Fig. 17, PES1(1) as "1st PES" is a PES packet of the 2D stream (see Fig. 11(a)), and is represented as P1-1 in the transport stream TS. Also, PES2(1), PES2(2), and PES2(3) as "2nd PES" are respectively PES packets of the 3D extension stream (see Fig. 11(b)), and are respectively represented as P2-1, P2-2, and P2-3 in the transport stream TS.

A PCR (Program Clock Reference) is embedded in the transport stream TS. By the PCR, the decoder clock of the receiving side is synchronized with the encoder clock. The display timing of the PES packet P1-1 of the 2D stream in PTS is PTS1, and the display of a caption pattern is started from this timing in the receiving side. Also, the display timing of the PES packet P2-1 of the 3D extension stream in PTS is PTS1, and the shift control by the disparity information for displaying a caption pattern in 3D is also started from PTS1 in the receiving side.

The PES packet P2-1 of the 3D extension stream includes disparity information of the position of a PTS2 frame (disparity plot position). Also, the PES packet P2-2 of the 3D extension stream includes disparity information of the position of a PTS2 frame (disparity plot position) displayed in the PTS. In addition, the PES packet P2-3 of the 3D extension stream includes disparity information of the position of a PTS3 frame (disparity plot position) displayed in the PTS. The receiving side obtains the disparity information of each frame between the respective disparity plot positions by interpolation processing.

It is assumed that the receiving side performs the decoding of the PES packet P1-1 of the 2D stream and the display preparation in a period $\Delta 0$. Therefore, the multiplexer 126 multiplexes the PES packet P1-1 such that the PES packet arrives at the decoder buffer of the receiving side at least the period $\Delta 0$ before the timing 1 (PTS1).

Also, it is assumed that the receiving side performs the decoding of the PES packet P2-1 of the 3D extension stream in a period $\Delta 1$. Therefore, the multiplexer 126 multiplexes the PES packet P2-1 such that the PES packet arrives at the decoder buffer of the receiving side at least the period $\Delta 1$ before the timing 1 (PTS1).

Also, the receiving side needs to perform the decoding of the 3D extension stream P2-2 including the disparity information of the timing 2 (PTS2) before the next interpolation frame (timing A) of the timing 1 (PTS1). This is because not only the disparity information of the timing 1 (PTS1) but also the disparity information of the timing 2 (PTS2) is necessary to generate the disparity information of the timing A by interpolation processing in the receiving side.

It is assumed that the receiving side performs the decoding of the PES packet P2-2 of the 3D extension stream and the interpolation processing of the disparity information of each frame between the timing 1 (PTS1) and the timing 2 (PTS2) in a period $\alpha$. Therefore, the multiplexer 126 multiplexes the PES packet P2-2 such that the PES packet arrives at the decoder buffer of the receiving side at least the period $\alpha$ before the timing A, that is, the period $\Delta 2$ before the timing 2 (PTS2).

The same applies to the PES packet P2-3 of the 3D extension stream including the disparity information of the timing 3 (PTS3). That is, the multiplexer 126 multiplexes the PES packet P2-3 such that the PES packet arrives at the decoder buffer of the receiving side at least the period β before the timing B, that is, the period Δ3 before the timing 3 (PTS3). Herein, the timing B is the next interpolation frame of the timing 2 (PTS2).

In the receiving side, PES packets P2-1, P2-2 and P2-3 of the 3D extension stream are sequentially decoded, and the disparity information of three disparity plot positions are sequentially acquired. Whenever the disparity information of the next disparity plot position is acquired, the disparity information of each frame between two disparity plot positions is acquired by interpolation processing with respect to the previously-acquired disparity information.

In the receiving side, in the display period of a caption pattern, the caption pattern is shifted in each frame based on the disparity information acquired as described above such that the caption is superimposed on the left-eye image and the right-eye image. In this case, the caption patterns superimposed on the left-eye image and the right-eye image are provided with a disparity by being shifted in the opposite directions based on the disparity information. Accordingly, in the receiving side, the 3D display of the caption pattern is well performed on a 3D image of live content such as a sport or a concert.

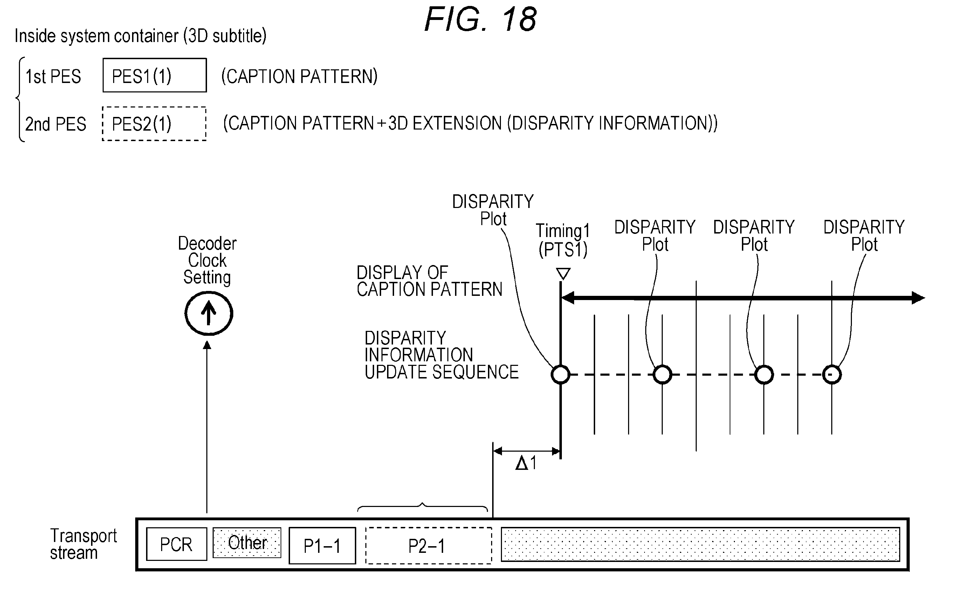

Fig. 18 illustrates an example of multiplexing the PES packets of the 2D stream and the 3D stream in the transport stream TS in the case of Second Type. This example assumes the above-described reproduction mode in which the transmission content is the recording content such as movie, and illustrates the case where the encoding or multiplexing of the disparity information is performed off-line.

In Fig. 18, PES1(1) as "1st PES" is a PES packet of the 2D stream (see Fig. 12(a)), and is represented as P1-1 in the transport stream TS. Also, PES2(1) as "2nd PES" is a PES packet of the 3D stream (see Fig. 12(b)), and is represented as P2-1 in the transport stream TS.

A PCR (Program Clock Reference) is embedded in the transport stream TS. By the PCR, the decoder clock of the receiving side is synchronized with the encoder clock. The display timing of the PES packet P2-1 of the 3D stream in PTS is PTS1, and the display of a caption pattern and the shift control by the disparity information for displaying the caption pattern in 3D are started from this timing in the receiving side.

The PES packet P2-1 of the 3D stream includes disparity information of four frame positions (disparity plot positions), as well as the PTS1 frame. The receiving side obtains the disparity information of each frame between the respective disparity plot positions by interpolation processing.

It is assumed that the receiving side performs the decoding of the PES packet P2-1 of the 3D stream, the preparation of display, and the interpolation processing of the disparity information of each frame between the respective disparity plot positions in a period Δ1. Therefore, the multiplexer 126 multiplexes the PES packet P2-1 such that the PES packet arrives at the decoder buffer of the receiving side at least the period Δ1 before the timing 1 (PTS1).

In the receiving side, the PES packet P2-1 of the 3D extension stream is decoded to acquire the disparity information of four disparity plot positions, and the disparity information of each frame between the respective disparity plot positions is obtained by the interpolation processing. In the receiving side, in the display period of a caption pattern, the caption pattern is shifted in each frame based on the disparity information acquired as described above such that the caption is superimposed on the left-eye image and the right-eye image. In this case, the caption patterns superimposed on the left-eye image and the right-eye image are provided with a disparity by being shifted in the opposite directions based on the disparity information. Accordingly, in the receiving side, the 3D display of the caption pattern is well performed on a 3D image of recording content such as movie.

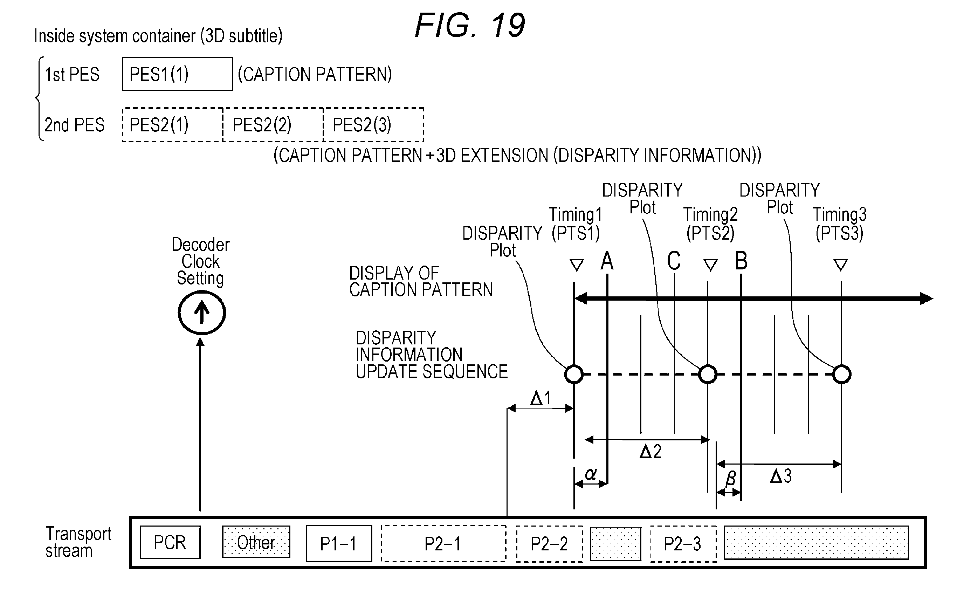

Fig. 19 illustrates an example of multiplexing the PES packets of the 2D stream and the 3D stream in the transport stream TS in the case of Second Type. This example assumes the above-described live mode in which the transmission content is live content such as a sport or a concert, and illustrates the case where the encoder and multiplexing of the disparity information are performed in real time.

In Fig. 19, PES1(1) as "1st PES" is a PES packet of the 2D stream (see Fig. 12(a)), and is represented as P1-1 in the transport stream TS. Also, PES2(1), PES2(2), and PES2(3) as "2nd PES" are respectively PES packets of the 3D stream (see Fig. 12(b)), and are respectively represented as P2-1, P2-2, and P2-3 in the transport stream TS. Also, when there is no change in the caption pattern, PES2(2) and PES2(3) may be 3D extension streams (see Fig. 11(b)).

A PCR (Program Clock Reference) is embedded in the transport stream TS. By the PCR, the decoder clock of the receiving side is synchronized with the encoder clock. The display timing of the PES packet P2-1 of the 3D stream in PTS is PTS1, and the display of a caption pattern and the shift control by the disparity information for displaying the caption pattern in 3D are started from this timing in the receiving side.

The PES packet P2-1 of the 3D stream includes disparity information of the position of a PTS1 frame (disparity plot position). Also, the PES packet P2-2 of the 3D stream or the 3D extension stream includes disparity information of the position of a PTS2 frame (disparity plot position) displayed in the PTS. In addition, the PES packet P2-3 of the 3D stream or the 3D extension stream includes disparity information of the position of a PTS3 frame (disparity plot position) displayed in the PTS. The receiving side obtains the disparity information of each frame between the respective disparity plot positions by interpolation processing.

It is assumed that the receiving side performs the decoding of the PES packet P2-1 of the 3D stream, the preparation of display, and the interpolation processing of the disparity information of each frame between the respective disparity plot positions in a period Δ1. Therefore, the multiplexer 126 multiplexes the PES packet P2-1 such that the PES packet arrives at the decoder buffer of the receiving side at least the period Δ1 before the timing 1 (PTS1).

Also, the receiving side needs to perform the decoding of the PES packet P2-2 of the 3D stream or the 3D extension stream including the disparity information of the timing 2 (PTS2) before the next interpolation frame (timing A) of the timing 1 (PTS1). This is because not only the disparity information of the timing 1 (PTS1) but also the disparity information of the timing 2 (PTS2) is necessary to generate the disparity information of the timing A by interpolation processing in the receiving side.

It is assumed that the receiving side performs the decoding of the PES packet P2-2 of the 3D extension stream and the interpolation processing of the disparity information of each frame between the timing 1 (PTS1) and the timing 2 (PTS2) in a period α. Therefore, the multiplexer 126 multiplexes the PES packet P2-2 such that the PES packet arrives at the decoder buffer of the receiving side at least the period α before the timing A, that is, the period Δ2 before the timing 2 (PTS2).

The same applies to the PES packet P2-3 of the 3D extension stream including the disparity information of the timing 3 (PTS3). That is, the multiplexer 126 multiplexes the PES packet P2-3 such that the PES packet arrives at the decoder buffer of the receiving side at least the period β before the timing B, that is, the period Δ3 before the timing 3 (PTS3). Herein, the timing B is the next frame of the timing 2 (PTS2).

In the receiving side, the PES packet P2-1 of the 3D stream and the PES packets P2-2 and P2-3 of the 3D stream or the 3D extension stream are sequentially decoded, and the disparity information of three disparity plot positions are sequentially acquired. Whenever the disparity information of the next disparity plot position is acquired, the disparity information of each frame between two disparity plot positions is acquired by interpolation processing with respect to the previously-acquired disparity information.

In the receiving side, in the display period of a caption pattern, the caption pattern is shifted in each frame based on the disparity information acquired as described above such that the caption is superimposed on the left-eye image and the right-eye image. In this case, the caption patterns superimposed on the left-eye image and the right-eye image are provided with a disparity by being shifted in the opposite directions based on the disparity information. Accordingly, in the receiving side, the 3D display of the caption pattern is well performed on a 3D image of live content such as a sport or a concert.

Also, in the above examples illustrated in Figs. 17 and 19, the PES packet of the 3D extension stream (see Fig. 11(b)) or the 3D stream (see Fig. 12(b)) includes one piece of disparity information. That is, the PES packet includes a DSS including the disparity information of only one disparity plot position (hereinafter, referred to as SD-DSS (Single Disparity DSS)).

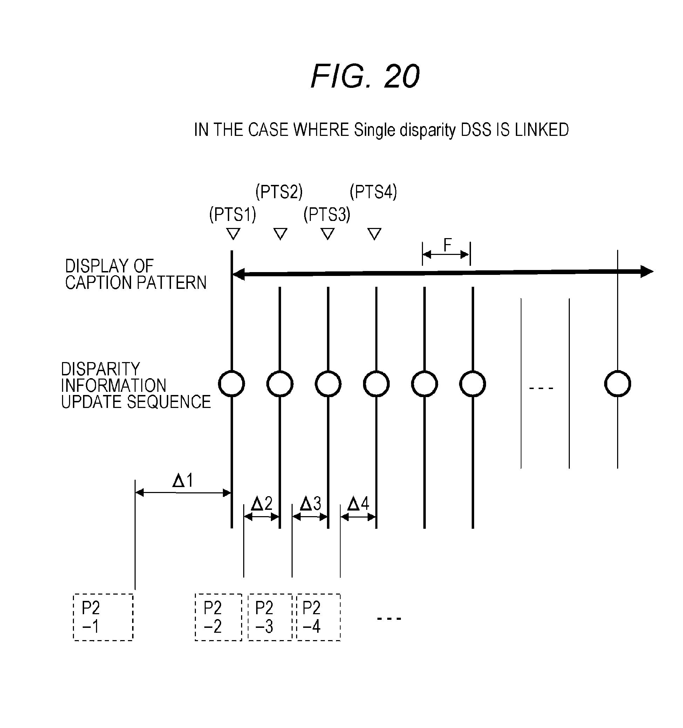

Fig. 20 illustrates an example of the case where the PES packet having the above-described SD-DSS is transmitted in each frame in order to update the disparity information, that is, an example of the case where the SD-DSS is linked. As described above, in consideration of the period required for decoding in the receiving side or the like, the multiplexer 126 multiplexes the PES packet P2-1 in a transport stream TS such that the PES packet arrives at the decoder buffer of the receiving side at least the period Δ1 before PTS1. Likewise, the multiplexer 126 multiplexes the PES packets P2-2, P2-3, ... in a transport stream TS such that the PES packets arrive at the decoder buffer of the receiving side the periods Δ2, Δ3, ... before PTS2, PTS3, ... respectively.

In this manner, when the SD-DSS is linked, the decoder of the receiving side needs to perform decoding by reading the PES packet from the decoding buffer in each frame, thus increasing the read load. Thus, it may be considered that the PES packet is set to have a DSS having the disparity information of a plurality of disparity plot positions (hereinafter, referred to as MD-DSS (Multiple Disparity DSS)) so that the occurrence rate of the PES packet is reduced to reduce the read load of the decoder of the receiving side.

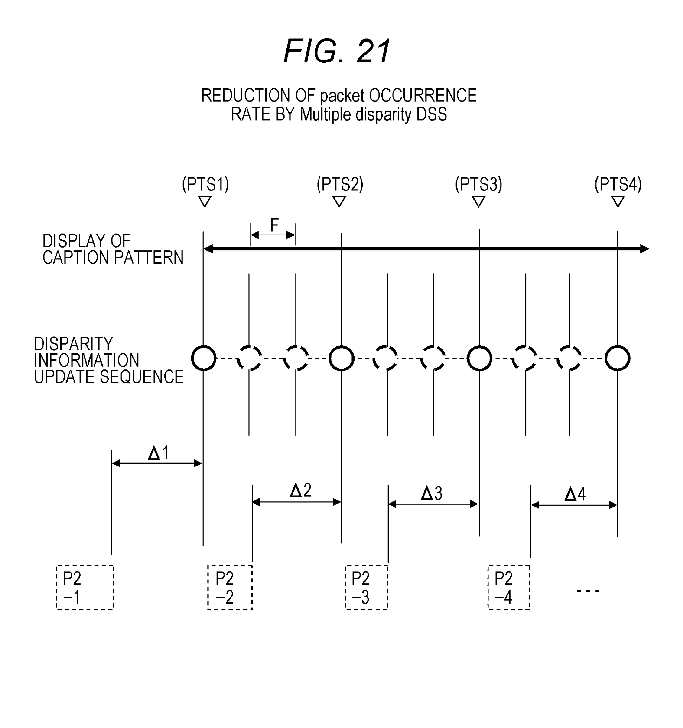

Fig. 21 illustrates an example of the case where the PES packet having the above-described MD-DSS is transmitted to reduce the occurrence rate of the PES packet in order to update the disparity information. The PES packet P2-1 having a PTS timing of PTS1 has an MD-DSS including the disparity information of a total of three frames that are the disparity information of a PTS1 frame (represented in a solid-line ○) and the disparity information of two subsequent frames (represented in a broken-line ○). In consideration of the period required for decoding in the receiving side or the like, the multiplexer 126 multiplexes the PES packet P2-1 in a transport stream TS such that the PES packet arrives at the decoder buffer of the receiving side at least the period Δ1 before PTS1.

Likewise, the PES packets P2-2, P2-3, ... having PTS timings of PTS2, PTS3, ... respectively have an MD-DSS including the disparity information of a total of three frames that are the disparity information of frames of PTS2, PTS3, ... (represented in a solid-line ○) and the disparity information of two subsequent frames (represented in a broken-line ○). The multiplexer 126 multiplexes the PES packets P2-2, P2-3, ... in a transport stream TS such that the PES packets arrive at the decoder buffer of the receiving side at least the periods Δ2, Δ3, ... before PTS2, PTS3, ... respectively.

Also, in the example of Fig. 21, the PES packets P2-1, P2-2, P2-3, ... respective have an MD-DSS including the disparity information of three consecutive frames. However, the PES packets may have an MD-DSS including a plurality of pieces of disparity information for each predetermined number of frames within the range in which a delay in the real-time system is allowed. In this case, when the MD-DSS includes a plurality of pieces of disparity information for each plurality of frames, the disparity information of the respective frames can be obtained by the interpolation processing in the receiving side.

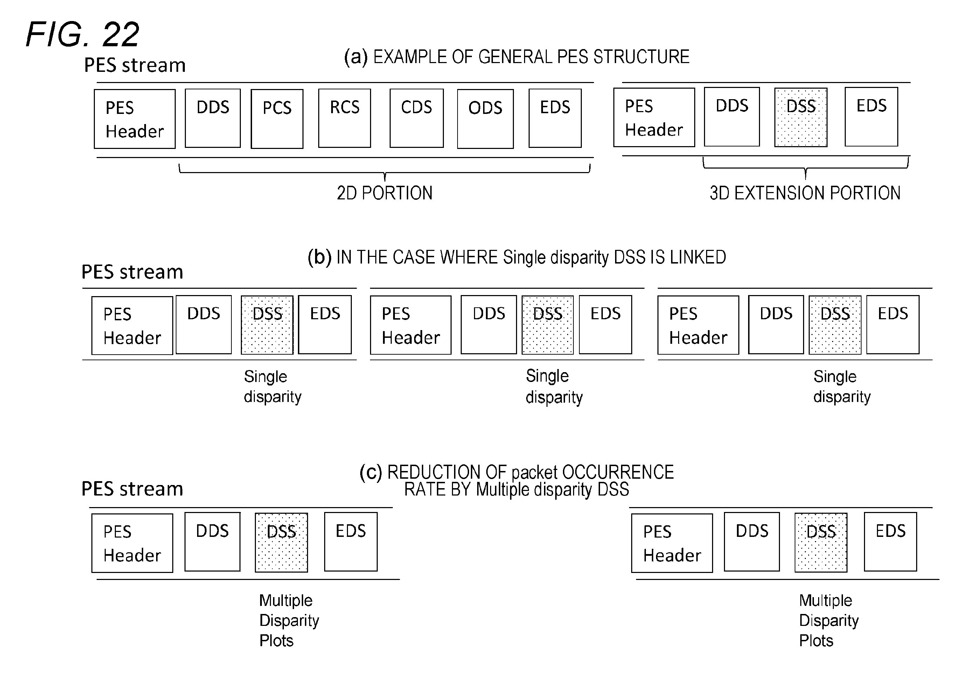

Fig. 22(a) illustrates an example of the structure of a PES packet of the 2D stream and the 3D extension stream multiplexed into a transport stream TS in First Type. Fig. 22(b) illustrates the case where the SD-DSS is linked, and illustrates that the occurrence rate of the PES packet of the 3D extension stream multiplexed into a transport stream TS is high. Fig. 22(c) illustrates that the occurrence rate of the PES packet of the 3D extension stream multiplexed into a transport stream TS is reduced by using the PES packet having the MD-DSS.

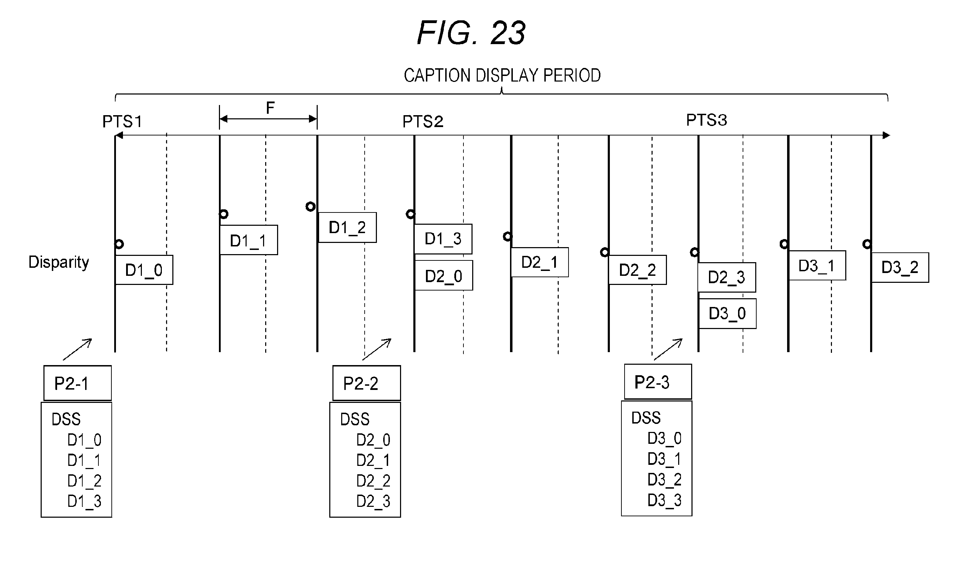

Fig. 23 illustrates a specific example of the case where a PES packet having an MD-DSS is multiplexed into a transport stream TS. The PES packet P2-1 having a PTS timing of PTS1 has an MD-DSS including disparity information D1_0, D1_1, D1_2 and D1_3 3 of a PTS1 frame and three subsequent frames.

Also, the PES packet P2-2 having a PTS timing of PTS2 has an MD-DSS including disparity information D2_0, D2_1, D2_2 and D2_3 of a PTS2 frame and three subsequent frames. In this case, the disparity information D1_3 3 of the last frame of the MD-DSS included in the PES packet P2-1 overlaps with the disparity information D2-0 of the initial frame of the MD-DSS included in the PES packet P2-2. Although not described in detail, the PES packet P2-3 having a PTS timing of PTS3 is the same as the above-described PES packet P2-2.

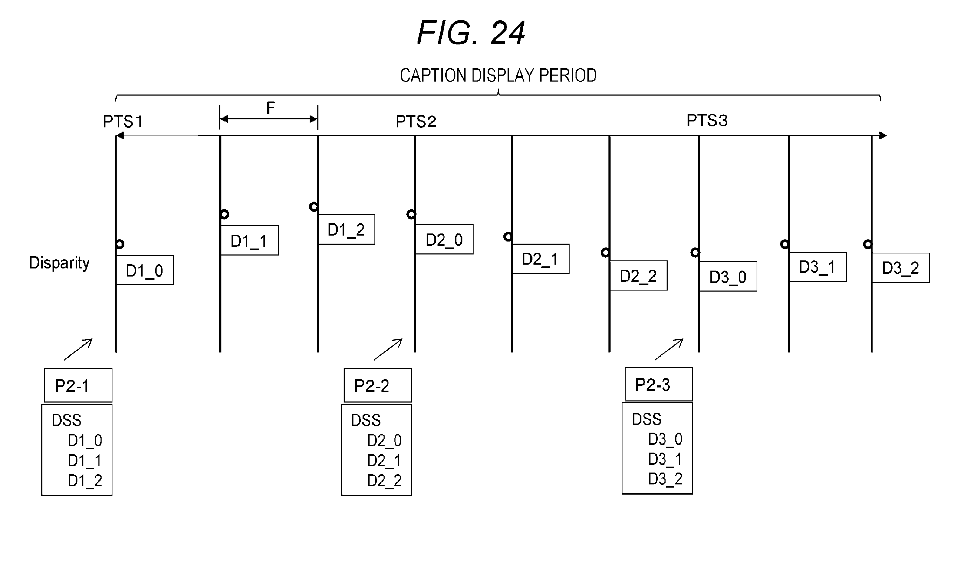

As described above, when the MD-DSS has disparity information for each frame, the value of interval_duration is equal to the value of a video frame period and the value of interval_count is 1 in disparity_shift_update_sequence() of a syntax of DSS, which will be described below. The same applies in a specific example of Fig. 24 that will be described below.

Also, in the case where the value of interval_count is 2 or more, as illustrated in Fig. 23, since the initial disparity information and the last disparity information of disparity_shift_update_sequence() share the same PTS, the connectivity of interpolation data before and after the DSS is secured. For example, in the specific example of Fig. 23, for the purpose of interpolation, the disparity information D1_3 and the disparity information D2-0 0 are encoded such as to share the same PTS, and the disparity information D2_3 and the disparity information D3_0 0 are encoded such as to share the same PTS. In the specific example of Fig. 23, a broken line extending in the vertical direction represents an example of the interpolation timing.

As described above, in the example of Fig. 23, the disparity information of the last frame of the MD-DSS included in any PES packet overlaps with the disparity information of the initial frame of the MD-DSS included in the next PES packet. By using this structure, in the case where the MD-DSS includes the disparity information of each plurality of frames, the interpolation processing of the disparity information for each frame in the receiving side can be performed by just using the disparity information obtained as a result of the decoding of any PES packet.

Fig. 24 illustrates another specific example of the case where a PES packet having an MD-DSS is multiplexed into a transport stream TS. The PES packet P2-1 having a PTS timing of PTS1 has an MD-DSS including disparity information D1_0, D1_1 and D1_2 of a PTS1 frame and two subsequent frames.

Also, the PES packet P2-2 having a PTS timing of PTS2 has an MD-DSS including disparity information D2_0, D2_1 and D2_2 of a PTS2 frame and two subsequent frames. In this case, unlike the example of Fig. 23, the disparity information D1_2 of the last frame of the MD-DSS included in the PES packet P2-1 does not overlap with the disparity information D2_0 of the initial frame of the MD-DSS included in the PES packet P2-2. This is because there is no interpolation processing between D1_2 and D2 0. Although not described in detail, the PES packet P2-3 having a PTS timing of PTS3 is the same as the above-described PES packet P2-2.

Also, the multiplexer 126 may set the timing of the decoding time stamp DTS of the PES packet of the 3D extension stream (see Fig. 11(b)) including the disparity information, or the PES packet of the 3D stream (see Fig. 12 (b)), in the following manner. In the PES packet, by setting the "PTS_DTS_flags" of a header (PES packet header) to 11, not only the displaying timing but also the decoding timing can be defined.

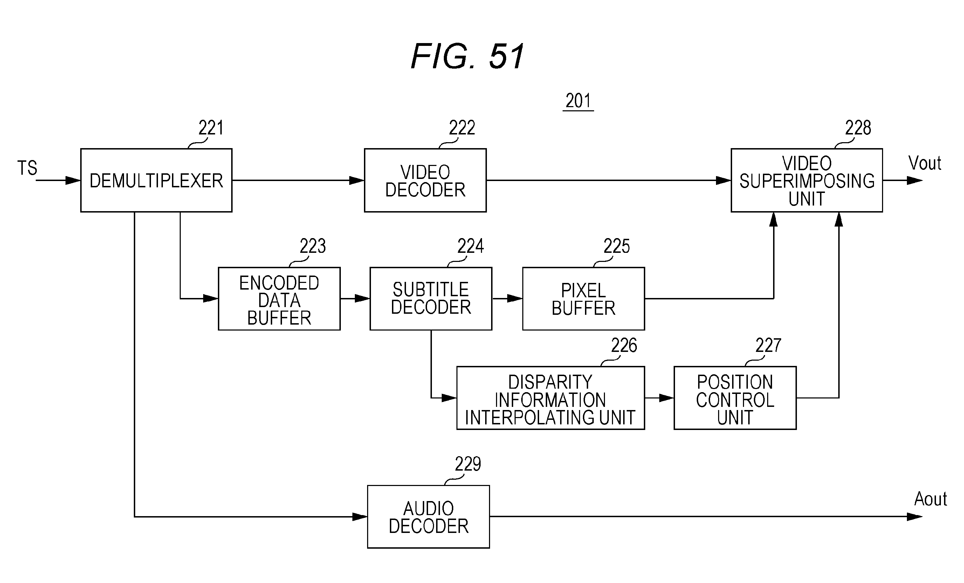

Incidentally, "PTS_DTS_flags = 11" indicates that the PTS and the DTS are encoded. "PTS_DTS_flags = 10" indicates that only the PTS is encoded, and "PTS_DTS_flags = 00" indicates that neither the PTS nor the DTS is encoded. In addition, "PTS_DTS_flags = 01" is prohibited. Also, in a bit stream processing unit 201 of Fig. 51 described below, the PTS is the timing of reading from a pixel buffer 225, and the DTS is the timing of reading from an encoded data buffer 223.

The multiplexer 126 is set such that the timing of the DTS of the PES packet of the 3D extension stream including the disparity information or the 3D stream is set to be earlier by a predetermined period than the timing of the PTS included in the PES packet. In this case, the timing of the DTS is set such that the acquisition of the disparity information from the PES packet is performed in time for the timing of using it.

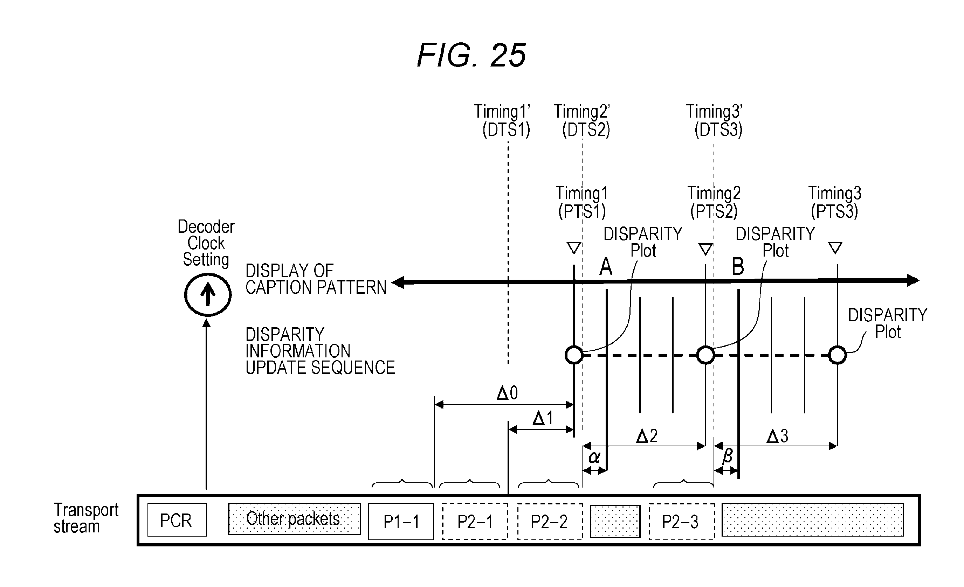

A specific example of setting the timing of the DTS will be described with reference to Fig. 25. Fig. 25 corresponds to Fig. 17 or Fig. 19 described above. As described above, the PES packet P2-1 of the 3D stream or the 3D extension stream having a PTS timing of a timing 1 (PTS1) is multiplexed such that the PES packet arrives at the decoder buffer of the receiving side at least the period ∆1 before the timing 1. The multiplexer 126 sets the timing of the DTS of the PES packet P2-1 to a timing 1' (DTS1) that is the period ∆1 before the timing 1.

Also, as described above, the PES packet P2-2 having a PTS timing of a timing 2 (PTS2) is multiplexed such that the PES packet arrives at the decoder buffer of the receiving side at least the period α before the timing A, that is, at least the period ∆2 before the timing 2. The multiplexer 126 sets the timing of the DTS of the PES packet P2-2 to a timing 2' (DTS2) that is the period ∆2 before the timing 2.

Likewise, as described above, the PES packet P2-2 having a PTS timing of a timing 3 (PTS3) is multiplexed such that the PES packet arrives at the decoder buffer of the receiving side at least the period β before the timing B, that is, at least the period ∆3 before the timing 3. The multiplexer 126 sets the timing of the DTS of the PES packet P2-3 to a timing 2' (DTS2) that is the period ∆3 before the timing 3.

An operation of the transmission data generating unit 110 illustrated in Fig. 2 will be described briefly. A left-eye image is captured by the camera 111L. The left-eye image data obtained by the camera 111L for stereoscopic image display is supplied to the video framing unit 112. Also, a right-eye image is captured by the camera 111R. The right-eye image data obtained by the camera 111R for stereoscopic image display is supplied to the video framing unit 112. In the video framing unit 112, the left-eye image data and the right-eye image data are processed into a state according to a transmission scheme, and stereoscopic image data is obtained (see Figs. 4(a) to 4 (c)).

The stereoscopic image data obtained by the video framing unit 112 is supplied to the a-side fixed terminal of the change-over switch 116. Also, the stereoscopic image data obtained by the data extracting unit 115 is supplied to the b-side fixed terminal of the change-over switch 116. In the live mode, the change-over switch 116 is connected to the side a, and the stereoscopic image data obtained by the video framing unit 112 is extracted from the change-over switch 116. In the reproduction mode, the change-over switch 116 is connected to the side b, and the stereoscopic image data output from the data extracting unit 115 is extracted from the change-over switch 116.

The stereoscopic image data extracted from the change-over switch 116 is supplied to the video encoder 119. In the video encoder 119, encoding such as MPEG4-AVC, MPEG2, or VC-1 is performed on the stereoscopic image data, and a video data stream (video elementary stream) including the encoded video data is generated. The video data stream is supplied to the multiplexer 126.

The audio data obtained by the microphone 114 is supplied to the a-side fixed terminal of the change-over switch 118. Also, the audio data obtained by the data extracting unit 115 is supplied to the b-side fixed terminal of the change-over switch 118. In the live mode, the change-over switch 118 is connected to the side a, and the audio data obtained by the microphone 114 is extracted from the change-over switch 118. In the reproduction mode, the change-over switch 118 is connected to the side b, and the audio data output from the data extracting unit 115 is extracted from the change-over switch 118.

The audio data extracted from the change-over switch 118 is supplied to the audio encoder 120. In the audio encoder 120, encoding such as MPEG-2 Audio AAC, or MPEG-4 AAC is performed on the audio data, and an audio data stream (audio elementary stream) including the encoded audio data is generated. The audio data stream is supplied to the multiplexer 126.

The left-eye image data and the right-eye image data obtained by the cameras 111L and 111R are supplied through the video framing unit 112 to the disparity vector detecting unit 113. In the disparity vector detecting unit 113, a disparity vector for each pixel or a disparity vector for each pixel group is detected based on the left-eye image data and the right-eye image data. The disparity vector is supplied to the a-side fixed terminal of the change-over switch 117. Also, the disparity vector for each pixel output from the data extracting unit 115 is supplied to the b-side fixed terminal of the change-over switch 117.

In the live mode, the change-over switch 117 is connected to the side a, and the disparity vector for each pixel or the disparity vector for each pixel group obtained by the disparity vector detecting unit 113 is extracted from the change-over switch 117. In the reproduction mode, the change-over switch 117 is connected to the side b, and the disparity vector for each pixel or the disparity vector for each pixel group output from the data extracting unit 115 is extracted from the change-over switch 117.

In the subtitle generating unit 121, subtitle data being DVB caption data (for a 2D image) is generated. The subtitle data is supplied to the disparity information creating unit 122 and the subtitle processing unit 123. The disparity vector for each pixel or the disparity vector for each pixel group extracted from the change-over switch 117 is supplied to the disparity information creating unit 122. In the disparity information creating unit 122, downsizing processing is performed on the disparity vector for each pixel or the disparity vector for each pixel group, and disparity information of each layer is generated. The disparity information is supplied to the subtitle processing unit 123.

In the subtitle processing unit 123, for example, a subregion in a region is defined based on the subtitle data generated by the subtitle generating unit 121. Also, in the subtitle processing unit 123, disparity information for shifting the display position of the superimposition information in the left-eye image and the right-eye image is set based on the disparity information created by the disparity information creating unit 122. In this case, the disparity information is set for each subregion, region or page.

The display control information and the subtitle data output from the subtitle processing unit 123 are supplied to the subtitle encoder 125. The display control information includes the region information of a subregion, the disparity information, and the like. In the subtitle encoder 125, first and second two private data streams (elementary streams) are generated by First Type or the Second Type.

By First Type, the first private data stream (2D stream) including the respective segments of DDS, PCS, RCS, CDS, ODS, and EDS is generated. In addition, by First Type, the second private data stream (3D extension stream) including the respective segments of DDS, DSS, and EDS or the respective segments of DDS, PCS, DSS, and EDS is generated.

By Second Type, the first private data stream (2D stream) including the respective segments of DDS, PCS, RCS, CDS, ODS, and EDS is generated. Also, by Second Type, the second private data stream (3D stream) including the respective segments of DDS, PCS, RCS, DSS, CDS, ODS, and EDS is generated. As described above, the segment of DSS is the segment including the display control information.

As described above, the respective data streams from the video encoder 119, the audio encoder 120, and the subtitle encoder 125 are supplied to the multiplexer 126. In the multiplexer 126, the respective data streams are packetized and multiplexed into a PES packet, and a transport stream TS is obtained as a multiplexed data stream. The transport stream TS includes a video data stream, an audio data stream, and first and second private data streams as PES streams.

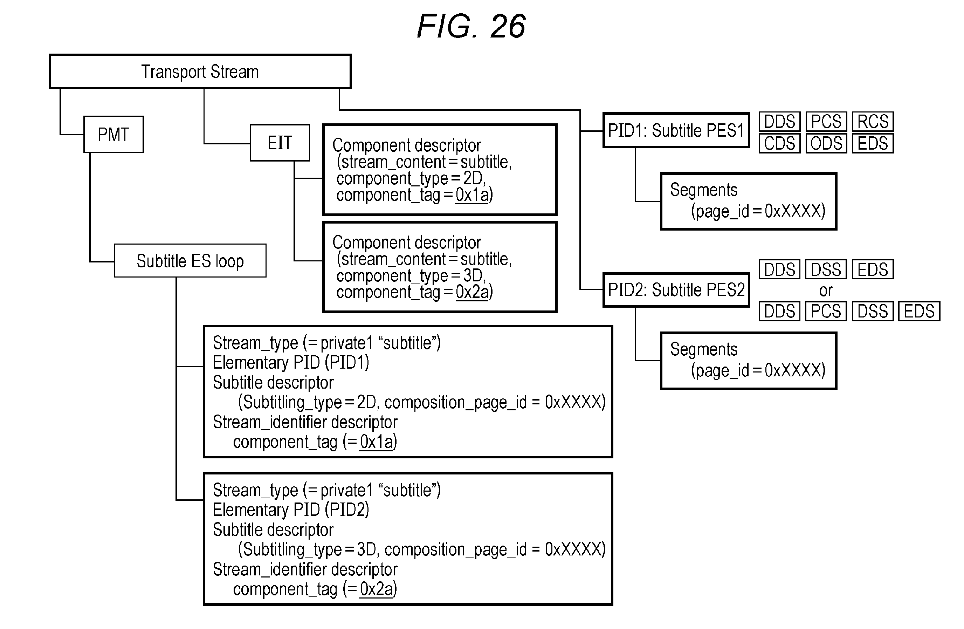

Fig. 26 illustrates an example of the configuration of a transport stream TS in First Type. In addition, in Fig. 26, the illustration of video and audio-related portions is omitted for simplicity of illustration. The transport stream TS includes a PES packet that is obtained by packetizing each elementary stream.

In this configuration example, the PES packet Subtitle PES1 of the 2D stream (first private data stream) and the PES packet Subtitle PES2 of the 3D extension stream (second private data stream) are included. The 2D stream (PES stream) includes the respective segments of DDS, PCS, RCS, CDS, ODS, and EDS. Also, the 3D extension stream (PES stream) includes the respective segments of DDS, DSS, and EDS or the respective streams of DDS, PCS, DSS, and EDS. In this case, "Elementary_PID" of the 2D stream and "Elementary_PID" of the 3D extension stream are set differently to PID1 and PID2, thus indicating that these streams are different streams.

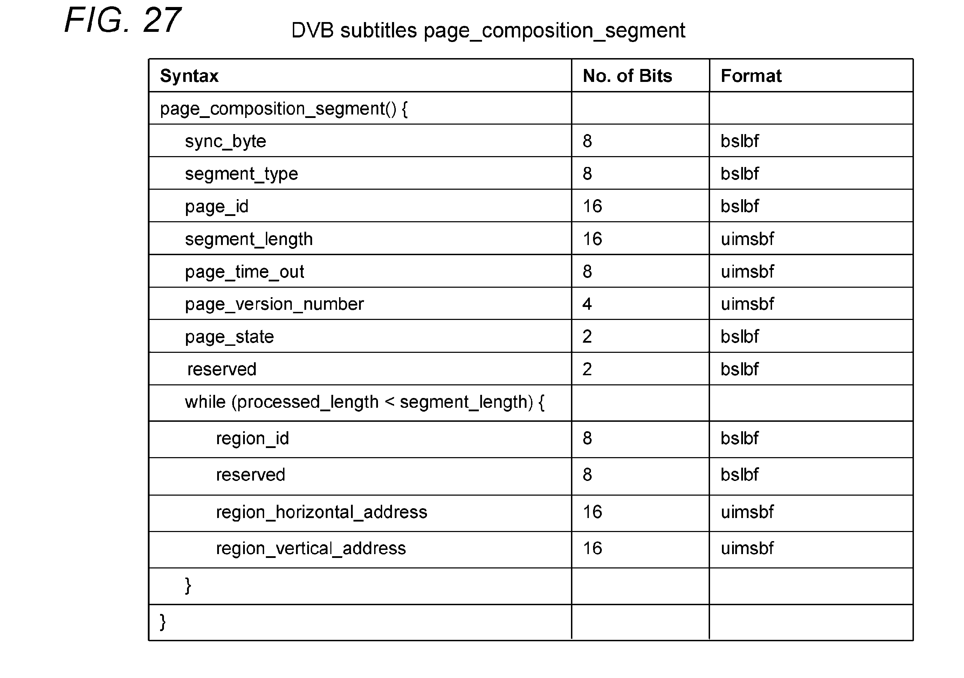

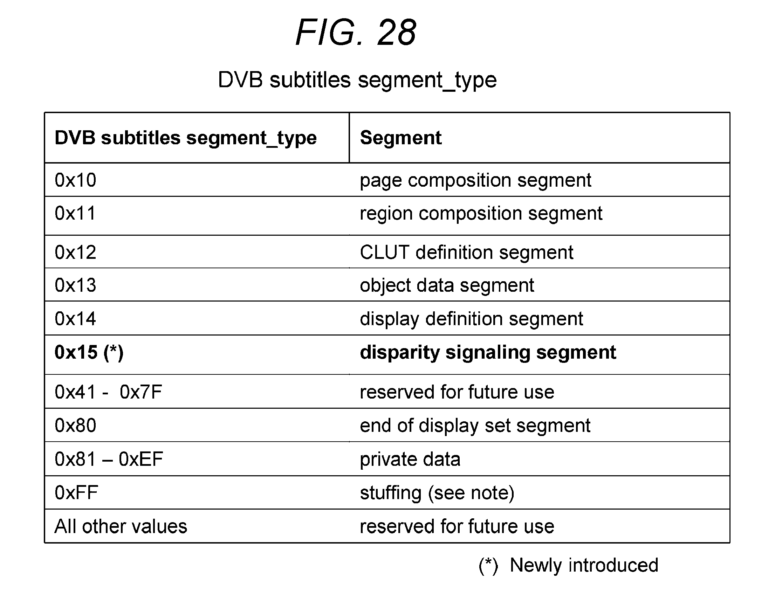

Fig. 27 illustrates the structure of PCS (page_composition_segment). The segment type of the PCS is 0x10 as illustrated in Fig. 28. Region_Horizontal_Address and Rregion_Vertical_Address indicate the starting position of a region. Also, with respect to the other segments such as DDS, RCS, and ODS, the illustration of structures thereof will be omitted. As illustrated in Fig. 28, the segment type of DDS is 0x14, the segment type of RCS is 0x11, the segment type of CDS is 0x12, the segment type of ODS is 0x13, and the segment type of EDS is 0x80. In addition, as illustrated in Fig. 28, the segment type of the DSS is 0x15. A detailed structure of the segment of DSS will be described below.

Returning to Fig. 26, the transport stream TS also includes a PMT (Program Map Table) as PSI (Program Specific Information). The PSI is information describing to which program each elementary stream included in the transport stream belongs. Also, the transport stream includes an EIT (Event Information Table) as SI (Serviced Information) for performing management on each event. The EIT describes metadata for each program.

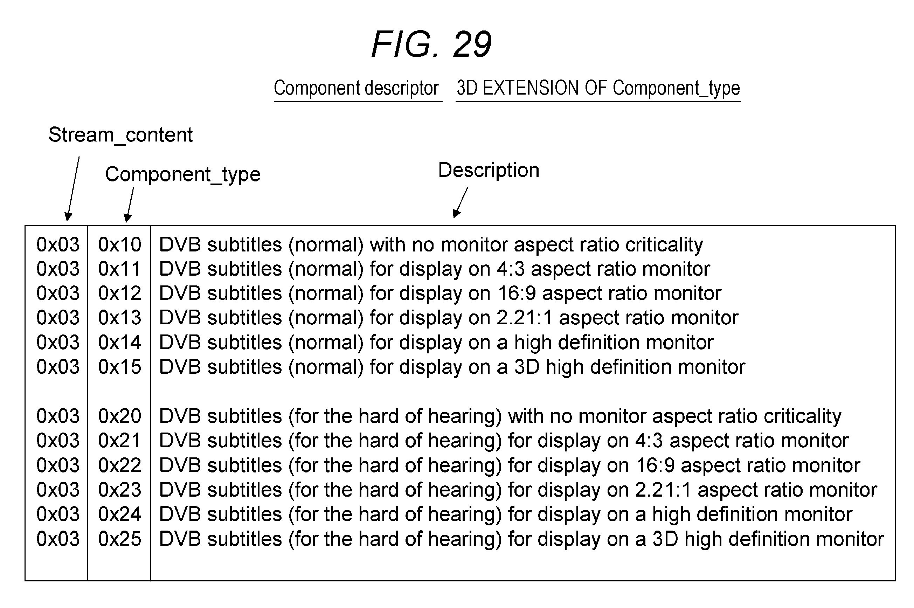

A subtitle descriptor (Subtitle_Descriptor) representing the content of a subtitle is inserted into the PMT. Also, a component descriptor (Component_Descriptor) representing the content of a delivery for each stream is inserted into the EIT. As illustrated in Fig. 29, in the case where the "stream_content" of the component descriptor represents a subtitle, when the "component_type" is 0x15 of 0x25, it represents a 3D subtitle; and when the "component_type" is any other value, it represents a 2D subtitle. As illustrated in Fig. 26, the "subtitling_type" of the subtitle descriptor is set to the value of "component_type".

Also, the PMT includes a subtitle elementary loop having information related to a subtitle elementary stream. In the subtitle elementary loop, information such as a packet identifier (PID) is disposed for each stream, and a descriptor describing information related to the elementary stream is also disposed, although not illustrated.

In the case of First Type, the "composition_page_id" of the subtitle descriptor is set to indicate that each segment included in the 3D extension stream is associated with each segment of the 2D stream. That is, the "composition_page_id" in the 3D extension stream and the "composition_page_id" in the 2D stream are set to share the same value (0xXXXX in Fig. 26). Also, in the case of First Type, in order to indicate that each segment included in the 3D extension stream is associated with each segment of the 2D stream, the "page_ids" of the respective associated segments in both streams are encoded such as to have the same value.

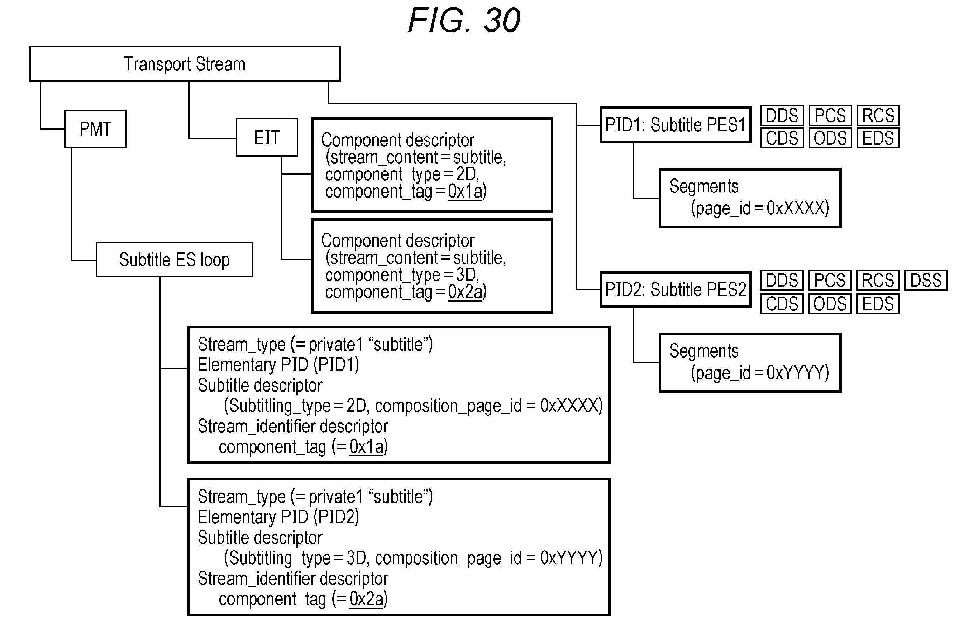

Fig. 30 illustrates an example of the configuration of a transport stream TS in Second Type. In addition, in Fig. 30, the illustration of video and audio-related portions is omitted for simplicity of illustration. The transport stream TS includes a PES packet that is obtained by packetizing each elementary stream.

In this configuration example, the PES packet Subtitle PES1 of the 2D stream (first private data stream) and the PES packet Subtitle PES2 of the 3D stream (second private data stream) are included. The 2D stream (PES stream) includes the respective segments of DDS, PCS, RCS, CDS, ODS, and EDS. The 3D stream (PES stream) includes the respective segments of DDS, PCS, RCS, DSS, CDS, ODS, and EDS.

In the case of Second Type, the 3D stream is configured by inserting a DSS segment into the 2D stream. That is, the 3D stream includes all information necessary to perform a 3D-compatible display. In this case, "Elementary_PID" of the 2D stream and "Elementary_PID" of the 3D stream are set differently to PID1 and PID2, thus indicating that these streams are different streams. Also, in the case of Second Type, the "composition_page_id" of the subtitle descriptor in the 3D stream and the "composition_page_id" of the subtitle descriptor in the 2D stream are set to have different values (0xXXXX and OxYYYY in Fig. 30).

[Update of Disparity Information]

As described above, disparity information is transmitted by the 3D extension stream in First Type, and disparity information is transmitted by the 3D stream in Second Type. The update of the disparity information will be described.

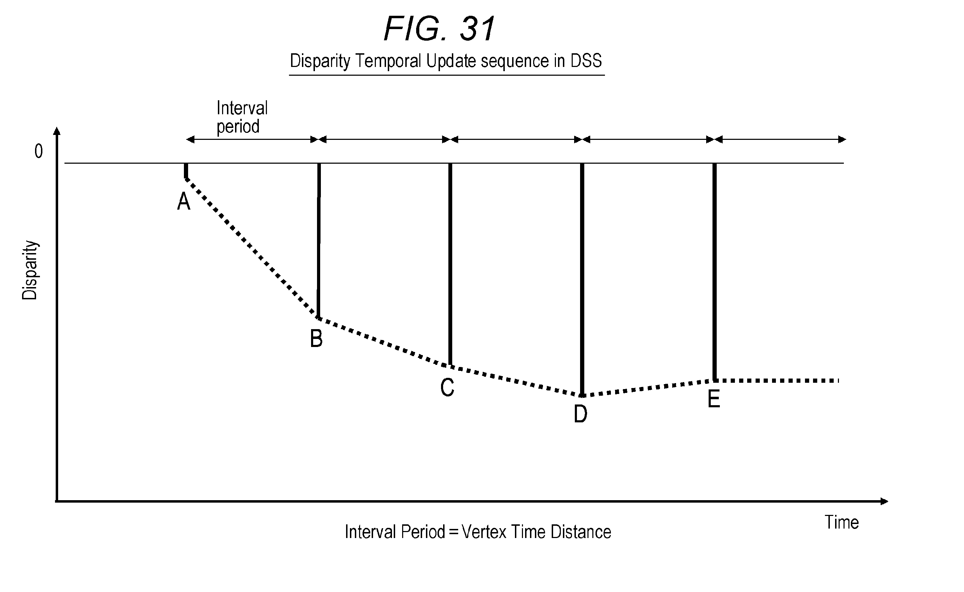

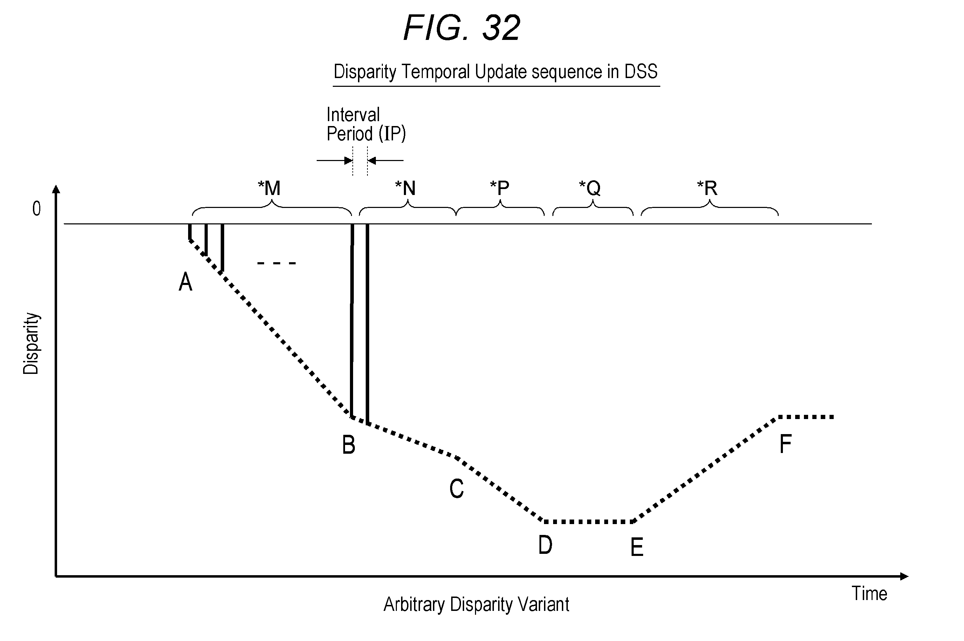

Figs. 31 and 32 illustrate examples of the disparity information update using an interval period. Fig. 31 illustrates the case where an interval period is fixed and is equal to an update period. That is, each of the update periods of A-B, B-C, C-D, ... includes one interval period.
Fig. 32 corresponds to a general case, and illustrates an example of the disparity information update in the case where an interval period is set to be a short period (may be, for example, a frame period). In this case, the numbers of interval periods in the respective update periods are M, N, P, Q, and R. Also, in Figs. 31 and 32, "A" represents a starting frame (starting point) of a caption display period, and "B" to "F" represent subsequent update frames (update points).
When the disparity information sequentially updated in the caption display period is transmitted to the receiving side (set-top box 200 or the like), the receiving side can generate and use disparity information of an arbitrary frame interval, for example, a 1-frame interval, by performing interpolation processing on the disparity information for each update period.

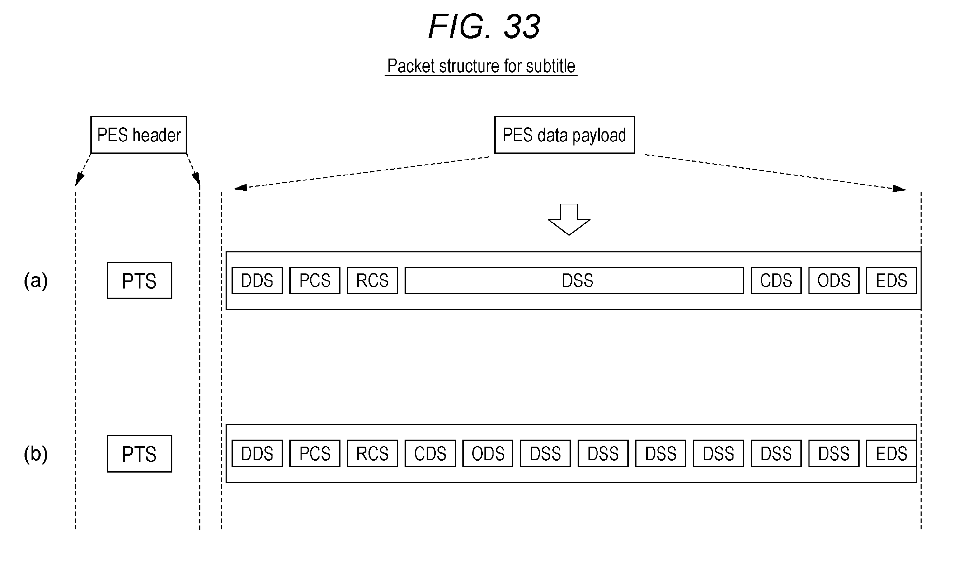

Fig. 33 illustrates an example of the configuration of a 3D stream in Second Type. Fig. 33(a) illustrates an example in which only one DSS segment is inserted. A PES header includes time information (PTS). Also, respective segments of DDS, PCS, RCS, DSS, CDS, ODS, and EDS are included as PES payload data. These are transmitted together before the start of a subtitle display period. The DSS segment may include a plurality of pieces of disparity information sequentially updated in the caption display period.
Also, the DSS segment may not include a plurality of pieces of disparity information sequentially updated in the caption display period, and the plurality of pieces of disparity information may be transmitted to the receiving side (set-top box 200 or the like). In this case, a DSS segment is inserted into the 3D stream at each update timing.
Fig. 33(b) illustrates an example of the configuration of the 3D stream in this case. Also, respective segments of DDS, PCS, RCS, CDS, ODS, and EDS are transmitted as PES payload data. Thereafter, a predetermined number of DSS segments for disparity information update are transmitted at the update timing. Lastly, an EDS segment is also transmitted together with the DSS segment.
In addition, although Fig. 33 illustrates the example of the configuration of the 3D stream in Second Type, the same configuration can also be applied to the 3D extension stream in First Type. That is, one DSS segment can be inserted into the 3D extension frame, and a plurality of pieces of disparity information sequentially updated in the caption display period can be included in the DSS segment. Alternatively, a DSS segment is inserted into the 3D extension frame at each disparity information update timing.

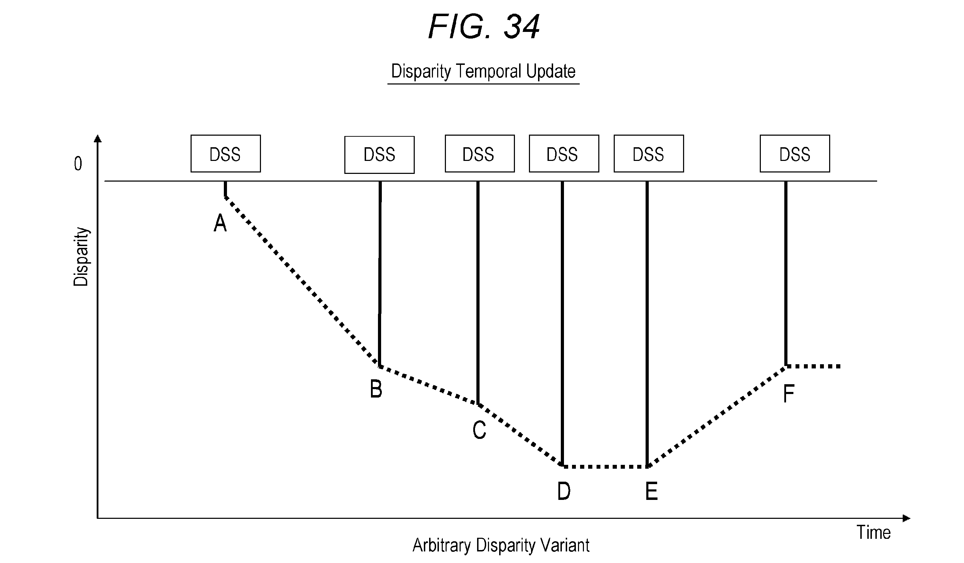

Fig. 34 illustrates an example of the disparity information update in the case where the DSS segments are sequentially transmitted as described above. Also, in Fig. 34, "A" represents a starting frame (starting point) of a caption display period, and "B" to "F" represent subsequent update frames (update points).
Also in the case where the disparity information sequentially updated in the caption display period is transmitted to the receiving side (set-top box 200 or the like) by sequentially transmitting the DSS segments, the receiving side can also perform the above-described processing. That is, also in this case, the receiving side can generate and use disparity information of an arbitrary frame interval, for example, a 1-frame interval, by performing interpolation processing on the disparity information for each update period.

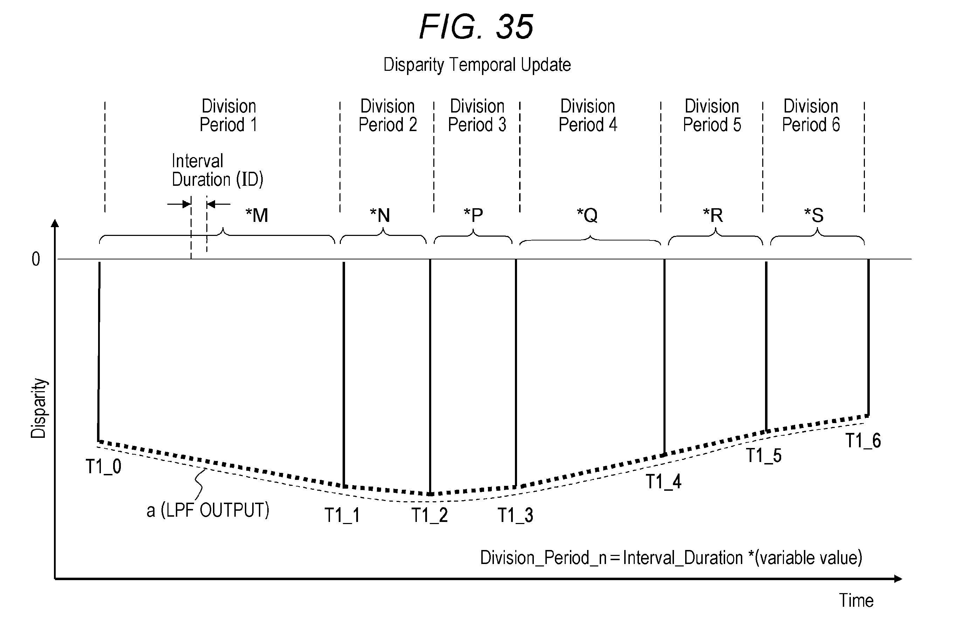

Fig. 35 illustrates an example of the disparity information update described above with reference to Fig. 32. An update frame interval is expressed in a multiple of an interval duration (ID) as a unit period. For example, an update frame interval Division Period 1 is expressed as "ID*M", an update frame interval Division Period 2 is expressed as "ID*N", and the subsequent update frame intervals are expressed likewise. In the example of the disparity information update illustrated in Fig. 35, the update frame interval is not fixed, and the update frame interval is set according to a disparity information curve.
Also, in the example of the disparity information update, in the receiving side, a starting frame (starting time) T1_0 of the caption display period is provided as a PTS (Presentation Time Stamp) that is inserted into the header of a PES stream including the disparity information. In the receiving side, each update time of the disparity information is obtained based on information about an interval duration (information about a unit period), which is information about each update frame interval, and information about the number of interval durations.

In this case, from the starting frame (starting time) T1 0 of the caption display period, the respective update times are sequentially obtained based on the following equation (1). In Equation (1), interval_count denotes the number of interval periods, and are values corresponding to M, N, P, Q, R, and S in Fig. 35. Also, in Equation (1), interval_time is a value corresponding to the interval duration ID in Fig. 35.

$$\mathtt{Tm\_n \; = \; Tm\_(n \; - \; 1) \; + \; (interval\_time*interval\_count) \; ...(1)}$$

For example, in the update example illustrated in Fig. 35, each update time is obtained based on Equation (1) in the following manner. That is, the update time T1_1 is obtained as T1_1 = T1_0 + (ID*M) by using the starting time T1_0, the interval duration ID, and the number M. Also, the update time T1_2 is obtained as T1 2 = T1_1 + (ID*N) by using the update time T1_1, the interval duration ID, and the number N. Each of the subsequent update times is obtained in the same manner.

In the update example illustrated in Fig. 35, in the receiving side, interpolation processing is performed on the disparity information sequentially updated in the caption display period, and the disparity information of an arbitrary frame interval in the caption display period, for example, a 1-frame interval is generated and used. For example, as the above interpolation processing, by performing not linear interpolation processing but interpolation processing accompanied with low-pass filter (LPF) processing in the time direction (frame direction), a change in the disparity information of a predetermined frame interval in the time direction (frame direction) after the interpolation processing becomes smooth. A broken line a of Fig. 35 represents an example of an LPF output.

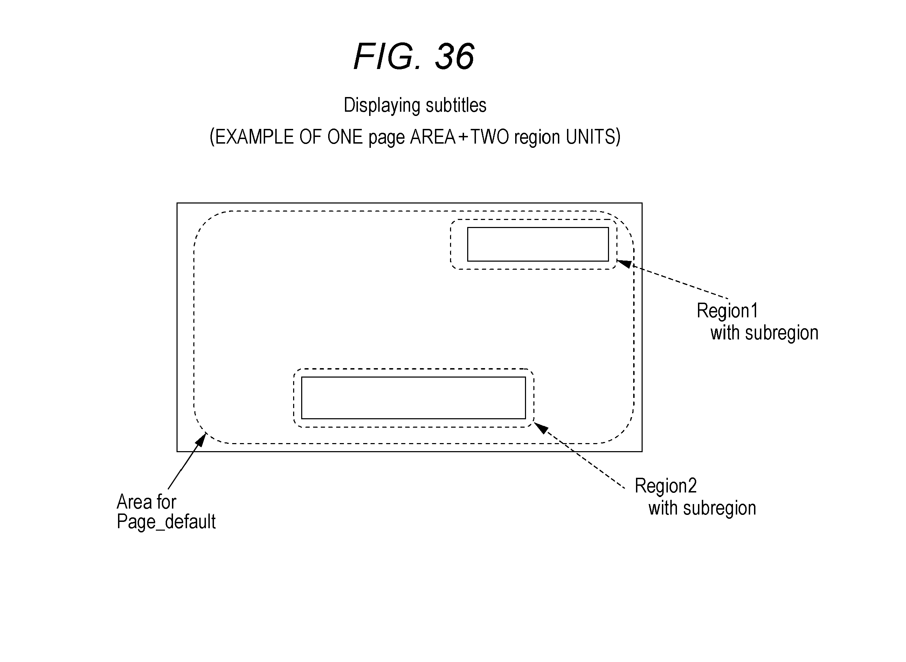

Fig. 36 illustrates an example of the display of a subtitle as a caption. In the display example, a page region (Area for Page_default) includes two regions (Region1 and Region2) as a caption display region. The region includes one or more subregions. Herein, it is assumed that the region includes one subregion, and the region and the subregion are the same.

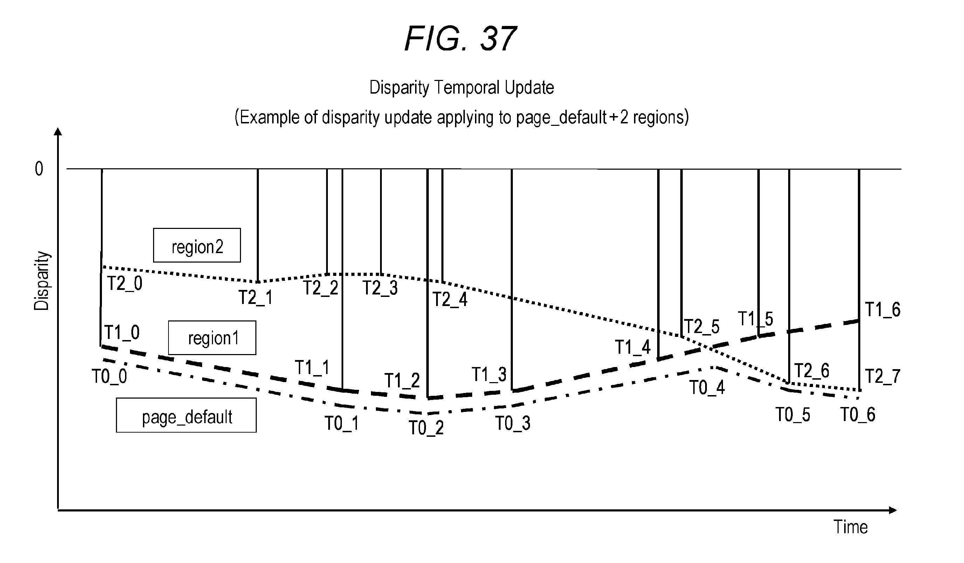

Fig. 37 illustrates an example of the disparity information curve of each region and page in the case where disparity information in units of a region and disparity information in units of a page are included in a DSS segment, as disparity information that is sequentially updated in the caption display period. Herein, the disparity information curve of the page takes the minimum value of the disparity information curve of two regions.

About the Region1, there are seven pieces of disparity information that are a starting time T1_0 and subsequent update times T1_1, T1_2, T1_3, ..., T1_6. Also, about the Region2, there are eight pieces of disparity information that are a starting time T2_0 and subsequent update times T2_1, T2_2, T2_3, ..., T2_7. In addition, about the page (Page_default), there are seven pieces of disparity information that are a starting time T0_0 0 and subsequent update times T0-1, T0_2, T0_3, ..., T0_6.

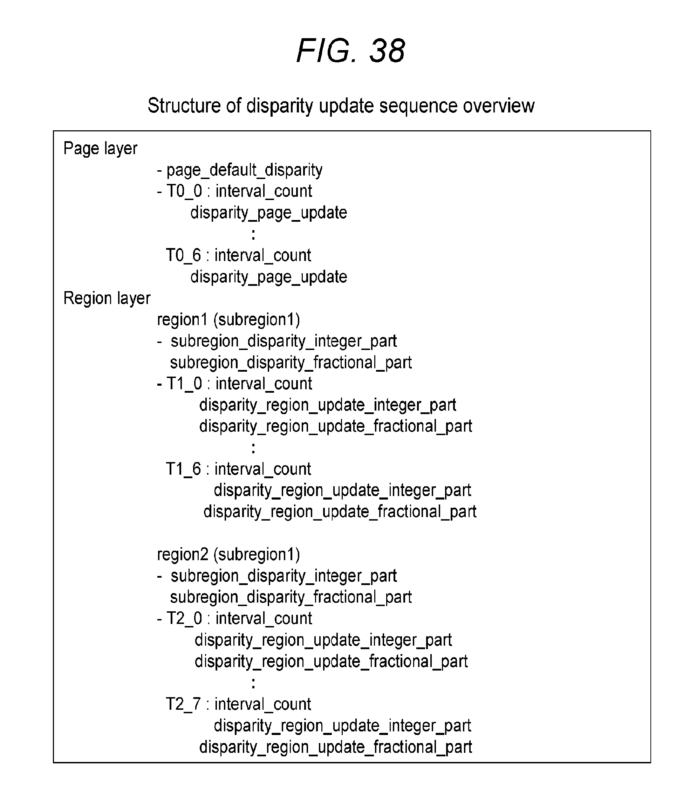

Fig. 38 illustrates a transmission structure of the disparity information of each page and region illustrated in Fig. 37. First, a page layer will be described. A fixed value "page_default_disparity" of the disparity information is disposed in the page layer. As for the disparity information sequentially updated in the caption display period, "interval_count" representing the number of interval periods corresponding to a starting time and subsequent update times, and "disparity_page_updete" representing the disparity information are sequentially disposed. Also, the "interval_count" at the starting time is set to "0".

Next, a region layer will be described. As for the Region1 (Subregion1), "subregion_disparity_integer_part" and "subregion_disparity_fractional_part" being the fixed values of the disparity information are disposed. Herein, "subregion_disparity_integer_part" represents an integer part of the disparity information, and "subregion_disparity_fractional_part" represents a fractional part of the disparity information.

As for the disparity information sequentially updated in the caption display period, "interval_count" representing the number of interval periods corresponding to a starting time and subsequent update times, and "disparity_region_updete_integer_part" and "disparity_region_updete_fractional_part" representing the disparity information are sequentially disposed. Herein, "disparity_region_updete_integer_part" represents an integer part of the disparity information, and "disparity_region_updete_fractional_part" represents a fractional part of the disparity information. Also, the "interval_count" at the starting time is set to "0".

Like the above-described Region1, as for the Region2 (Subregion2), "subregion_disparity_integer_part" and "subregion_disparity_fractional_part" being the fixed values of the disparity information are disposed. As for the disparity information sequentially updated in the caption display period, "interval_count" representing the number of interval periods corresponding to a starting time and subsequent update times, and "disparity_region_updete_integer_part" and "disparity_region_updete_fractional_part" representing the disparity information are sequentially disposed.

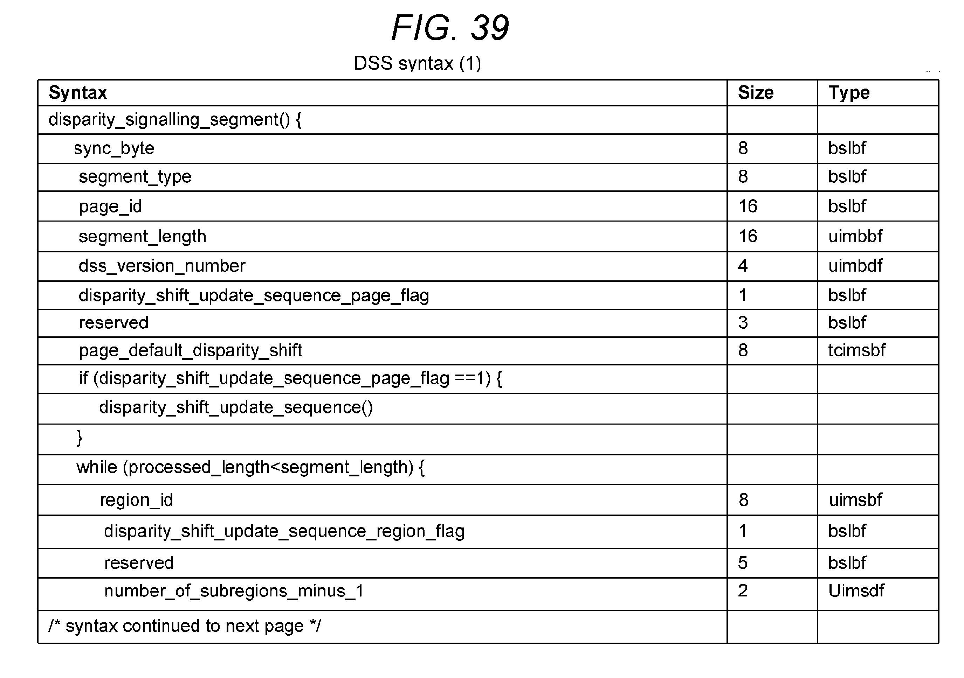

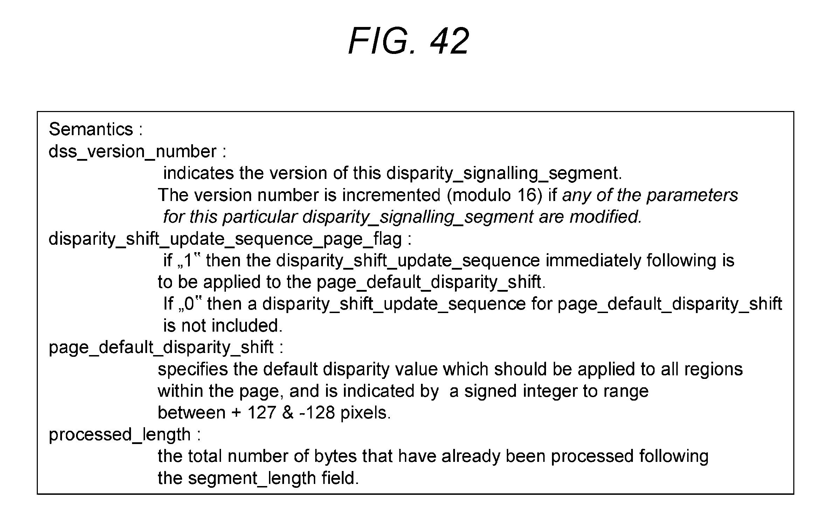

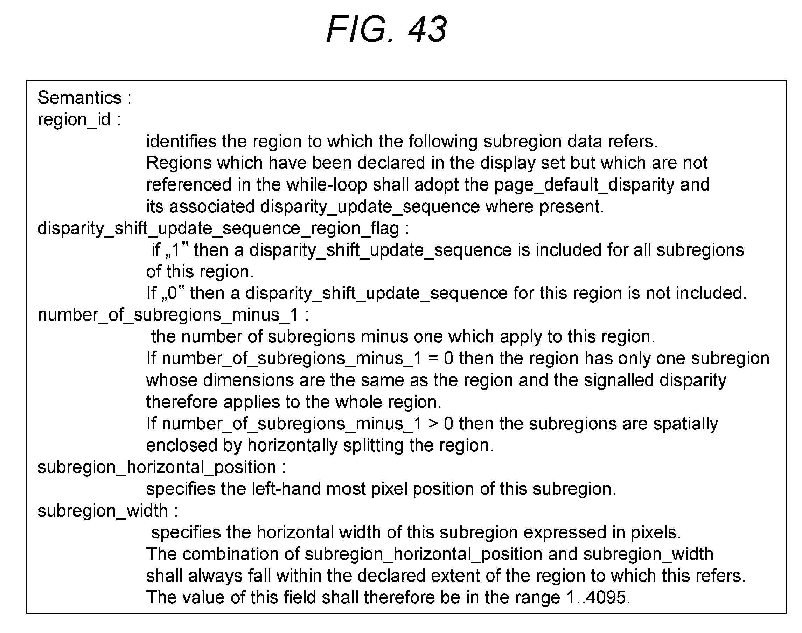

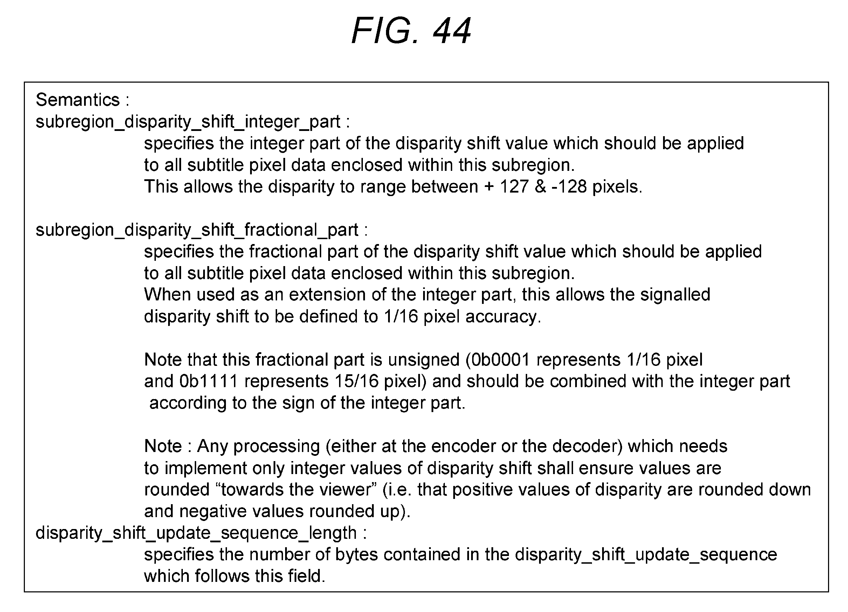

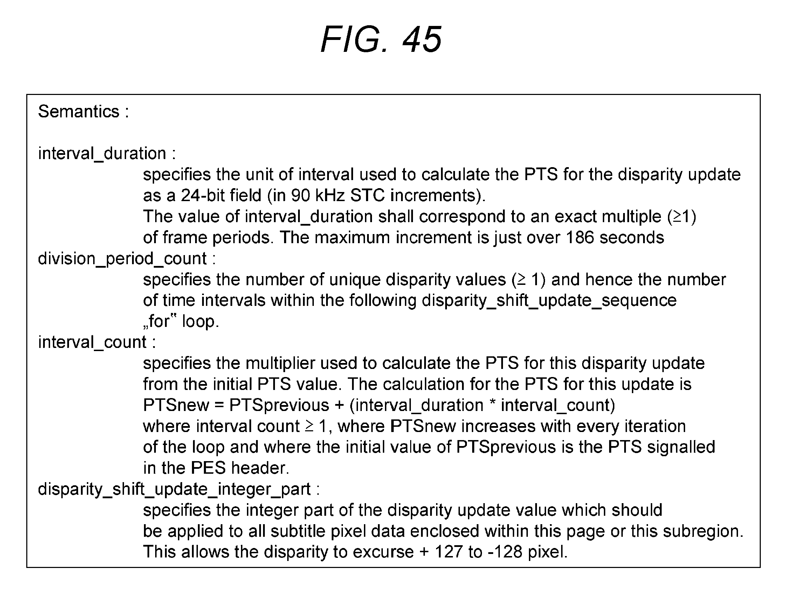

Figs. 39 to 41 illustrate examples of the syntax of a DSS (Disparity_Signaling_Segment). Figs. 42 to 45 illustrate the main data definition contents (semantics) of a DSS. This syntax includes respective pieces of information of "sync_byte", "segment_type", "page_id", "segment_length", and "dss_version_number". The "segment_type" is 8-bit data representing a segment type, and herein is a value representing the DSS. The "segment_length" is 8-bit data representing the number of subsequent bytes.

A 1-bit flag of "disparity_shift_update_sequence_page_flag" indicates whether disparity information sequentially updated in the caption display period is present as disparity information in units of a page. "1" represents presence, and "0" represents absence. An 8-bit field of "page_default_disparity_shift" represents fixed disparity information in units of a page, that is, disparity information that is commonly used in the caption display period. When the flag of "disparity_page_update_sequence_flag" described above is "1", the reading of "disparity_shift_update_sequence()" is performed.

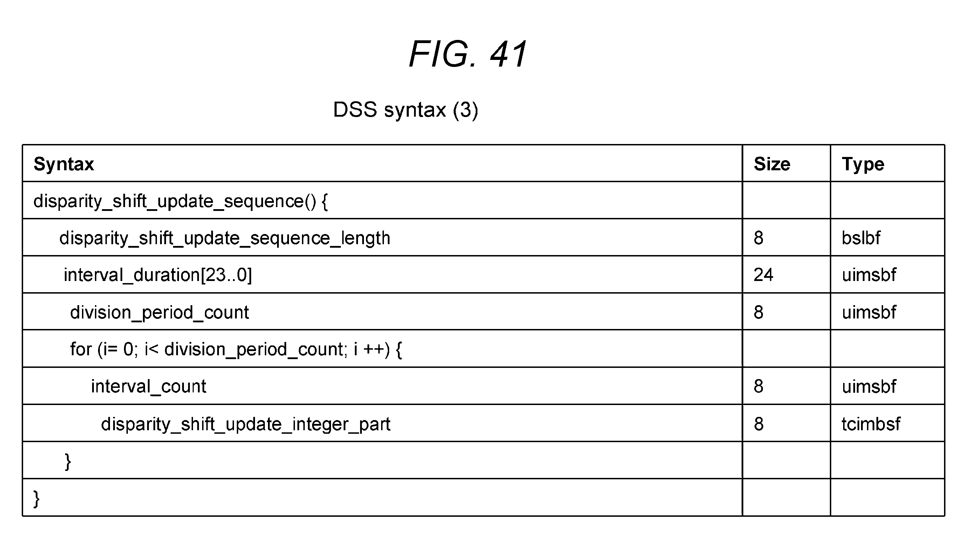

Fig. 41 illustrates an example of the syntax of "disparity_shift_update_sequence ()". The "disparity_page_update_sequence_length" is 8-bit data representing the number of subsequent bytes. A 24-bit field of "interval_duration [23..0]" specifies an interval duration (see Fig. 35) as a unit period in units of 90 KHz. That is, the "interval_duration[23..0]" represents a 24-bit value of the interval duration measured with a 90 KHz clock.

The reason for being the 24-bit length with respect to the 33-bit length of the PTS inserted into a header portion of the PES is as follows. That is, a time exceeding 24 hours can be represented by the 33-bit length, but it is an unnecessary length as the interval duration in the caption display period. Also, by the 24-bit representation, the data size can be reduced and compact transmission can be performed. Also, 24 bits is 8x3 bits, and byte alignment is facilitated.

An 8-bit field of "division_period_count" represents the number of division periods that are influenced by the disparity information. For example, in the case of the update example illustrated in Fig. 35, the number of division periods is "7" corresponding to the starting time T1_0 0 and the subsequent update times T1_1 to T1_6. A "for" loop below is repeated the number of times represented by the 8-bit field of "division_period_count".

An 8-bit field of "interval_count" represents the number of interval periods. For example, in the case of the update example illustrated in Fig. 35, it correspond to M, N, P, Q, R, and S. An 8-bit field of "disparity_shift_update_integer_part" represents the disparity information. The "interval_count" is "0" corresponding to the disparity information at the starting time (the initial value of the disparity information). That is, when the "interval_count" is "0", the "disparity_page_update" represents the disparity information at the starting time (the initial value of the disparity information).

A "while" loop of Fig. 39 is repeated when the data length processed up to that time (processed_length) does not reach the segment data length (segment_length). In the "while" loop, the disparity information in units of a region or a subregion in the region is disposed. Herein, the region includes one or more subregions, and the region and the subregion may be the same.

Information of "region_id" is included in the "while" loop. A 1-bit flag of "disparity_shift_update_sequence_region_flag" is flag information indicating whether there is "disparity_shift_update_sequence ()" for all the subregions in the region. A 2-bit field of "number_of_subregions_minus_1" represents the value equal to the number of subregions in the region minus 1. When number_of_subregions_minus_1 = 0, the region includes one subregion that has the same dimension as the region.

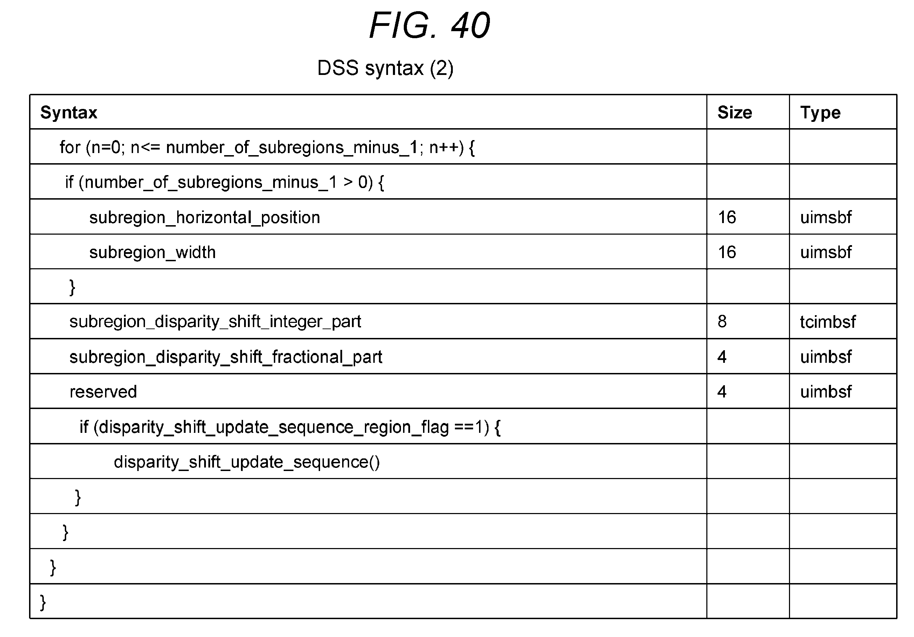

When number_of_subregions_minus_1 > 0, the region includes a plurality of subregions divided in the horizontal direction. In the "for" loop of Fig. 40, information of "subregion_horizontal_position" and "subregion_width" corresponding to the number of subregions is included. A 16-bit field of "subregion_horizontal_position" represents the pixel position of the left of the subregion. The "subregion_width" represents the horizontal width of the subregion with the number of pixels.

An 8-bit field of "subregion_disparity_shift_integer_part" represents fixed disparity information in units of a region (in units of a subregion), that is, an integer part of the disparity information that is commonly used in the caption display period. A 4-bit field of "subregion_disparity_shift_fractional_part" represents fixed disparity information in units of a region (in units of a subregion), that is, a fractional part of the disparity information that is commonly used in the caption display period. When the flag of "disparity_shift_update_sequence_region_flag" described above is "1", the reading of "disparity_shift_update_sequence ()" (see Fig. 41) is performed.

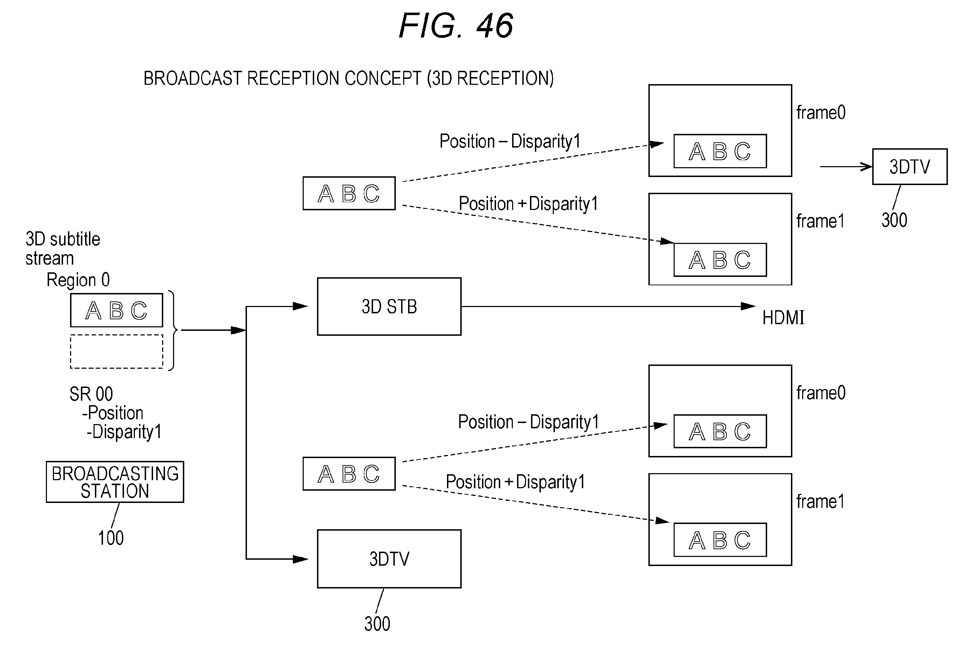

Fig. 46 illustrates the concept of broadcast reception in the case where a set-top box 200 and a television receiver 300 are 3D-compatible devices. In this case, in the broadcasting station 100, a subregion SR 00 is defined in a region Region 0, and the disparity information Disparity 1 is set. Herein, it is assumed that the region Region 0 and the subregion SR 00 are the same region. Together with the stereoscopic image data, the subtitle data and the display control information (disparity information Disparity 1 and region information Position of the subregion) are transmitted from the broadcasting station 100.

First, a description will be given of the case of reception by the set-top box 200 that is a 3D-compatible device. In this case, in First Type, the set-top box 200 reads the respective segment data constituting the subtitle data from the 2D stream, reads the DSS segment data including the display control information such as the disparity information from the 3D extension stream, and uses the read data. Also, in Second Type, the set-top box 200 reads the respective segment data constituting the subtitle data and the DSS segment data including the display control information such as the disparity information from the 3D stream, and uses the read data.

The set-top box 200 generates region display data for displaying a subtitle, based on the subtitle data. The set-top box 200 obtains output stereoscopic image data by superimposing the region display data on a left-eye image frame (frame0) portion and a right-eye image frame (frame1) portion constituting the stereoscopic image data. Herein, the set-top box 200 shifts the positions of the respective superimposed display data based on the disparity information. Also, the set-top box 200 changes the superimposition position, the size, and the like appropriately according to a transmission format of the stereoscopic image data (Side By Side scheme, Top & Bottom scheme, Frame Sequential scheme, or a format scheme in which each view has a full-screen size).

The set-top box 200 transmits the output stereoscopic image data obtained as described above, to the 3D-compatible television receiver 300 through, for example, an HDMI digital interface. The television receiver 300 performs 3D signal processing on the stereoscopic image data received from the set-top box 200, to generate left-eye image data and right-eye image data on which the subtitle is superimposed. The television receiver 300 displays a binocular disparity image (left-eye image and right-eye image) on a display panel such as an LCD to allow a user to recognize a stereoscopic image.

Next, a description will be given of the case of reception by the television receiver 300 that is a 3D-compatible device. In this case, in First Type, the television receiver 300 reads the respective segment data constituting the subtitle data from the 2D stream, reads the DSS segment data including the display control information such as the disparity information from the 3D extension stream, and uses the read data. Also, in Second Type, the set-top box 200 reads the respective segment data constituting the subtitle data and the DSS segment data including the display control information such as the disparity information from the 3D stream, and uses the read data.

The television receiver 300 generates region display data for displaying a subtitle, based on the subtitle data. The television receiver 300 superimposes the region display data on the left-eye image data and the right-eye image data obtained by performing processing according to a transmission format on the stereoscopic image data, to generate left-eye image data and right-eye image data on which the subtitle is superimposed. The television receiver 300 displays a binocular disparity image (left-eye image and right-eye image) on a display panel such as an LCD to allow a user to recognize a stereoscopic image.

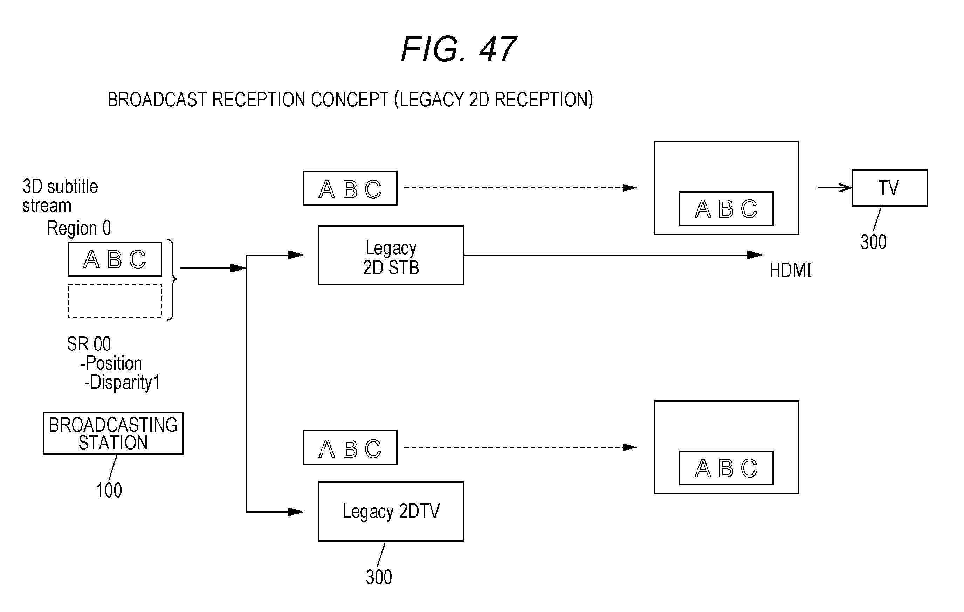

Fig. 47 illustrates the concept of broadcast reception in the case where a set-top box 200 and a television receiver 300 are legacy 2D-compatible devices. In this case, in the broadcasting station 100, a subregion SR 00 is defined in a region Region 0, and the disparity information Disparity 1 is set. Herein, it is assumed that the region Region 0 and the subregion SR 00 are the same region. Together with the stereoscopic image data, the subtitle data and the display control information (disparity information Disparity 1 and region information Position of the subregion) are transmitted from the broadcasting station 100.

Next, a description will be given of the case of reception by the set-top box 200 that is a legacy 2D-compatible device. In this case, in either of First Type and Second Type, the set-top box 200 reads the respective segment data constituting the subtitle data from the 2D stream, and uses the read data. That is, since the reading of the DSS segment including the display control information such as the disparity information is not performed, the reception processing can be prevented from being interrupted by the reading.

The set-top box 200 generates region display data for displaying a subtitle, based on the subtitle data. The set-top box 200 obtains output 2D image data by superimposing the region display data on the 2D image data that has been obtained by performing the processing according to the transmission format on the stereoscopic image data.

The set-top box 200 transmits the output 2D image data obtained as described above, to the television receiver 300 through, for example, an HDMI digital interface. The television receiver 300 displays a 2D image according to the 2D image data received from the set-top box 200.

Next, a description will be given of the case of reception by the television receiver 300 that is a 2D-compatible device. In this case, in either of First Type and Second Type, the television receiver 300 reads the respective segment data constituting the subtitle data from the 2D stream, and uses the read data. That is, since the reading of the DSS segment including the display control information such as the disparity information is not performed, the reception processing can be prevented from being interrupted by the reading.

The television receiver 300 generates region display data for displaying a subtitle, based on the subtitle data. The television receiver 300 obtains 2D image data by superimposing the region display data on the 2D image data that has been obtained by performing the processing according to the transmission format on the stereoscopic image data. The television receiver 300 displays a 2D image according to the 2D image data.

In the transmission data generating unit 110 illustrated in Fig. 2, by the multiplexer 126, a PES packet of the 3D extension stream or the 3D stream, into which the DSS segment including the display control information such as the disparity information is inserted, is multiplexed into a transport stream TS. Herein, the PES packet is multiplexed such that the PES packet arrives at the decoder buffer of the receiving side a predetermined period before the timing of a display time stamp (PTS). Therefore, the receiving side can acquire the disparity information by performing decoding or the like in time for the timing of the display time stamp. That is, the transmission of the PES packet including the display control information such as the disparity information can be effectively performed.

Also, in the transmission data generating unit 110 illustrated in Fig. 2, by the multiplexer 126, a decoding time stamp DTS is encoded in a PES packet of the 3D extension stream or the 3D stream into which the DSS segment including the display control information such as the disparity information is inserted. In this case, the timing of the decoding time stamp DTS is set to be earlier than the timing of a display time stamp PTS included in the PES packet. That is, in the receiving side, the timing of the DTS is set such that the acquisition of the display control information from the PES packet is performed in time for the timing of using it. Therefore, in the receiving side, decoding can be reliably started in time for the timing of the display time stamp PTS.

In the transmission data generating unit 110 illustrated in Fig. 2, the transport stream TS output as a multiplexed data stream from the multiplexer 126 includes two private data streams. That is, the 2D stream and the 3D extension stream are included in First Type, and the 2D stream and the 3D stream are included in Second Type (see Figs. 11 and 12) .

Therefore, in an legacy 2D-compatible receiving apparatus of the receiving side, the reception processing can be performed by reading only the respective segments constituting the subtitle data from the 2D stream. That is, in the 2D-compatible receiving apparatus, since the DSS segment need not be read from the 3D extension stream or the 3D stream, the reception processing can be prevented from being interrupted by the reading.

Also, in a 3D-compatible receiving apparatus of the receiving side, the DSS segment and the corresponding display control information (including the disparity information and the region information of the subregion) can be read from the 3D extension stream or the 3D stream, so that the disparity adjustment of the subtitle (caption) of the left-eye image and the right-eye image can be performed in accordance with the display content of the stereoscopic image.

Also, in the transmission data generating unit 110 illustrated in Fig. 2, since the DSS segment including the disparity information sequentially updated in the subtitle display period can be transmitted, the display positions of the left-eye subtitle and the right-eye subtitle can be dynamically controlled. Accordingly, in the receiving side, the disparity provided between the left-eye subtitle and the right-eye subtitle can be dynamically changed in conjunction with a change in the image content.

Also, in the transmission data generating unit 110 illustrated in Fig. 2, the disparity information of the frame for each update frame interval included in the DSS segment obtained by the subtitle encoder 125 is not an offset value from the previous disparity information, but is the disparity information itself. Therefore, in the receiving side, even when an error occurs in the interpolation process, the recovery from the error can be performed within a predetermined delay time.

[Description of Set-top Box]

Returning to Fig. 1, the set-top box 200 receives a transport stream TS that is transmitted on a broadcast wave from the broadcasting station 100. The transport stream TS includes audio data and stereoscopic image data including left-eye image data and right-eye image data. Also, the transport stream TS further includes subtitle data (including display control information) for a stereoscopic image for displaying a subtitle (caption).

That is, the transport stream TS includes a video data stream, an audio data stream, and first and second private data streams as PES streams. As described above, in the case of First Type, the first and second private data streams are respectively a 2D stream and a 3D extension stream (see Fig. 11). Also, in the case of Second Type, the first and second private data streams are respectively a 2D stream and a 3D stream (see Fig. 12) .

The set-top box 200 includes a bit stream processing unit 201. When the set-top box 200 is a 3D-compatible device (3D STB), the bit stream processing unit 201 acquires stereoscopic image data, audio data, and subtitle data (including display control information) from the transport stream TS.

In this case, in First Type, the bit stream processing unit 201 acquires the respective segment data constituting the subtitle data from the 2D stream, and acquires the DSS segment data including the display control information such as the disparity information from the 3D extension stream. Also, in Second Type, the bit stream processing unit 201 acquires the respective segment data constituting the subtitle data and the DSS segment data including the display control information such as the disparity information from the 3D stream.

The bit stream processing unit 201 uses the stereoscopic image data and the subtitle data (including the display control information) to generate output stereoscopic image data in which the subtitle is superimposed on a left-eye image frame (frame0) portion and a right-eye image frame (frame1) portion (see Fig. 46). In this case, a disparity can be provided between a subtitle superimposed on a left-eye image (a left-eye subtitle) and a subtitle superimposed on a right-eye image (a right-eye subtitle).

For example, as described above, the display control information added to the subtitle data for an stereoscopic image received from the broadcasting station 100 includes disparity information, and a disparity can be provided between a left-eye subtitle and a right-eye subtitle based on the disparity information. In this manner, since the disparity is provided between the left-eye subtitle and the right-eye subtitle, the user can recognize a subtitle (caption) in front of an image.

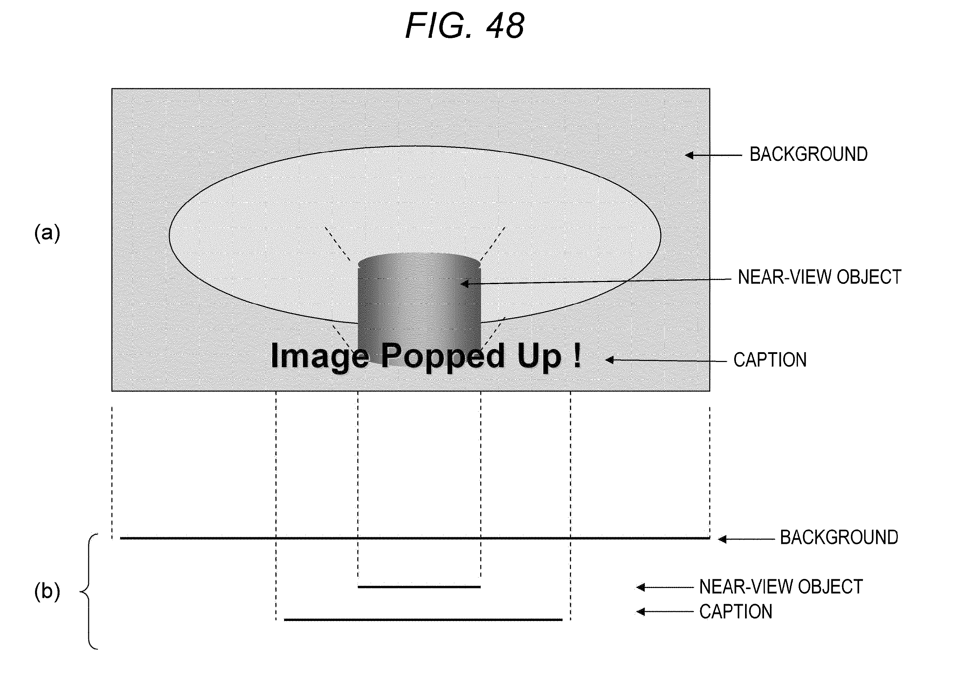

Fig. 48(a) illustrates an example of the display of a subtitle (caption) on an image. In the display example, a caption is superimposed on an image including a background and a near-view object. Fig. 48(b) illustrates that the perspective of a background, a near-view object and a caption is expressed and the caption is recognized at the frontmost position.

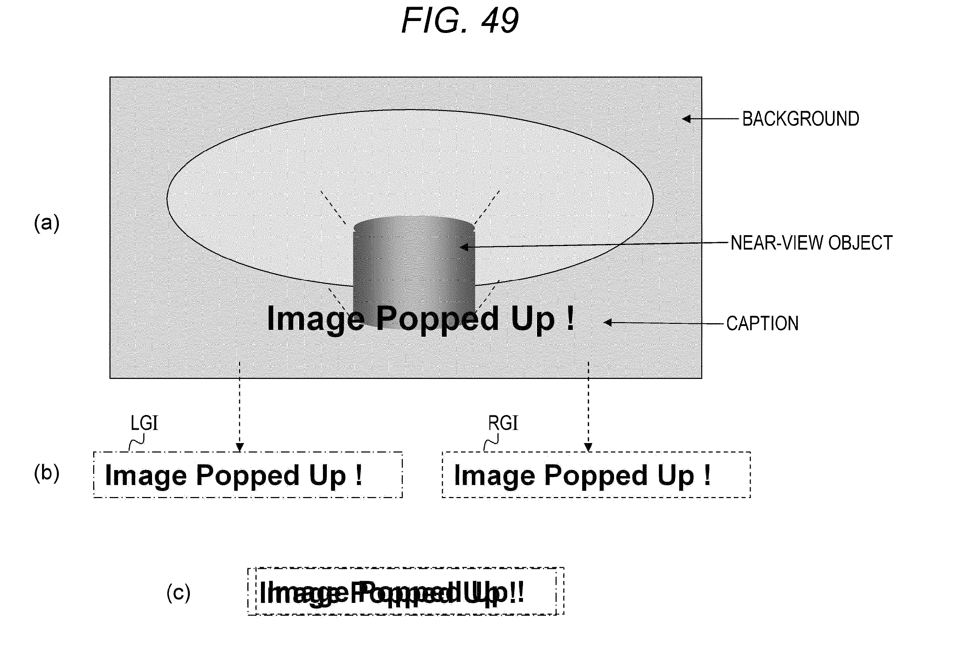

Fig. 49(a) illustrates an example of the display of a subtitle (caption) on an image as in Fig. 48(a). Fig. 49(b) illustrates a left-eye caption LGI superimposed on a left-eye image and a right-eye caption RGI superimposed on a right-eye image. Fig. 49(c) illustrates that a disparity is provided between the left-eye caption LGI and the right-eye caption RGI so that the caption is recognized at the frontmost position.

Also, when the set-top box 200 is a legacy 2D-compatible device (2D STB), the bit stream processing unit 201 acquires stereoscopic image data, audio data, and subtitle data (bit map pattern data that does not include display control information) from the transport stream TS. The bit stream processing unit 201 uses the stereoscopic image data and the subtitle data to generate 2D image data on which the subtitle is superimposed (see Fig. 47).

In this case, in either of First Type and Second Type, the bit stream processing unit 201 acquires the respective segment data constituting the subtitle data from the 2D stream. That is, in this case, since the DSS segment is not read from the 3D extension stream or the 3D stream, the reception processing can be prevented from being interrupted by the reading.

[Example of Configuration of Set-top Box]

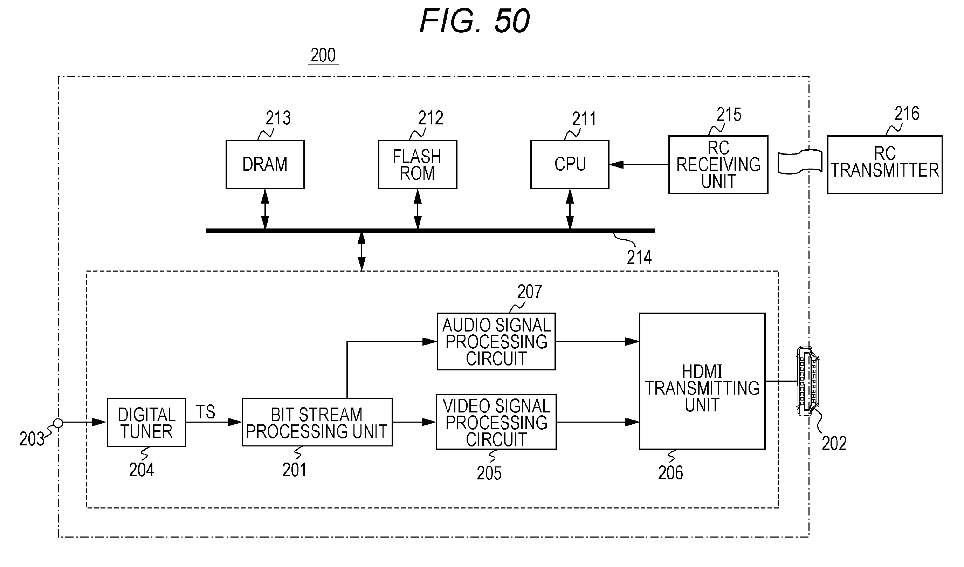

An example of the configuration of the set-top box 200 will be described. Fig. 50 illustrates an example of the configuration of the set-top box 200. The set-top box 200 includes a bit stream processing unit 201, an HDMI terminal 202, an antenna terminal 203, a digital tuner 204, a video signal processing circuit 205, an HDMI transmitting unit 206, and an audio signal processing circuit 207. Also, the set-top box 200 includes a CPU 211, a flash ROM 212, a DRAM 213, an internal bus 214, a remote control receiving unit (RC receiving unit) 215, and a remote control transmitter (RC transmitter) 216.

The antenna terminal 203 is a terminal that is configured to input a television broadcast signal received through a reception antenna (not illustrated). The digital tuner 204 processes the television broadcast signal input to the antenna terminal 203, and outputs a transport stream TS (bit stream data) corresponding to a channel selected by a user.

Based on the transport stream TS, the bit stream processing unit 201 outputs audio data and output stereoscopic image data on which a subtitle is superimposed. When the set-top box 200 is a 3D-compatible device (3D STB), the bit stream processing unit 201 acquires stereoscopic image data, audio data, and subtitle data (including display control information) from the transport stream TS.

The bit stream processing unit 201 generates output stereoscopic image data by superimposing the subtitle on a left-eye image frame (frame0) portion and a right-eye image frame (frame1) portion constituting the stereoscopic image data (see Fig. 46). Herein, based on the disparity information, a disparity is provided between a subtitle superimposed on the left-eye image (left-eye subtitle) and a subtitle superimposed on the right-eye image (right-eye subtitle).

That is, the bit stream processing unit 201 generates region display data for displaying a subtitle, based on the subtitle data. The bit stream processing unit 201 obtains output stereoscopic image data by superimposing the region display data on a left-eye image frame (frame0) portion and a right-eye image frame (frame1) portion constituting the stereoscopic image data. Herein, the bit stream processing unit 201 shifts the positions of the respective superimposed display data based on the disparity information.

Also, when the set-top box 200 is a 2D-compatible device (2D STB), the bit stream processing unit 201 acquires stereoscopic image data, audio data, and subtitle data (not including display control information). The bit stream processing unit 201 uses the stereoscopic image data and the subtitle data to generate 2D image data on which the subtitle is superimposed (see Fig. 47).

That is, the bit stream processing unit 201 generates region display data for displaying a subtitle, based on the subtitle data. The bit stream processing unit 201 obtains output 2D image data by superimposing the region display data on the 2D image data that has been obtained by performing the processing according to the transmission scheme on the stereoscopic image data.

The video signal processing circuit 205 performs image quality adjustment processing on the image data, which has been obtained by the bit stream processing unit 201, as necessary, and supplies the processed image data to the HDMI transmitting unit 206. The audio signal processing circuit 207 performs sound quality adjustment processing on the audio data, which has been output from the bit stream processing unit 201, as necessary, and supplies the processed audio data to the HDMI transmitting unit 206.

The HDMI transmitting unit 206 transmits, for example, uncompressed image data and audio data to the HDMI terminal 202 by HDMI-based communication. In this case, being transmitted on an HDMI TMDS channel, the image data and audio data are packed and output from the HDMI transmitting unit 206 to the HDMI terminal 202.

The CPU 211 controls an operation of each unit of the set-top box 200. The flash ROM 212 stores control software and data. The DRAM 213 constitutes a work area of the CPU 211. The CPU 211 deploys the software or data read from the flash ROM 212 on the DRAM 213 and activates the software to control each unit of the set-top box 200.

The RC receiving unit 215 receives a remote control signal (remote control code) transmitted from the RC transmitter 216, and supplies the received remote control signal to the CPU 211. The CPU 211 controls each unit of the set-top box 200 based on the remote control code. The CPU 211, the flash ROM 212, and the DRAM 213 are connected to the internal bus 214.

An operation of the set-top box 200 will be described briefly. The television broadcast signal input to the antenna terminal 203 is supplied to the digital tuner 204. The digital tuner 204 processes the television broadcast signal and outputs a transport stream TS (bit stream data) corresponding to a channel selected by the user.

The transport stream TS (bit stream data) output from the digital tuner 204 is supplied to the bit stream processing unit 201. The bit stream processing unit 201 generates output image data to be output to the television receiver 300 as follows.

When the set-top box 200 is a 3D-compatible device (3D STB), stereoscopic image data, audio data, and subtitle data (including display control information) are acquired from the transport stream TS. The bit stream processing unit 201 generates output stereoscopic image data by superimposing the subtitle on a left-eye image frame (frame0) portion and a right-eye image frame (frame1) portion constituting the stereoscopic image data. Herein, based on the disparity information, a disparity is provided between a left-eye subtitle superimposed on a left-eye image and a right-eye subtitle superimposed on a right-eye image.

Also, when the set-top box 200 is a 2D-compatible device (2D STB), stereoscopic image data, audio data, and subtitle data (not including display control information) are acquired. The bit stream processing unit 201 uses the stereoscopic image data and the subtitle data to generate 2D image data on which the subtitle is superimposed.

The output image data obtained by the bit stream processing unit 201 is supplied to the video signal processing circuit 205. The video signal processing circuit 205 performs image quality adjustment processing on the output image data as necessary. The processed image data output from the video signal processing circuit 205 is supplied to the HDMI transmitting unit 206.

Also, the audio data obtained by the bit stream processing unit 201 is supplied to the audio signal processing circuit 207. The audio signal processing circuit 207 performs sound quality adjustment processing on the audio data as necessary. The processed audio data output from the audio signal processing circuit 207 is supplied to the HDMI transmitting unit 206. The image data and the audio data supplied to the HDMI transmitting unit 206 are transmitted through an HDMI TMDS channel from the HDMI terminal 202 to the HDMI cable 400.

[Example of Configuration of Bit Stream Processing Unit]

Fig. 51 illustrates an example of the configuration of the bit stream processing unit 201 in the case where the set-top box 200 is a 3D-compatible device (3D STB). The bit stream processing unit 201 has a configuration corresponding to the transmission data generating unit 110 illustrated in Fig. 2 described above. The bit stream processing unit 201 includes a demultiplexer 221, a video decoder 222, and an audio decoder 229.

Also, the bit stream processing unit 201 includes an encoded data buffer 223, a subtitle decoder 224, a pixel buffer 225, a disparity information interpolating unit 226, a position control unit 227, and a video superimposing unit 228. Herein, the encoded data buffer 223 constitutes a decoding buffer.

The demultiplexer 221 extracts a video data stream packet and an audio data stream packet from the transport stream TS, and provides the extracted packets to the respective decoders for decoding. In addition, the demultiplexer 221 extracts the following streams and temporarily stores the extracted streams in the encoded data buffer 223. In this case, the demultiplexer 221 extracts a 2D stream and a 3D extension stream in First Type, and extracts a 3D stream in Second Type.

In First Type, the CPU 211 recognizes the necessity to decode both PES streams based on the value of "composition_page_id" in the subtitle descriptor disposed in the ES loop inside the PMT in association with the 2D stream and the 3D extension stream. That is, when the value of "composition_page_id" is equal, it means that both PES streams are decoded. Alternatively, when the value of "composition_page_id" is equal and special value (predefined), it means that both PES streams are decoded.

Also, in First Type, it can also be considered that a descriptor associating two streams, which indicates the necessity to decode both of the two PES streams (2D stream and 3D extension stream), is newly defined, and the descriptor is disposed at a predetermined position. By the descriptor, the CPU 211 recognizes the necessity to decode both of the PES streams, and controls the bit stream processing unit 201.

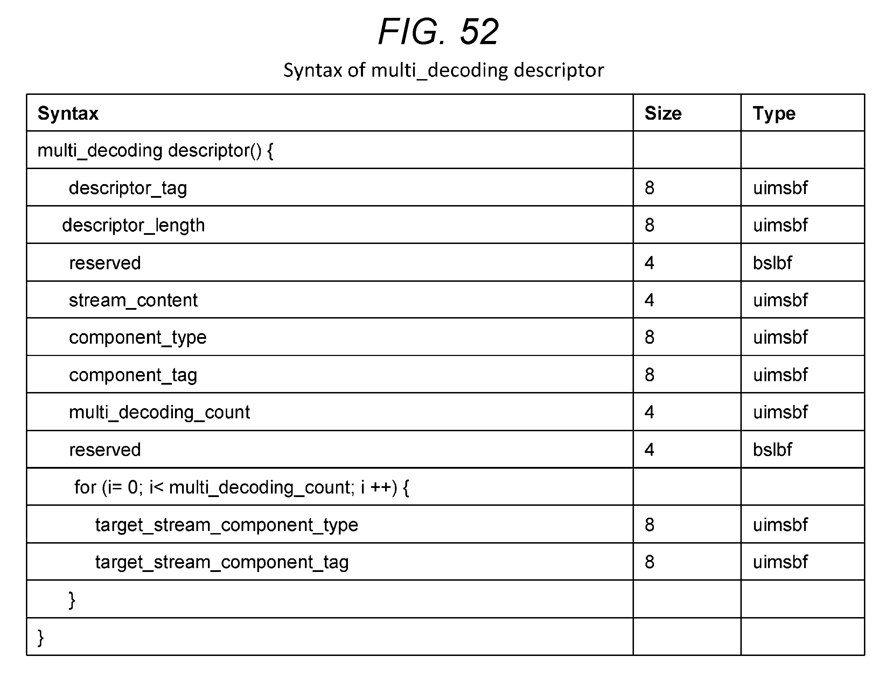

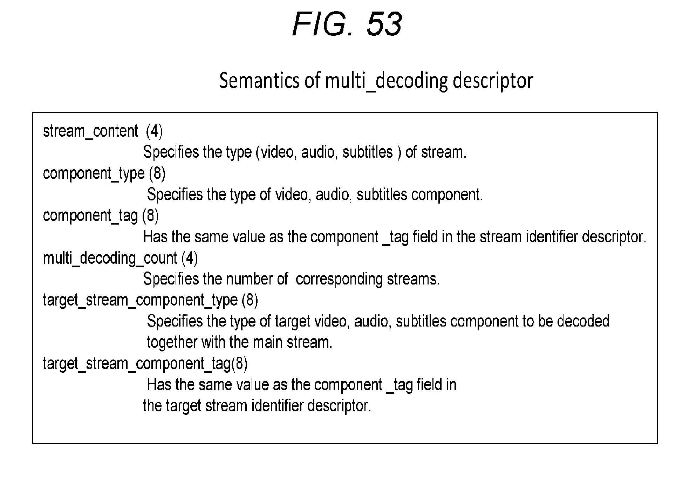

Fig. 52 illustrates an example of the syntax of a multi-decoding descriptor that can be used to associate a 2D stream with a 3D extension stream. Fig. 53 illustrates the main information contents (semantics) in the syntax example.

An 8-bit field of "descriptor_tag" indicates that the descriptor is a multi-decoding descriptor. An 8-bit field of "descriptor_length" represents the entire byte size following the field.

A 4-bit field of "stream_content" represents the stream type of a main stream such as a video, an audio, and a subtitle. A 4-bit field of "component_type" represents the component type of a main stream such as a video, an audio, and a subtitle. The "stream_content" and "component_type" are the same information as the "stream content" and "component_type" in the component descriptor corresponding to the main stream.

In this embodiment, the main stream is a 2D stream, the "stream_content" is a subtitle "subtitle", and the "component_type" is a two-dimensional "2D".

The "component_tag" has the same value as the "component_tag" in the stream_identifier descriptor corresponding to the main stream. Accordingly, the stream_identifier descriptor and the multi-decoding descriptor are associated with the "component_tag".

A 4-bit field of "multi_decoding_count" represents the number of target streams associated with the main stream. In this embodiment, the target stream associated with the 2D stream being the main stream is the 3D extension stream, and "multi_decoding_count" is "1".

An 8-bit field of "target_stream_component_type" represents the stream type of a stream added to the main stream, such as a video, an audio, and a subtitle. A 4-bit field of "component_type" represents the component type of a target stream. Also, an 8-bit field of "target_stream_component_tag" has the same value as the "component_tag" in the stream_identifier descriptor corresponding to the target stream.

In this embodiment, the target stream is the 3D extension stream, the "target_stream_component_type" is a three-dimensional "3D", and the "target_stream_component_tag" has the same value as the "component_tag" of the 3D extension stream.

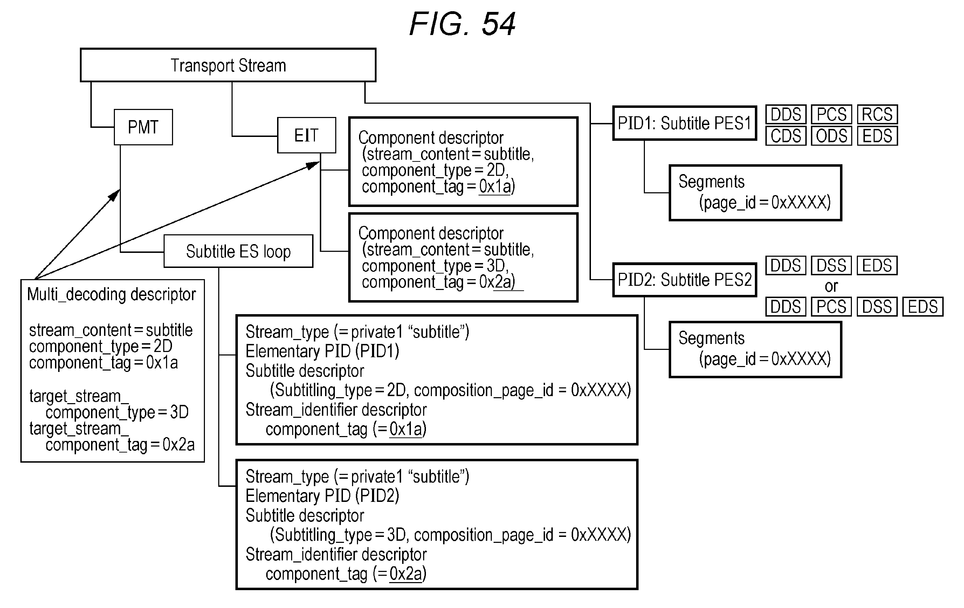

The multi-decoding descriptor is disposed, for example, under the PMT or in the EIT. Fig. 54 illustrates an example of the configuration of a transport stream TS of First Type in the case where the multi-decoding descriptor is disposed.

Returning to Fig. 51, the video decoder 222 performs opposite processing to the video encoder 112 of the transmission data generating unit 110 described above. That is, the video decoder 222 reconstructs a video data stream from the video packet extracted by the demultiplexer 221, performs encoding processing, and obtains stereoscopic image data including left-eye image data and right-eye image data. Examples of the transmission format of the stereoscopic image data include a Side By Side scheme, a Top & Bottom scheme, a Frame Sequential scheme, and a video transmission format scheme in which each view occupies a full-screen size.

The subtitle decoder 224 performs opposite processing to the subtitle encoder 125 of the transmission data generating unit 110 described above. That is, the subtitle decoder 224 reconstructs each stream from each stream packet stored in the encoded data buffer 223, and performs decoding processing. Under the control of the CPU 211, when the decoding time stamp DTS is encoded into the PES packet of the 3D extension stream or the 3D stream, the subtitle decoder 224 reads the corresponding PES packet from the encoded data buffer 223 at that timing, and starts the decoding processing.

The subtitle decoder 224 acquires each segment data constituting the subtitle data, and also acquires DSS segment data. The subtitle decoder 224 obtains display control information (such as disparity information and region information of a subregion) based on the DSS segment data.

Based on the respective segment data and the subregion region information constituting the subtitle data, the subtitle decoder 224 generates region display data (bit map data) for displaying the subtitle. Herein, a transparent color is allocated to a region that is located in the region and is not surrounded by subregions. The pixel buffer 225 temporarily stores the display data.

The video superimposing unit 228 obtains output stereoscopic image data Vout. In this case, the video superimposing unit 228 superimposes the display data stored in the pixel buffer 225, on a left-eye image frame (frame0) portion and a right-eye image frame (frame1) portion of the stereoscopic image data obtained by the video decoder 222. In this case, the video superimposing unit 228 changes the superimposition position, the size, and the like appropriately according to a transmission scheme of the stereoscopic image data (such as a Side By Side scheme, a Top & Bottom scheme, a Frame Sequential scheme, or an MVC scheme). The video superimposing unit 228 outputs the output stereoscopic image data Vout to the outside of the bit stream processing unit 201.

The disparity information interpolating unit 226 provides the disparity information obtained by the subtitle decoder 224 to the position control unit 227. As necessary, the disparity information interpolating unit 226 performs interpolation processing on the disparity information to be provided to the position control unit 227. The position control unit 227 shifts the position of the display data superimposed on each frame, based on the disparity information (see Fig. 46). In this case, based on the disparity information, the position control unit 227 provides a disparity by shifting the display data (caption pattern data) superimposed on the left-eye image frame (frame0) portion and the right-eye image frame (frame1) portion to be in opposite directions.

Also, the display control information includes disparity information that is commonly used in the caption display period. Also, the display control information may include disparity information that is sequentially updated in the caption display period. As described above, the disparity information sequentially updated in the caption display period includes disparity information of the initial frame of the caption display period and disparity information of a frame for each of the subsequent update frame intervals.

As for the disparity information commonly used in the caption display period, the position control unit 227 uses the disparity information without change. On the other hand, as for the disparity information sequentially updated in the caption display period, the position control unit 227 uses the disparity information interpolated by the disparity information interpolating unit 226 as necessary. For example, the disparity information interpolating unit 226 generates disparity information of an arbitrary frame interval in the caption display period, for example, disparity information of a 1-frame interval.

As the interpolation processing, the disparity information interpolating unit 226 performs not linear interpolation processing but interpolation processing accompanied with low-pass filter (LPF) processing in the time direction (frame direction), for example. Accordingly, a change in the disparity information of a predetermined frame interval in the time direction (frame direction) after the interpolation processing becomes smooth.

Also, the audio decoder 229 performs opposite processing to the audio encoder 113 of the transmission data generating unit 110 described above. That is, the audio decoder 229 reconstructs an audio elementary stream from the audio packet extracted by the demultiplexer 221, performs encoding processing, and obtains output audio data Aout. The audio decoder 229 outputs the output audio data Aout to the outside of the bit stream processing unit 201.

An operation of the bit stream processing unit 201 illustrated in Fig. 51 will be described briefly. The transport stream TS output from the digital tuner 204 (see Fig. 50) is supplied to the demultiplexer 221. The demultiplexer 221 extracts a video data stream packet and an audio data stream packet from the transport stream TS, and supplies the extracted packets to the respective decoders. Also, a 2D stream packet and a 3D extension stream packet or a 3D stream packet are extracted by the demultiplexer 221, and the extracted packets are temporarily stored in the encoded data buffer 223.

The video decoder 222 reconstructs a video data stream from the video data packet extracted by the demultiplexer 221, performs decoding processing, and obtains stereoscopic image data including left-eye image data and right-eye image data. The stereoscopic image data is supplied to the video superimposing unit 228.

The subtitle decoder 224 reads the 2D stream packet and the 3D extension stream packet or the 3D stream packet from the encoded data buffer 223, and decodes the read packet. Based on the respective segment data and the subregion region information constituting the subtitle data, the subtitle decoder 224 generates region display data (bit map data) for displaying the subtitle.

The display data is temporarily stored in the pixel buffer 225. Herein, when the DTS is encoded into the PES packet of the 3D extension stream or the 3D stream, the subtitle decoder 224 reads the corresponding PES packet from the encoded data buffer 223 at that timing, and starts decoding processing.

The video superimposing unit 228 superimposes the display data stored in the pixel buffer 225, on the left-eye image frame (frame0) portion and the right-eye image frame (frame1) portion of the stereoscopic image data obtained by the video decoder 222. In this case, the superimposition position, the size, and the like are changed appropriately according to a transmission scheme of the stereoscopic image data (such as a Side By Side scheme, a Top & Bottom scheme, a Frame Sequential scheme, or an MVC scheme). The output stereoscopic image data Vout obtained by the video superimposing unit 228 is output to the outside of the bit stream processing unit 201.

Also, the disparity information obtained by the subtitle decoder 224 is provided through the disparity information interpolating unit 226 to the position control unit 227. The disparity information interpolating unit 226 performs interpolation processing as necessary. For example, as for the disparity information at several-frame intervals sequentially updated in the caption display period, interpolation processing is performed by the disparity information interpolating unit 226 as necessary, to generate disparity information of an arbitrary frame interval, for example, a 1-frame interval.

Based on the disparity information, the position control unit 227 shifts the display data (caption pattern data) superimposed on the left-eye image frame (frame0) portion and the right-eye image frame (frame1) portion by the video superimposing unit 228, such that they are in opposite directions. Accordingly, a disparity is provided between a left-eye subtitle displayed on the left-eye image and a right-eye subtitle displayed on the right-eye image. Accordingly, the 3D display of a subtitle (caption) is implemented according to the contents of a stereoscopic image.

Also, the audio decoder 229 reconstructs an audio elementary stream from the audio packet extracted by the demultiplexer 221, performs decoding processing, and obtains audio data Aout corresponding to the above stereoscopic image data Vout for display. The audio data Aout is output to the outside of the bit stream processing unit 201.

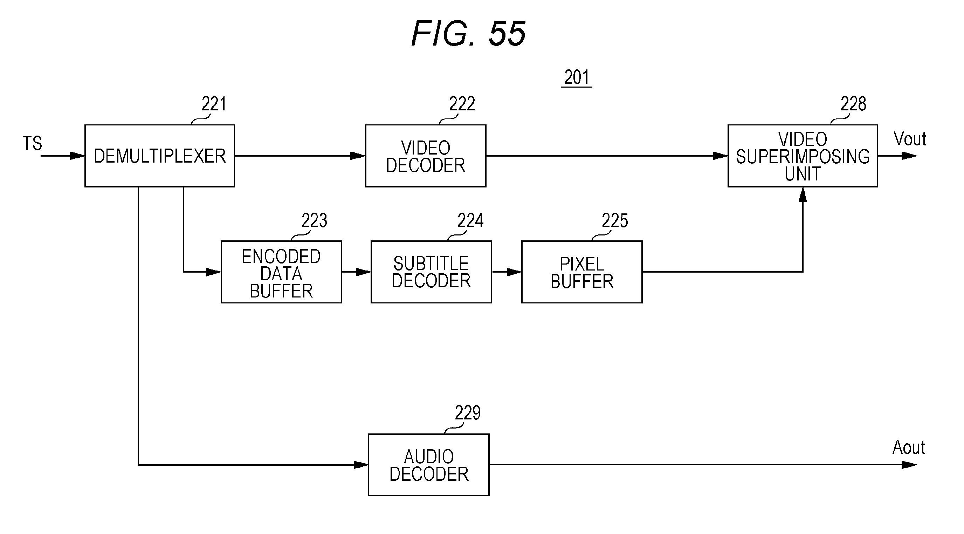

Fig. 55 illustrates an example of the configuration of the bit stream processing unit 201 in the case where the set-top box 200 is a 2D-compatible device (2D STB). In Fig. 55, the units corresponding to those of Fig. 51 are denoted by like reference numerals, and a detailed description thereof will be omitted. Hereinafter, for the convenience of description, the bit stream processing unit 201 illustrated in Fig. 51 will be referred to as the 3D-compatible bit stream processing unit 201, and the bit stream processing unit 201 illustrated in Fig. 55 will be referred to as the 2D-compatible bit stream processing unit 201.

In the 3D-compatible bit stream processing unit 201 illustrated in Fig. 51, the video decoder 222 reconstructs a video data stream from the video packet extracted by the demultiplexer 221, performs decoding processing, and obtains stereoscopic image data including left-eye image data and right-eye image data. On the other hand, in the 2D-compatible bit stream processing unit 201 illustrated in Fig. 55, the video decoder 222 acquires stereoscopic image data, cuts out left-eye image data or right-eye image data, and performs scaling processing as necessary, to obtain 2D image data.

Also, in the 3D-compatible bit stream processing unit 201 illustrated in Fig. 51, the demultiplexer 221 extracts a 2D stream packet and a 3D extension stream packet in First Type as described above, extracts a 3D stream packet in Second Type, and provides the extracted stream packet to the subtitle decoder 224 through the encoded data buffer 223. On the other hand, in the 2D-compatible bit stream processing unit 201 illustrated in Fig. 55, the demultiplexer 221 extracts only a 2D stream packet in either of First Type and Second Type, and provides the extracted stream packet to the subtitle decoder 224 through the encoded data buffer 223.

Also, in the 3D-compatible bit stream processing unit 201 illustrated in Fig. 51, the subtitle decoder 224 acquires the respective segment data constituting the subtitle data, for example, from the 2D stream as described above, and acquires the DSS segment data from the 3D extension stream. Alternatively, the subtitle decoder 224 acquires the respective segment data constituting the subtitle data from the 3D stream, and also acquires the DSS segment data.

On the other hand, in the 2D-compatible bit stream processing unit 201 illustrated in Fig. 55, the subtitle decoder 224 acquires only the respective segment data constituting the subtitle data from the 2D stream. Based on the respective segment data and the subregion region information, the subtitle decoder 224 generates region display data (bit map data) for displaying the subtitle, and temporarily stores the generated data in the pixel buffer 225. In this case, the subtitle decoder 224 does not read the DSS segment data. Therefore, the reception processing can be prevented from being interrupted by the reading.

Also, in the 3D-compatible bit stream processing unit 201 illustrated in Fig. 51, the video superimposing unit 228 obtains output stereoscopic image data Vout and outputs the output stereoscopic image data Vout to the outside of the bit stream processing unit 201. In this case, the video superimposing unit 228 obtains the output stereoscopic image data Vout by superimposing the display data stored in the pixel buffer 225, on the left-eye image frame (frame0) portion and the right-eye image frame (frame1) portion of the stereoscopic image data obtained by the video decoder 222. Based on the disparity information, the position control unit 227 shifts the display data to be in opposite directions, and provides a disparity between the left-eye subtitle displayed on the left-eye image and the right-eye subtitle displayed on the right-eye image.

On the other hand, in the 2D-compatible bit stream processing unit 201 illustrated in Fig. 55, the video superimposing unit 228 obtains output 2D image data Vout by superimposing the display data stored in the pixel buffer 225 on the 2D image data obtained by the video decoder 222. The video superimposing unit 228 outputs the output 2D image data Vout to the outside of the bit stream processing unit 201.

An operation of the 2D bit stream processing unit 201 illustrated in Fig. 55 will be described briefly. Also, since an operation of the audio system is the same as that of the 3D bit stream processing unit 201 illustrated in Fig. 51, a description thereof will be omitted.

The transport stream TS output from the digital tuner 204 (see Fig. 50) is supplied to the demultiplexer 221. The demultiplexer 221 extracts a video data stream packet and an audio data stream packet from the transport stream TS, and supplies the extracted packets to the respective decoders. Also, a 2D stream packet is extracted by the demultiplexer 221, and the extracted packet is temporarily stored in the encoded data buffer 223.

The video decoder 222 reconstructs a video data stream from the video data packet extracted by the demultiplexer 221, performs decoding processing, and obtains stereoscopic image data including left-eye image data and right-eye image data. The video decoder 222 cuts out the left-eye image data or the right-eye image data from the stereoscopic image data, and performs scaling processing as necessary, to obtain 2D image data. The 2D image data is supplied to the video superimposing unit 228.

Also, the subtitle decoder 224 reads the 2D stream from the encoded data buffer 223 and decodes the same. Based on the respective segment data constituting the subtitle data, the subtitle decoder 224 generates region display data (bit map data) for displaying the subtitle. The display data is temporarily stored in the pixel buffer 225.

The video superimposing unit 228 obtains output 2D image data Vout by superimposing the display data (bit map data) of the subtitle on the 2D image data obtained by the video decoder 222. The output 2D image data Vout is output to the outside of the bit stream processing unit 201.

In the set-top box 200 illustrated in Fig. 50, the transport stream TS output from the digital tuner 204 includes display control information in addition to stereoscopic image data and subtitle data. The display control information includes display control information such as disparity information and region information of a subregion. Therefore, a disparity can be provided to the display positions of the left-eye subtitle and the right-eye subtitle. Accordingly, in the display of a subtitle (caption), the consistency of a perspective between respective objects in an image can be maintained in an optimal state.

Also, in the set-top box 200 illustrated in Fig. 50, when the display control information acquired by the subtitle decoder 224 of the 3D-compatible bit stream processing unit 201 (see Fig. 51) includes the disparity information sequentially updated in the caption display period, the display positions of the left-eye subtitle and the right-eye subtitle can be dynamically controlled. Accordingly, the disparity provided between the left-eye subtitle and the right-eye subtitle can be dynamically changed in conjunction with a change in the image content.

Also, in the set-top box 200 illustrated in Fig. 50, the disparity information interpolating unit 226 of the 3D bit stream processing unit 201 (see Fig. 51) performs interpolation processing on disparity information of a plurality of frames constituting the disparity information that is sequentially updated in the caption display period (the period of a predetermined number of fames). In this case, even when disparity information is transmitted from the transmitting side at intervals of an update frame, the disparity provided between the left-eye subtitle and the right-eye subtitle can be controlled at fine intervals, for example, every frame.

Also, in the set-top box 200 illustrated in Fig. 50, the interpolation processing in the disparity information interpolating unit 226 of the 3D bit stream processing unit 201 (see Fig. 51) may be accompanied with, for example, low-pass filter processing in the time direction (frame direction). Therefore, even when disparity information is transmitted from the transmitting side at intervals of an update frame, a change in the disparity information in the time direction after the interpolation processing can be made smooth. Accordingly, it is possible to suppress a sense of discomfort that may be caused when a shift of the disparity provided between the left-eye subtitle and the right-eye subtitle becomes discontinuous every frame interval.

In addition, although not described above, when the set-top box 200 is a 3D-compatible device, the user may select a 2D display mode or a 3D display mode. In this case, when the 3D display mode is selected, the bit stream processing unit 201 may have the same configuration and operation as the 3D-compatible bit stream processing unit 201 described above (see Fig. 51). On the other hand, when the 2D display mode is selected, the bit stream processing unit 201 may have substantially the same configuration and operation as the 2D-compatible bit stream processing unit 201 described above (see Fig. 55) .

[Description of Television Receiver]

Returning to Fig. 1, when being a 3D-compatible device, the television receiver 300 receives stereoscopic image data that is transmitted from the set-top box 200 through the HDMI cable 400. The television receiver 300 includes a 3D signal processing unit 301. The 3D signal processing unit 301 performs processing corresponding to the transmission format (decoding processing) on the stereoscopic image data to generate left-eye image data and right-eye image data.

[Example of Configuration of Television Receiver]

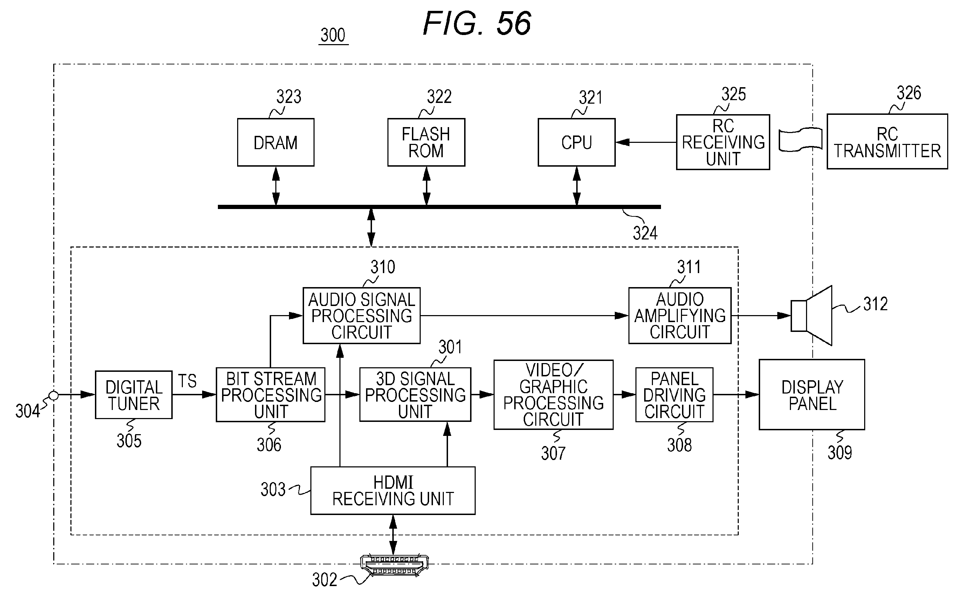

An example of the configuration of a 3D-compatible television receiver 300 will be described. Fig. 56 illustrates an example of the configuration of the television receiver 300. The television receiver 300 includes a 3D signal processing unit 301, an HDMI terminal 302, an HDMI receiving unit 303, an antenna terminal 304, a digital tuner 305, and a bit stream processing unit 306.

Also, the television receiver 300 includes a video/graphic processing circuit 307, a panel driving circuit 308, a display panel 309, an audio signal processing circuit 310, an audio amplifying circuit 311, and a speaker 312. Also, the television receiver 300 includes a CPU 321, a flash ROM 322, a DRAM 323, an internal bus 324, a remote control receiving unit (RC receiving unit) 325, and a remote control transmitter (RC transmitter) 326.

The antenna terminal 304 is a terminal that is configured to input a television broadcast signal received through a reception antenna (not illustrated). The digital tuner 305 processes the television broadcast signal input to the antenna terminal 304, and outputs a transport stream TS (bit stream data) corresponding to a channel selected by a user.

Based on the transport stream TS, the bit stream processing unit 306 outputs audio data and output stereoscopic image data on which a subtitle is superimposed. Although not described in detail, for example, the bit stream processing unit 201 has the same configuration as the 3D-compatible bit stream processing unit 201 (see Fig. 51) of the set-top box 200 described above. With respect to stereoscopic image data, the bit stream processing unit 306 synthesizes display data of a left-eye subtitle and a right-eye subtitle, and generates and outputs output stereoscopic image data superimposed with a subtitle.

Also, for example, when a transmission scheme of the stereoscopic image data is a Side By Side scheme, a Top & Bottom scheme, or the like, the bit stream processing unit 306 performs scaling processing to output full-resolution left-eye image data and right-eye image data. Also, the bit stream processing unit 306 outputs audio data corresponding to the image data.

The HDMI receiving unit 303 receives uncompressed image data and audio data supplied through the HDMI cable 400 to the HDMI terminal 302, by HDMI-based communication. The HDMI receiving unit 303 has a version of, for example, HDMI 1.4a, and thus can process stereoscopic image data.

The 3D signal processing unit 301 performs decoding processing on the stereoscopic image data received by the HDMI receiving unit 303, to generate full-resolution left-eye image data and right-eye image data. The 3D signal processing unit 301 performs the decoding processing corresponding to a TMDS transmission data format. Also, the 3D signal processing unit 301 does not perform any processing on the full-resolution left-eye image data and right-eye image data obtained by the bit stream processing unit 306.

The video/graphic processing circuit 307 generates image data for displaying a stereoscopic image, based on the left-eye image data and right-eye image data generated by the 3D signal processing unit 301. Also, the video/graphic processing circuit 307 performs image quality adjustment processing on the image data as necessary.

Also, with respect to the image data, the video/graphic processing circuit 307 synthesizes superimposition information data such as a menu or a program as necessary. The panel driving circuit 308 drives the display panel 309 based on the image data output from the video/graphic processing circuit 307. The display panel 309 includes, for example, an LCD (Liquid Crystal Display), a PDP (Plasma Display Panel), or the like.

The audio signal processing circuit 310 performs necessary processing such as D/A conversion on the audio data that is received by the HDMI receiving unit 303 or is obtained by the bit stream processing unit 306. The audio amplifying circuit 311 amplifies an audio signal output from the audio signal processing circuit 310, and supplies the amplified audio signal to the speaker 312.

The CPU 321 controls an operation of each unit of the television receiver 300. The flash ROM 322 stores control software and data. The DRAM 323 constitutes a work area of the CPU 321. The CPU 321 deploys the software or data read from the flash ROM 322 on the DRAM 323 and activates the software to control each unit of the television receiver 300.

The RC receiving unit 325 receives a remote control signal (remote control code) transmitted from the RC transmitter 326, and supplies the received remote control signal to the CPU 321. The CPU 321 controls each unit of the television receiver 300 based on the remote control code. The CPU 321, the flash ROM 322, and the DRAM 323 are connected to the internal bus 324.

An operation of the television receiver 300 illustrated in Fig. 56 will be described briefly. The HDMI receiving unit 303 receives stereoscopic image data and audio data transmitted from the set-top box 200 connected through the HDMI cable 400 to the HDMI terminal 302. The stereoscopic image data received by the HDMI receiving unit 303 is supplied to the 3D signal processing unit 301. Also, the audio data received by the HDMI receiving unit 303 is supplied to the audio signal processing circuit 310.

The television broadcast signal input to the antenna terminal 304 is supplied to the digital tuner 305. The digital tuner 305 processes the television broadcast signal and outputs a transport stream TS (bit stream data) corresponding to a channel selected by the user. The transport stream TS is supplied to the bit stream processing unit 306.

Based on the video data stream, the audio data stream, the 2D stream, the 3D extension stream, and the 3D stream, the bit stream processing unit 306 obtains audio data and output stereoscopic image data superimposed with the subtitle. In this case, with respect to the stereoscopic image data, display data of the left-eye subtitle and the right-eye subtitle are synthesized to generate output stereoscopic image data superimposed with the subtitle (full-resolution left-eye image data and right-eye image data). The output stereoscopic image data is supplied through the 3D signal processing unit 301 to the video/graphic processing circuit 307.

The 3D signal processing unit 301 performs decoding processing on the stereoscopic image data received by the HDMI receiving unit 303, to generate full-resolution left-eye image data and right-eye image data. The left-eye image data and the right-eye image data are supplied to the video/graphic processing circuit 307. The video/graphic processing circuit 307 generates image data for displaying a stereoscopic image based on the left-eye image data and the right-eye image data, and also performs superimposition information data synthesizing processing such as image quality adjustment processing and OSD (On Screen Display) processing as necessary.

The image data obtained by the video/graphic processing circuit 307 is supplied to the panel driving circuit 308. Therefore, a stereoscopic image is displayed by the display panel 309. For example, the display panel 309 alternately displays a left-eye image corresponding to the left-eye image data and a right-eye image corresponding to the right-eye image data in a time-division manner. By wearing, for example, shutter glasses having a left-eye shutter and a right-eye shutter that are opened alternately in synchronization with the display of the display panel 309, a viewer can view only a left-eye image with a left eye and can view only a right-eye image with a right eye, thus recognizing a stereoscopic image.

Also, the audio data obtained by the bit stream processing unit 306 is supplied to the audio signal processing circuit 310. The audio signal processing circuit 310 performs necessary processing such as D/A conversion on the audio data that is received by the HDMI receiving unit 303 or is obtained by the bit stream processing unit 306. The audio data is amplified by the audio amplifying circuit 311, and the amplified audio data is supplied to the speaker 312. Therefore, a sound corresponding to the display image of the display panel 309 is output from the speaker 312.

In addition, Fig. 56 illustrates the 3D-compatible television receiver 300 as described above. Although not described in detail, the legacy 2D-compatible television receiver has substantially the same configuration. However, in the case of the legacy 2D-compatible television receiver, the bit stream processing unit 306 has the same configuration and operation as the above 2D-compatible bit stream processing unit 201 illustrated in Fig. 55. Also, in the case of the legacy 2D-compatible television receiver, the 3D signal processing unit 301 is unnecessary.

Also, in the case of the 3D-compatible television receiver 300, the user may select a 2D display mode or a 3D display mode. In this case, when the 3D display mode is selected, the bit stream processing unit 306 has the same configuration and operation as described above. On the other hand, when the 2D display mode is selected, the bit stream processing unit 306 has the same configuration and operation as the above 2D-compatible bit stream processing unit 201 illustrated in Fig. 55.

<2. Modification>

In addition, Fig. 50 illustrates that the set-top box 200 is provided with the antenna input terminal 203 connected to the digital tuner 204. However, a set-top box receiving an RF signal transmitted through a cable may also be configured in the same manner. In this case, a cable terminal is provided instead of the antenna terminal 203.

Also, a set-top box, to which the internet and a home network are connected directly or through a router, may also be configured in the same manner. In this case, the above-described transport stream TS is transmitted from the internet and the home network to the set-top box directly or through the router.

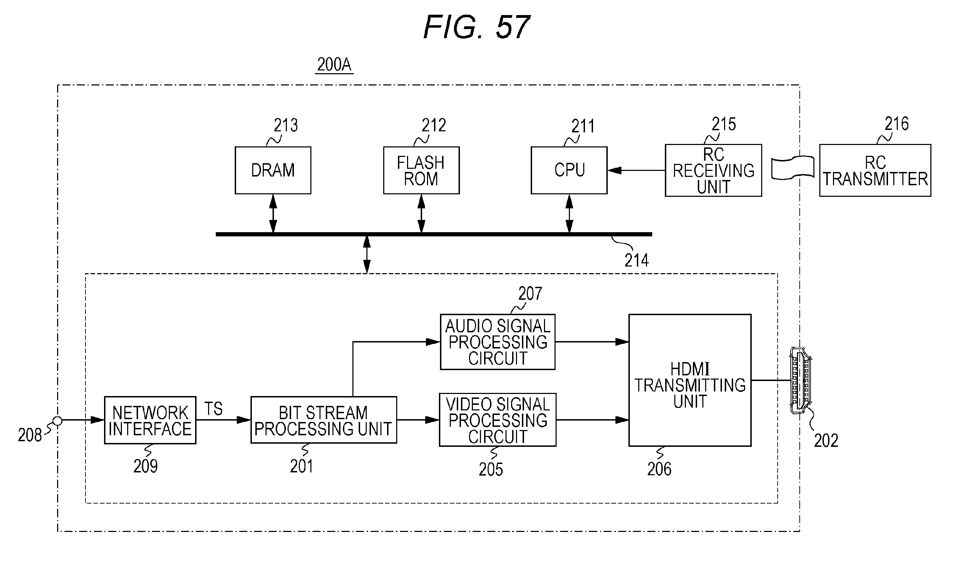

Fig. 57 illustrates an example of the configuration of a set-top box 200A in that case. In Fig. 57, the units corresponding to those of Fig. 50 are denoted by like reference numerals. The set-top box 200A includes a network terminal 208 connected to a network interface 209. A transport stream TS is output from the network interface 209 and then supplied to the bit stream processing unit 201. Although not described in detail, the other units of the set-top box 200A have the same configurations and operations as the corresponding units of the set-top box 200 illustrated in Fig. 50.

Also, Fig. 56 illustrates that the television receiver 300 is provided with the antenna input terminal 304 connected to the digital tuner 204. However, a television receiver receiving an RF signal transmitted through a cable may also be configured in the same manner. In this case, a cable terminal is provided instead of the antenna terminal 304.

Also, a television receiver, to which the internet and a home network are connected directly or through a router, may also be configured in the same manner. In this case, the above-described transport stream TS is transmitted from the Internet and the home network to the television receiver directly or through the router.

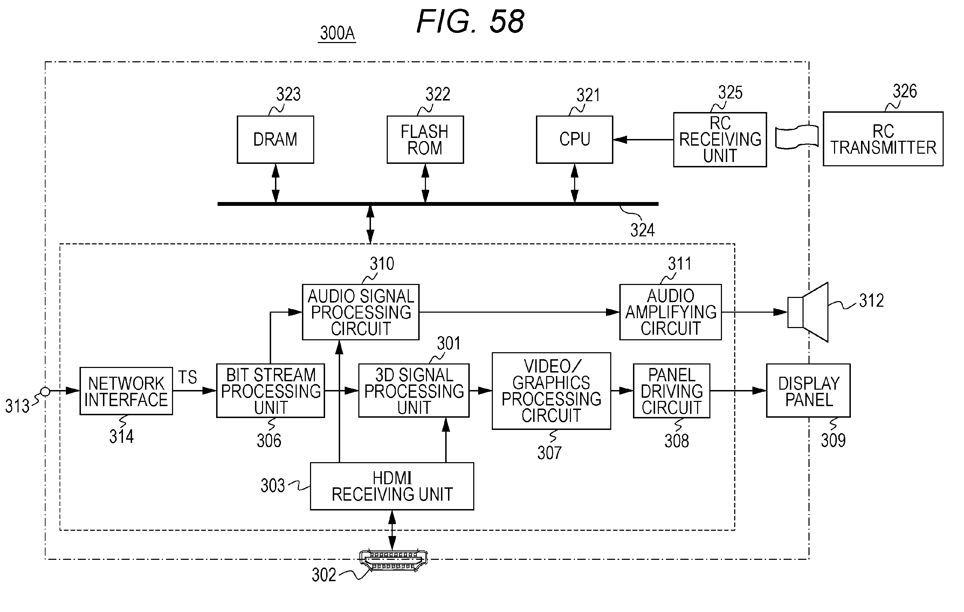

Fig. 58 illustrates an example of the configuration of a television receiver 300A in that case. In Fig. 58, the units corresponding to those of Fig. 56 are denoted by like reference numerals. The television receiver 300A includes a network terminal 313 connected to a network interface 314. A transport stream TS is output from the network interface 314 and then supplied to the bit stream processing unit 306. Although not described in detail, the other units of the television receiver 300A have the same configurations and operations as the corresponding units of the television receiver 300 illustrated in Fig. 56.

Also, in the above-described embodiment, the image transmitting/receiving system 10 is illustrated as including the broadcasting station 100, the set-top box 200, and the television receiver 300. However, as illustrated in Fig. 56, the television receiver 300 includes the bit stream processing unit 306 that functions in the same way as the bit stream processing unit 201 in the set-top box 200. Therefore, as illustrated in Fig. 59, an image transmitting/receiving system 10A may be designed to include the broadcasting station 100 and the television receiver 300.

Also, in the above-described embodiment, the set-top box 200 and the television receiver 300 are illustrated as being connected through an HDMI digital interface. However, the present technology can be similarly applied even when the set-top box 200 and the television receiver 300 are connected through any other digital interface (including a wireless interface as well as a wired interface) that is equivalent to the HDMI digital interface.

Also, in the above-described embodiment, the subtitle (caption) is treated as the superimposition information. However, the present technology can be similarly applied even when other types of information such as graphics information and text information are treated as the superimposition information, and even when those divided into an elementary stream and an additional stream and encoded so as to be output in an associated manner are treated in relation to an audio stream.

Also, the present technology may have the following configurations.

(1) A transmitting apparatus including:

an image data output unit configured to output left-eye image data and right-eye image data for displaying a stereoscopic image;
a superimposition information data output unit configured to output superimposition information data to be superimposed on an image by the left-eye image data and the right-eye image data;
a disparity information output unit configured to output disparity information for providing a disparity by shifting the superimposition information to be superimposed on the image by the left-eye image data and the right-eye image data; and
a data transmitting unit configured to generate and transmit a transport stream obtained by multiplexing a PES packet of a video data stream including the image data output from the image data output unit, a PES packet of a first private data stream including the superimposition information data output from the superimposition information data output unit, and a PES packet of a second private data stream including the disparity information output from the disparity information output unit,

wherein the data transmitting unit multiplexes the PES packet of the second private data stream such that the PES packet arrives at a decoder buffer of a receiving side a predetermined period before the timing of a display time stamp included in the PES packet.

(2) The transmitting apparatus according to the (1), wherein the predetermined period includes at least a period that is necessary to acquire the disparity information by decoding the PES packet of the second private data stream.

(3) The transmitting apparatus according to the (1) or (2), wherein

the transport stream includes one PES packet of the second private data stream with respect to one PES packet of the first private data stream, and

the disparity information included in the PES packet of the second private data stream is disparity information that is sequentially updated within a period during which the superimposition information by the superimposition information data included in the PES packet of the first private data stream is displayed, and includes disparity information of an initial frame and disparity information of a frame for each of subsequent update frame intervals.

(4) The transmitting apparatus according to the (1) or (2), wherein

the transport stream includes a plurality of PES packets of the second private data stream with respect to one PES packet of the first private data stream, and

the disparity information included in the plurality of PES packets of the second private data stream is one or more pieces of disparity information that is sequentially updated within a period during which the superimposition information by the superimposition information data included in the PES packet of the first private data stream is displayed.

(5) The transmitting apparatus according to the (4), wherein when the PES packet of the second private data stream includes a plurality of pieces of disparity information, the plurality of pieces of disparity information includes disparity information of a frame that is the same as disparity information of an initial frame included in a next PES packet.

(6) The transmitting apparatus according to the (4), wherein when the PES packet of the second private data stream includes a piece of disparity information, the data transmitting unit multiplexes the PES packet of the second private data stream after the second such that the PES packet of the second private data stream arrives at a decoding buffer of a receiving side before a next interpolation frame of the timing of the display time stamp included in the previous PES packet.

(7) The transmitting apparatus according to any one of the (1) to (6), wherein the data transmitting unit is set such that the timing of a decoding time stamp included in the PES packet of the second private data stream is earlier by a predetermined period than the timing of the display time stamp included in the PES packet.

(8) The transmitting apparatus according to any one of the (1) to (7), wherein the PES packet of the first private data stream and the PES packet of the second private data stream include synchronization information for synchronizing the display by the superimposition information data with the disparity by the disparity information.

(9) The transmitting apparatus according to any one of the (1) to (8), wherein the transport stream includes association information for associating the PES packet of the first private data stream with the PES packet of the second private data stream, in an inserted manner.

(10) The transmitting apparatus according to any one of the (1) to (9), wherein

the superimposition information data is DVB subtitle data, and the disparity information is disparity information in units of a region or a subregion included in the region, or disparity information in units of a page including all regions.

(11) The transmitting apparatus according to any one of the (1) to (10), wherein the PES packet of the second private data stream includes both the disparity information and the superimposition information data.

(12) A transmitting method including the steps of:

outputting left-eye image data and right-eye image data for displaying a stereoscopic image;

outputting superimposition information data to be superimposed on an image by the left-eye image data and the right-eye image data;

outputting disparity information for providing a disparity by shifting the superimposition information to be superimposed on the image by the left-eye image data and the right-eye image data; and

generating and transmitting a transport stream obtained by multiplexing a PES packet of a video data stream including the image data output in the image data output step, a PES packet of a first private data stream including the superimposition information data output in the superimposition information data output step, and a PES packet of a second private data stream including the disparity information output in the disparity information output step,

wherein the data transmitting step multiplexes the PES packet of the second private data stream such that the PES packet arrives at a decoder buffer of a receiving side before a predetermined period from the timing of a display time stamp included in the PES packet.

(13) A receiving apparatus including:

a data receiving unit configured to receive a transport stream obtained by multiplexing a PES packet of a video data stream including left-eye image data and right-eye image data for displaying a stereoscopic image, a PES packet of a first private data stream including superimposition information data to be superimposed on an image by the left-eye image data and the right-eye image data, and a PES packet of a second private data stream including disparity information for providing a disparity by shifting the superimposition information to be superimposed on the image by the left-eye image data and the right-eye image data, the PES packet of the second private data stream being multiplexed such that the PES packet arrives at a decoder buffer of a receiving side a predetermined period before the timing of a display time stamp included in the PES packet;

an image data acquiring unit configured to acquire the image data by performing decoding processing on the PES packet of the video data stream extracted from the transport stream received by the data receiving unit;

a decoding buffer configured to temporarily store the PES packet of the first private data stream and the PES packet of the second private data stream extracted from the transport stream received by the data receiving unit;

a superimposition information data acquiring unit configured to acquire the superimposition information data by reading the PES packet of the first private data stream from the decoding buffer and performing decoding processing on the read PES packet;

a disparity information acquiring unit configured to acquire the disparity information by reading the PES packet of the second private data stream from the decoding buffer and performing decoding processing on the read PES packet; and

an image data processing unit configured to provide a disparity to the same superimposition information superimposed on a left-eye image and a right-eye image by using the image data acquired by the image data acquiring unit, the superimposition information data acquired by the superimposition information data acquiring unit, and the disparity information acquired by the disparity information acquiring unit, and obtain data of the left-eye image on which the superimposition information is superimposed and data of the right-eye image on which the superimposition information is superimposed.

(14) The receiving apparatus according to the (13), further including a disparity information interpolating unit configured to generate disparity information of any frame interval in a period of a predetermined number of frames by performing interpolation processing on the disparity information that is acquired by the disparity information acquiring unit and is sequentially updated within the period of a predetermined number of frames during which the superimposition information is displayed,

wherein the image data processing unit uses the disparity information of any frame interval that is generated by the disparity information interpolating unit.

(15) The receiving apparatus according to the (13) or (14), wherein

the timing of a decoding time stamp included in the PES packet of the second private data stream is set to be earlier by a predetermined period than the timing of a display time stamp included in the PES packet, and

the disparity information acquiring unit performs the decoding processing by reading the PES packet of the second private data stream from the decoding buffer at the timing of the decoding time stamp included in the PES packet of the second private data stream.

REFERENCE SIGNS LIST

| | |
|---|---|
| 10, 10A | Image transmitting/receiving system |
| 100 | Broadcasting station |
| 111L, 111R | Camera |
| 112 | Video framing unit |
| 113 | Disparity vector detecting unit |
| 114 | Microphone |
| 115 | Data extracting unit |
| 115a | Data recording medium |
| 116 to 118 | Change-over switch |
| 119 | Video encoder |
| 120 | Audio encoder |
| 121 | Subtitle generating unit |
| 122 | Disparity information creating unit |

(continued)

| | |
|---|---|
| 123 | Subtitle processing unit |
| 125 | Subtitle encoder |
| 126 | Multiplexer |
| 200, 200A | Set-top box (STB) |
| 201 | Video stream processing unit |
| 202 | HDMI terminal |
| 203 | Antenna terminal |
| 204 | Digital tuner |
| 205 | Video signal processing circuit |
| 206 | HDMI transmitting unit |
| 207 | Audio signal processing circuit |
| 208 | Network terminal |
| 209 | Network interface |
| 211 | CPU |
| 215 | Remote control receiving unit |
| 216 | Remote control transmitting unit |
| 221 | Demultiplexer |
| 222 | Video decoder |
| 223 | Encoded data buffer |
| 224 | Subtitle decoder |
| 225 | Pixel buffer |
| 228 | Video superimposing unit |
| 229 | Audio decoder |
| 300, 300A | Television receiver (TV) |
| 301 3D | signal processing unit |
| 302 | HDMI terminal |
| 303 | HDMI receiving unit |
| 304 | Antenna terminal |
| 305 | Digital tuner |
| 306 | Video stream processing unit |
| 307 | Video/graphic processing circuit |
| 308 | Panel driving circuit |
| 309 | Display panel |
| 310 | Audio signal processing circuit |
| 311 | Audio amplifying circuit |
| 312 | Speaker |
| 313 | Network terminal |
| 314 | Network interface |
| 321 | CPU |
| 325 | Remote control receiving unit |
| 326 | Remote control transmitter |
| 400 | HDMI cable |

**Claims**

1. A transmitting apparatus comprising:

an image data output unit configured to output left-eye image data and right-eye image data for displaying a stereoscopic image;
a superimposition information data output unit configured to output superimposition information data to be superimposed on an image by the left-eye image data and the right-eye image data;

33

a disparity information output unit configured to output disparity information for providing a disparity by shifting the superimposition information to be superimposed on the image by the left-eye image data and the right-eye image data; and

a data transmitting unit configured to generate and transmit a transport stream obtained by multiplexing a PES packet of a video data stream including the image data output from the image data output unit, a PES packet of a first private data stream including the superimposition information data output from the superimposition information data output unit, and a PES packet of a second private data stream including the disparity information output from the disparity information output unit,

wherein the data transmitting unit multiplexes the PES packet of the second private data stream such that the PES packet arrives at a decoder buffer of a receiving side a predetermined period before the timing of a display time stamp included in the PES packet.

2. The transmitting apparatus according to claim 1, wherein the predetermined period includes at least a period that is necessary to acquire the disparity information by decoding the PES packet of the second private data stream.

3. The transmitting apparatus according to claim 1, wherein
the transport stream includes one PES packet of the second private data stream with respect to one PES packet of the first private data stream, and
the disparity information included in the PES packet of the second private data stream is disparity information that is sequentially updated within a period during which the superimposition information by the superimposition information data included in the PES packet of the first private data stream is displayed, and includes disparity information of an initial frame and disparity information of a frame for each of subsequent update frame intervals.

4. The transmitting apparatus according to claim 1, wherein
the transport stream includes a plurality of PES packets of the second private data stream with respect to one PES packet of the first private data stream, and
the disparity information included in the plurality of PES packets of the second private data stream is one or more pieces of disparity information that is sequentially updated within a period during which the superimposition information by the superimposition information data included in the PES packet of the first private data stream is displayed.

5. The transmitting apparatus according to claim 4, wherein when the PES packet of the second private data stream includes a plurality of pieces of disparity information, the plurality of pieces of disparity information includes disparity information of a frame that is the same as disparity information of an initial frame included in a next PES packet.

6. The transmitting apparatus according to claim 4, wherein when the PES packet of the second private data stream includes a piece of disparity information, the data transmitting unit multiplexes the PES packet of the second private data stream after the second such that the PES packet of the second private data stream arrives at a decoding buffer of a receiving side before a next interpolation frame of the timing of the display time stamp included in the previous PES packet.

7. The transmitting apparatus according to claim 1, wherein the data transmitting unit is set such that the timing of a decoding time stamp included in the PES packet of the second private data stream is earlier by a predetermined period than the timing of the display time stamp included in the PES packet.

8. The transmitting apparatus according to claim 1, wherein the PES packet of the first private data stream and the PES packet of the second private data stream include synchronization information for synchronizing the display by the superimposition information data with the disparity by the disparity information.

9. The transmitting apparatus according to claim 1, wherein the transport stream includes association information for associating the PES packet of the first private data stream with the PES packet of the second private data stream, in an inserted manner.

10. The transmitting apparatus according to claim 1, wherein
the superimposition information data is DVB subtitle data, and
the disparity information is disparity information in units of a region or a subregion included in the region, or disparity information in units of a page including all regions.

11. The transmitting apparatus according to claim 1, wherein the PES packet of the second private data stream includes both the disparity information and the superimposition information data.

**12.** A transmitting method comprising the steps of:

outputting left-eye image data and right-eye image data for displaying a stereoscopic image;
outputting superimposition information data to be superimposed on an image by the left-eye image data and the right-eye image data;
outputting disparity information for providing a disparity by shifting the superimposition information to be superimposed on the image by the left-eye image data and the right-eye image data; and
generating and transmitting a transport stream obtained by multiplexing a PES packet of a video data stream including the image data output in the image data output step, a PES packet of a first private data stream including the superimposition information data output in the superimposition information data output step, and a PES packet of a second private data stream including the disparity information output in the disparity information output step,
wherein the data transmitting step multiplexes the PES packet of the second private data stream such that the PES packet arrives at a decoder buffer of a receiving side a predetermined period before the timing of a display time stamp included in the PES packet.

**13.** A receiving apparatus comprising:

a data receiving unit configured to receive a transport stream obtained by multiplexing a PES packet of a video data stream including left-eye image data and right-eye image data for displaying a stereoscopic image, a PES packet of a first private data stream including superimposition information data to be superimposed on an image by the left-eye image data and the right-eye image data, and a PES packet of a second private data stream including disparity information for providing a disparity by shifting the superimposition information to be superimposed on the image by the left-eye image data and the right-eye image data, the PES packet of the second private data stream being multiplexed such that the PES packet arrives at a decoder buffer of a receiving side a predetermined period before the timing of a display time stamp included in the PES packet;
an image data acquiring unit configured to acquire the image data by performing decoding processing on the PES packet of the video data stream extracted from the transport stream received by the data receiving unit;
a decoding buffer configured to temporarily store the PES packet of the first private data stream and the PES packet of the second private data stream extracted from the transport stream received by the data receiving unit;
a superimposition information data acquiring unit configured to acquire the superimposition information data by reading the PES packet of the first private data stream from the decoding buffer and performing decoding processing on the read PES packet;
a disparity information acquiring unit configured to acquire the disparity information by reading the PES packet of the second private data stream from the decoding buffer and performing decoding processing on the read PES packet; and
an image data processing unit configured to provide a disparity to the same superimposition information superimposed on a left-eye image and a right-eye image by using the image data acquired by the image data acquiring unit, the superimposition information data acquired by the superimposition information data acquiring unit, and the disparity information acquired by the disparity information acquiring unit, and obtain data of the left-eye image on which the superimposition information is superimposed and data of the right-eye image on which the superimposition information is superimposed.

**14.** The receiving apparatus according to claim 13, further comprising a disparity information interpolating unit configured to generate disparity information of any frame interval in a period of a predetermined number of frames by performing interpolation processing on the disparity information that is acquired by the disparity information acquiring unit and is sequentially updated within the period of a predetermined number of frames during which the superimposition information is displayed,
wherein the image data processing unit uses the disparity information of any frame interval that is generated by the disparity information interpolating unit.

**15.** The receiving apparatus according to claim 13, wherein
the timing of a decoding time stamp included in the PES packet of the second private data stream is set to be earlier by a predetermined period than the timing of a display time stamp included in the PES packet, and
the disparity information acquiring unit performs the decoding processing by reading the PES packet of the second private data stream from the decoding buffer at the timing of the decoding time stamp included in the PES packet of the second private data stream.

EP 2 600 619 A1

*FIG. 1*

10

| BROADCASTING STATION | | STB | | | TV |
| 110 | | 201 | 400 | | 301 |
| TRANSMISSION DATA GENERATING UNIT | TS → | BIT STREAM PROCESSING UNIT | | | 3D SIGNAL PROCESSING UNIT |
| | | | 202  302 | | |
| 100 | | 200 | | | 300 |

37

## FIG. 2

EP 2 600 619 A1

# FIG. 3

EXAMPLE OF STEREOSCOPIC IMAGE DATA

L

1920x1080

R

1920x1080

# FIG. 4

"Top & Bottom" SCHEME

(a)

L

R

1920x1080i/p

"Side By Side" SCHEME

(b)

L R

1920x1080i/p

"Frame Sequential" SCHEME

(c)

L

1920x1080i/p

R

1920x1080i/p

# FIG. 5

Block Bi          Block Bj

(xi'−xi,yi'−yi)          (xi,yi)          (xj,yj)

(xj'−xj,yj'−yj)

RIGHT-EYE IMAGE
(REFERENCE IMAGE)

LEFT-EYE IMAGE
(DETECTION IMAGE)

# FIG. 6

RIGHT-EYE IMAGE          LEFT-EYE IMAGE

R(x,y)   COMPARISON BLOCK          L(x,y)   Bi

(xi,yi)

SEARCH RANGE

# FIG. 7

DISPARITY VECTOR (FOR EACH PIXEL)

PICTURE

# FIG. 8

DISPARITY VECTOR (FOR EACH BLOCK)

# FIG. 9

DOWNSIZING PROCESSING

(a)

(b)

(c)

(d)

EP 2 600 619 A1

# FIG.10

DSS disparity assignment
To subregion

(a)

Region_
Starting
Position R0

SubRegion 1
Horizontal
Position
(x = SR1)

Region 0

SubRegion 2
Horizontal
Position
(x = SR2)

SubRegion 1
(disparity1)

SubRegion 2
(disparity2)

For Left view

(b)

Region_
Starting
Position R0

SubRegion 1
Horizontal
Position
(x = SR1 − disparity1)

SubRegion 2
Horizontal
Position
(x = SR2 − disparity2)

For Right view

(c)

Region_
Starting
Position
R0

SubRegion 1
Horizontal
Position
(x = SR1 + disparity1)

SubRegion 2
Horizontal
Position
(x = SR2 + disparity2)

# FIG. 11

(a) 2D stream

PES payload

| PES Header | DDS | PCS | RCS | CDS | ODS | EDS |

(b) 3D EXTENSION stream

PES payload

| PES Header | DDS | DSS | EDS |

(c) 3D EXTENSION stream

PES payload

| PES Header | DDS | PCS | DSS | EDS |

EP 2 600 619 A1

# FIG. 12

(a) 2D stream

PES Header | PES payload: DDS | PCS | RCS | CDS | ODS | EDS

(b) 3D stream

PES Header | PES payload: DDS | PCS | RCS | DSS | CDS | ODS | EDS

EP 2 600 619 A1

## FIG. 13

DISPLAY AT TIMING OF
Decoder Clock = PTS

Timing1 (PTS1)                    Time

ID1;
PES1(1)

ID2:
PES2(2)

2D subtitle

PES#1

PES#2

3D extended
control

| PTS1 | Conventional Segments |

| PTS1 | Extended Segments |

Disparity value interpolation

Disparity
Plot

Disparity
Plot

CAPTION PATTERN
DISPLAY TIMING

PES1(1) : PES#1 packet with PTS1
PES2(1) : PES#2 packet with PTS1

EP 2 600 619 A1

# FIG. 14

DISPLAY AT TIMING OF
Decoder Clock = PTS

Time

Timing1 (PTS1)   Timing2 (PTS2)

ID1;
PES1(1)

ID2:
PES2(2)

PES#1

PES#2

PTS1 | Conventional Segments

PTS2 | Extended Segments

2D subtitle

3D extended control

CAPTION PATTERN
DISPLAY TIMING

Disparity value interpolation

Disparity Plot   ......   Disparity Plot

3D DISPLAY TIMING

PES1(1) : PES#1 packet with PTS1

PES2(2) : PES#2 packet with PTS2

EP 2 600 619 A1

## FIG. 15

DISPLAY AT TIMING OF
Decoder Clock = PTS

Time

(PTS3)

(PTS1)          (PTS2)    (PTS4)

                          (PTS5)

2D subtitle

Disparity value interpolation

3D extended
control

CAPTION PATTERN    Disparity                    Disparity
DISPLAY TIMING      Plot                          Plot

3D DISPLAY TIMING

ID1;
PES1(1)

PES#1

| PTS2 | PTS3 | PTS4 | PTS5 |

| PTS1 | Conventional Segments |

| ID2: PES 2(2) | ID2: PES 2(3) | ID2: PES 2(4) | ID2: PES 2(5) |

EP 2 600 619 A1

FIG. 16

Inside system container (3D subtitle)

1st PES | PES1(1) | (CAPTION PATTERN)

2nd PES | PES2(1) | (3D EXTENSION (DISPARITY INFORMATION))

Decoder
Clock
Setting

DISPARITY
Plot

Timing1
(PTS1)

DISPARITY
Plot

DISPARITY
Plot

DISPARITY
Plot

DISPLAY OF
CAPTION PATTERN

DISPARITY
INFORMATION
UPDATE SEQUENCE

Δ0

Δ1

Transport
stream

| PCR | Other packets | P1-1 | P2-1 | |

EP 2 600 619 A1

# FIG. 17

Inside system container (3D subtitle)

1st PES   [ PES1(1) ]   (CAPTION PATTERN)

2nd PES   [ PES2(1)   |   PES2(2)   |   PES2(3) ]
                    3D EXTENSION
              (DISPARITY INFORMATION)

## FIG. 18

Inside system container (3D subtitle)

1st PES — PES1(1) — (CAPTION PATTERN)

2nd PES — PES2(1) — (CAPTION PATTERN + 3D EXTENSION (DISPARITY INFORMATION))

Timing1 (PTS1)

DISPARITY Plot

DISPARITY Plot

DISPARITY Plot

DISPARITY Plot

DISPARITY Plot

DISPLAY OF CAPTION PATTERN

DISPARITY INFORMATION UPDATE SEQUENCE

$\Delta 1$

Decoder Clock Setting

Transport stream

PCR | Other | P1-1 | P2-1

## FIG. 19

Inside system container (3D subtitle)

1st PES: PES1(1) (CAPTION PATTERN)

2nd PES: PES2(1) PES2(2) PES2(3)
(CAPTION PATTERN + 3D EXTENSION (DISPARITY INFORMATION))

DISPLAY OF CAPTION PATTERN

Timing1 (PTS1) — DISPARITY Plot — A
Timing2 (PTS2) — DISPARITY Plot — C / B
Timing3 (PTS3) — DISPARITY Plot

$\alpha$, $\beta$

$\Delta 1$, $\Delta 2$, $\Delta 3$

Decoder Clock Setting

DISPARITY INFORMATION UPDATE SEQUENCE

Transport stream

PCR | Other | P1-1 | P2-1 | P2-2 | P2-3

# FIG. 20

IN THE CASE WHERE Single disparity DSS IS LINKED

# FIG. 21

REDUCTION OF packet OCCURRENCE
RATE BY Multiple disparity DSS

# FIG. 22

(a) EXAMPLE OF GENERAL PES STRUCTURE

PES stream

| PES Header | DDS | PCS | RCS | CDS | ODS | EDS |

| PES Header | DDS | DSS | EDS |

└─────────────── 2D PORTION ───────────────┘    └─── 3D EXTENSION PORTION ───┘

(b) IN THE CASE WHERE Single disparity DSS IS LINKED

PES stream

| PES Header | DDS | DSS | EDS |
Single disparity

| PES Header | DDS | DSS | EDS |
Single disparity

| PES Header | DDS | DSS | EDS |
Single disparity

(c) REDUCTION OF packet OCCURRENCE
RATE BY Multiple disparity DSS

PES stream

| PES Header | DDS | DSS | EDS |
Multiple Disparity Plots

| PES Header | DDS | DSS | EDS |
Multiple Disparity Plots

EP 2 600 619 A1

# FIG. 23

CAPTION DISPLAY PERIOD

EP 2 600 619 A1

*FIG. 24*

CAPTION DISPLAY PERIOD

FIG. 25

EP 2 600 619 A1

## FIG. 26

# FIG. 27

DVB subtitles page_composition_segment

| Syntax | No. of Bits | Format |
|---|---|---|
| page_composition_segment() { | | |
|     sync_byte | 8 | bslbf |
|     segment_type | 8 | bslbf |
|     page_id | 16 | bslbf |
|     segment_length | 16 | uimsbf |
|     page_time_out | 8 | uimsbf |
|     page_version_number | 4 | uimsbf |
|     page_state | 2 | bslbf |
|     reserved | 2 | bslbf |
|     while (processed_length < segment_length) { | | |
|         region_id | 8 | bslbf |
|         reserved | 8 | bslbf |
|         region_horizontal_address | 16 | uimsbf |
|         region_vertical_address | 16 | uimsbf |
|     } | | |
| } | | |

## FIG. 28

DVB subtitles segment_type

| DVB subtitles segment_type | Segment |
|---|---|
| 0x10 | page composition segment |
| 0x11 | region composition segment |
| 0x12 | CLUT definition segment |
| 0x13 | object data segment |
| 0x14 | display definition segment |
| **0x15 (*)** | **disparity signaling segment** |
| 0x41 - 0x7F | reserved for future use |
| 0x80 | end of display set segment |
| 0x81 – 0xEF | private data |
| 0xFF | stuffing (see note) |
| All other values | reserved for future use |

(*) Newly introduced

EP 2 600 619 A1

# FIG. 29

Component descriptor    3D EXTENSION OF Component_type

Stream_content

Component_type                              Description

| 0x03 | 0x10 | DVB subtitles (normal) with no monitor aspect ratio criticality |
| 0x03 | 0x11 | DVB subtitles (normal) for display on 4:3 aspect ratio monitor |
| 0x03 | 0x12 | DVB subtitles (normal) for display on 16:9 aspect ratio monitor |
| 0x03 | 0x13 | DVB subtitles (normal) for display on 2.21:1 aspect ratio monitor |
| 0x03 | 0x14 | DVB subtitles (normal) for display on a high definition monitor |
| 0x03 | 0x15 | DVB subtitles (normal) for display on a 3D high definition monitor |
| | | |
| 0x03 | 0x20 | DVB subtitles (for the hard of hearing) with no monitor aspect ratio criticality |
| 0x03 | 0x21 | DVB subtitles (for the hard of hearing) for display on 4:3 aspect ratio monitor |
| 0x03 | 0x22 | DVB subtitles (for the hard of hearing) for display on 16:9 aspect ratio monitor |
| 0x03 | 0x23 | DVB subtitles (for the hard of hearing) for display on 2.21:1 aspect ratio monitor |
| 0x03 | 0x24 | DVB subtitles (for the hard of hearing) for display on a high definition monitor |
| 0x03 | 0x25 | DVB subtitles (for the hard of hearing) for display on a 3D high definition monitor |

## FIG. 30

Transport Stream

PMT — Subtitle ES loop

EIT

Component descriptor
(stream_content=subtitle,
component_type=2D,
component_tag = 0x1a)

Component descriptor
(stream_content=subtitle,
component_type=3D,
component_tag = 0x2a)

PID1: Subtitle PES1 — Segments (page_id = 0xXXXX)

| DDS | PCS | RCS |
| CDS | ODS | EDS |

PID2: Subtitle PES2 — Segments (page_id = 0xYYYY)

| DDS | PCS | RCS | DSS |
| CDS | ODS | EDS | |

Stream_type (= private1 "subtitle")
Elementary PID (PID1)
Subtitle descriptor
    (Subtitling_type = 2D, composition_page_id = 0xXXXX)
Stream_identifier descriptor
    component_tag (= 0x1a)

Stream_type (= private1 "subtitle")
Elementary PID (PID2)
Subtitle descriptor
    (Subtitling_type = 3D, composition_page_id = 0xYYYY)
Stream_identifier descriptor
    component_tag (= 0x2a)

## FIG. 31

Disparity Temporal Update sequence in DSS

Interval Period = Vertex Time Distance

EP 2 600 619 A1

# FIG. 32

Disparity Temporal Update sequence in DSS

EP 2 600 619 A1

# FIG. 33

Packet structure for subtitle

| PES header | PES data payload |
|---|---|

(a)

| PTS |
|---|

| DDS | PCS | RCS | DSS | CDS | ODS | EDS |
|---|---|---|---|---|---|---|

(b)

| PTS |
|---|

| DDS | PCS | RCS | CDS | ODS | DSS | DSS | DSS | DSS | DSS | DSS | EDS |
|---|---|---|---|---|---|---|---|---|---|---|---|

EP 2 600 619 A1

## FIG. 34

Disparity Temporal Update

Arbitrary Disparity Variant

EP 2 600 619 A1

# FIG. 35

Disparity Temporal Update

Division_Period_n = Interval_Duration *(variable value)

EP 2 600 619 A1

## FIG. 36

Displaying subtitles

(EXAMPLE OF ONE page AREA + TWO region UNITS)

Region1
with subregion

Region2
with subregion

Area for
Page_default

EP 2 600 619 A1

*FIG. 37*

Disparity Temporal Update

(Example of disparity update applying to page_default+2 regions)

# FIG. 38

## Structure of disparity update sequence overview

```
Page layer
            - page_default_disparity
            - T0_0 : interval_count
                disparity_page_update
                    :
            T0_6 : interval_count
                disparity_page_update
Region layer
            region1 (subregion1)
            -  subregion_disparity_integer_part
               subregion_disparity_fractional_part
            - T1_0 : interval_count
                    disparity_region_update_integer_part
                    disparity_region_update_fractional_part
                        :
            T1_6 : interval_count
                    disparity_region_update_integer_part
                    disparity_region_update_fractional_part

            region2 (subregion1)
            -  subregion_disparity_integer_part
               subregion_disparity_fractional_part
            - T2_0 : interval_count
                    disparity_region_update_integer_part
                    disparity_region_update_fractional_part
                        :
            T2_7 : interval_count
                    disparity_region_update_integer_part
                    disparity_region_update_fractional_part
```

## FIG. 39
### DSS syntax (1)

| Syntax | Size | Type |
|---|---|---|
| disparity_signalling_segment() { | | |
| sync_byte | 8 | bslbf |
| segment_type | 8 | bslbf |
| page_id | 16 | bslbf |
| segment_length | 16 | uimbbf |
| dss_version_number | 4 | uimbdf |
| disparity_shift_update_sequence_page_flag | 1 | bslbf |
| reserved | 3 | bslbf |
| page_default_disparity_shift | 8 | tcimsbf |
| if (disparity_shift_update_sequence_page_flag ==1) { | | |
| disparity_shift_update_sequence() | | |
| } | | |
| while (processed_length<segment_length) { | | |
| region_id | 8 | uimsbf |
| disparity_shift_update_sequence_region_flag | 1 | bslbf |
| reserved | 5 | bslbf |
| number_of_subregions_minus_1 | 2 | Uimsdf |
| /* syntax continued to next page */ | | |

EP 2 600 619 A1

## FIG. 40

DSS syntax (2)

| Syntax | Size | Type |
|---|---|---|
| for (n=0; n<= number_of_subregions_minus_1; n++) { | | |
| if (number_of_subregions_minus_1 > 0) { | | |
| subregion_horizontal_position | 16 | uimsbf |
| subregion_width | 16 | uimsbf |
| } | | |
| subregion_disparity_shift_integer_part | 8 | tcimbsf |
| subregion_disparity_shift_fractional_part | 4 | uimbsf |
| reserved | 4 | uimbsf |
| if (disparity_shift_update_sequence_region_flag ==1) { | | |
| disparity_shift_update_sequence() | | |
| } | | |
| } | | |
| } | | |
| } | | |

EP 2 600 619 A1

## FIG. 41

DSS syntax (3)

| Syntax | Size | Type |
|---|---|---|
| disparity_shift_update_sequence() { | | |
|    disparity_shift_update_sequence_length | 8 | bslbf |
|    interval_duration[23..0] | 24 | uimsbf |
|   division_period_count | 8 | uimsbf |
|    for (i= 0; i< division_period_count; i ++) { | | |
|     interval_count | 8 | uimsbf |
|      disparity_shift_update_integer_part | 8 | tcimbsf |
|   } | | |
| } | | |

EP 2 600 619 A1

## FIG. 42

Semantics :
dss_version_number :

indicates the version of this disparity_signalling_segment.
The version number is incremented (modulo 16) if *any of the parameters*
*for this particular disparity_signalling_segment are modified.*

disparity_shift_update_sequence_page_flag :

if „1" then the disparity_shift_update_sequence immediately following is
to be applied to the page_default_disparity_shift.
If „0" then a disparity_shift_update_sequence for page_default_disparity_shift
is not included.

page_default_disparity_shift :

specifies the default disparity value which should be applied to all regions
within the page, and is indicated by a signed integer to range
between + 127 & -128 pixels.

processed_length :

the total number of bytes that have already been processed following
the segment_length field.

## FIG. 43

Semantics :
region_id :

    identifies the region to which the following subregion data refers.
    Regions which have been declared in the display set but which are not
    referenced in the while-loop shall adopt the page_default_disparity and
    its associated disparity_update_sequence where present.

disparity_shift_update_sequence_region_flag :

    if „1" then a disparity_shift_update_sequence is included for all subregions
    of this region.
    If „0" then a disparity_shift_update_sequence for this region is not included.

number_of_subregions_minus_1 :

    the number of subregions minus one which apply to this region.
    If number_of_subregions_minus_1 = 0 then the region has only one subregion
    whose dimensions are the same as the region and the signalled disparity
    therefore applies to the whole region.
    If number_of_subregions_minus_1 > 0 then the subregions are spatially
    enclosed by horizontally splitting the region.

subregion_horizontal_position :

    specifies the left-hand most pixel position of this subregion.

subregion_width :

    specifies the horizontal width of this subregion expressed in pixels.
    The combination of subregion_horizontal_position and subregion_width
    shall always fall within the declared extent of the region to which this refers.
    The value of this field shall therefore be in the range 1..4095.

EP 2 600 619 A1

## FIG. 44

Semantics :
subregion_disparity_shift_integer_part :

       specifies the integer part of the disparity shift value which should be applied
       to all subtitle pixel data enclosed within this subregion.
       This allows the disparity to range between + 127 & -128 pixels.

subregion_disparity_shift_fractional_part :

       specifies the fractional part of the disparity shift value which should be applied
       to all subtitle pixel data enclosed within this subregion.
       When used as an extension of the integer part, this allows the signalled
       disparity shift to be defined to 1/16 pixel accuracy.

       Note that this fractional part is unsigned (0b0001 represents 1/16 pixel
       and 0b1111 represents 15/16 pixel) and should be combined with the integer part
       according to the sign of the integer part.

       Note : Any processing (either at the encoder or the decoder) which needs
       to implement only integer values of disparity shift shall ensure values are
       rounded "towards the viewer" (i.e. that positive values of disparity are rounded down
       and negative values rounded up).

disparity_shift_update_sequence_length :

       specifies the number of bytes contained in the disparity_shift_update_sequence
       which follows this field.

EP 2 600 619 A1

# FIG. 45

Semantics :

interval_duration :
> specifies the unit of interval used to calculate the PTS for the disparity update
> as a 24-bit field (in 90 kHz STC increments).
> The value of interval_duration shall correspond to an exact multiple ($\geq 1$)
> of frame periods. The maximum increment is just over 186 seconds

division_period_count :
> specifies the number of unique disparity values ($\geq 1$) and hence the number
> of time intervals within the following disparity_shift_update_sequence
> „for" loop.

interval_count :
> specifies the multiplier used to calculate the PTS for this disparity update
> from the initial PTS value. The calculation for the PTS for this update is
> PTSnew = PTSprevious + (interval_duration * interval_count)
> where interval count $\geq 1$, where PTSnew increases with every iteration
> of the loop and where the initial value of PTSprevious is the PTS signalled
> in the PES header.

disparity_shift_update_integer_part :
> specifies the integer part of the disparity update value which should
> be applied to all subtitle pixel data enclosed within this page or this subregion.
> This allows the disparity to excurse + 127 to -128 pixel.

EP 2 600 619 A1

## FIG. 46

BROADCAST RECEPTION CONCEPT (3D RECEPTION)

# FIG. 47

BROADCAST RECEPTION CONCEPT (LEGACY 2D RECEPTION)

3D subtitle stream

Region 0

A B C

SR 00
-Position
-Disparity1

BROADCASTING STATION
100

A B C → A B C → TV
300

Legacy 2D STB → HDMI

A B C → A B C

Legacy 2DTV
300

EP 2 600 619 A1

## FIG. 48

(a)

BACKGROUND

NEAR-VIEW OBJECT

**Image Popped Up !**

CAPTION

(b)

BACKGROUND

NEAR-VIEW OBJECT

CAPTION

EP 2 600 619 A1

# FIG. 49

EP 2 600 619 A1

(a)

BACKGROUND

NEAR-VIEW OBJECT

**Image Popped Up !**

CAPTION

(b)

LGI

**Image Popped Up !**

RGI

**Image Popped Up !**

(c)

**Image Popped Up !**

# FIG. 50

FIG. 51

_201_

| | | |
|---|---|---|

TS → DEMULTIPLEXER (221) → VIDEO DECODER (222) → VIDEO SUPERIMPOSING UNIT (228) → Vout

DEMULTIPLEXER (221) → ENCODED DATA BUFFER (223) → SUBTITLE DECODER (224) → PIXEL BUFFER (225) → VIDEO SUPERIMPOSING UNIT (228)

SUBTITLE DECODER (224) → DISPARITY INFORMATION INTERPOLATING UNIT (226) → POSITION CONTROL UNIT (227) → VIDEO SUPERIMPOSING UNIT (228)

DEMULTIPLEXER (221) → AUDIO DECODER (229) → Aout

# FIG. 52

Syntax of multi_decoding descriptor

| Syntax | Size | Type |
|---|---|---|
| multi_decoding descriptor() { | | |
| descriptor_tag | 8 | uimsbf |
| descriptor_length | 8 | uimsbf |
| reserved | 4 | bslbf |
| stream_content | 4 | uimsbf |
| component_type | 8 | uimsbf |
| component_tag | 8 | uimsbf |
| multi_decoding_count | 4 | uimsbf |
| reserved | 4 | bslbf |
| for (i= 0; i< multi_decoding_count; i ++) { | | |
| target_stream_component_type | 8 | uimsbf |
| target_stream_component_tag | 8 | uimsbf |
| } | | |
| } | | |

EP 2 600 619 A1

# FIG. 53

Semantics of multi_decoding descriptor

stream_content  (4)
        Specifies the type (video, audio, subtitles ) of stream.
component_type (8)
        Specifies the type of video, audio, subtitles component.
component_tag (8)
        Has the same value as the component _tag field in the stream identifier descriptor.
multi_decoding_count (4)
        Specifies the number of  corresponding streams.
target_stream_component_type (8)
        Specifies the type of target video, audio, subtitles component to be decoded
        together with the main stream.
target_stream_component_tag(8)
        Has the same value as the component _tag field in
        the target stream identifier descriptor.

## FIG. 54

```
                    ┌─────────────────────────────┐
                    │      Transport Stream       │
                    └─────────────────────────────┘
                         │              │                          ┌──────────────────────┐   ┌─────┐┌─────┐┌─────┐
                    ┌────────┐      ┌────────┐                     │ PID1: Subtitle PES1  │   │ DDS ││ PCS ││ RCS │
                    │  PMT   │      │  EIT   │                     └──────────────────────┘   ├─────┤├─────┤├─────┤
                    └────────┘      └────────┘   ┌─────────────────────────────┐              │ CDS ││ ODS ││ EDS │
                                                 │ Component descriptor        │              └─────┘└─────┘└─────┘
                                                 │ (stream_content = subtitle, │          ┌────────────────────────┐
                                                 │ component_type = 2D,        │          │ Segments               │
                                                 │ component_tag = 0x1a)       │          │  (page_id = 0xXXXX)    │
                                                 └─────────────────────────────┘          └────────────────────────┘
                            ┌──────────────────┐ ┌─────────────────────────────┐
                            │ Subtitle ES loop │ │ Component descriptor        │
                            └──────────────────┘ │ (stream_content = subtitle, │          ┌──────────────────────┐   ┌─────┐┌─────┐┌─────┐
                                                 │ component_type = 3D,        │          │ PID2: Subtitle PES2  │   │ DDS ││ DSS ││ EDS │
                                                 │ component_tag = 0x2a)       │          └──────────────────────┘   └─────┘└─────┘└─────┘
                                                 └─────────────────────────────┘                                           or
  ┌──────────────────────────────┐                                                                                  ┌─────┐┌─────┐┌─────┐┌─────┐
  │ Multi_decoding descriptor    │                                                                                  │ DDS ││ PCS ││ DSS ││ EDS │
  │                              │ ┌───────────────────────────────────────────────────┐                          └─────┘└─────┘└─────┘└─────┘
  │ stream_content = subtitle    │ │ Stream_type (= private1 "subtitle")               │          ┌────────────────────────┐
  │ component_type = 2D          │ │ Elementary PID (PID1)                             │          │ Segments               │
  │ component_tag = 0x1a         │ │ Subtitle descriptor                               │          │  (page_id = 0xXXXX)    │
  │                              │ │    (Subtitling_type = 2D, composition_page_id = 0xXXXX)       └────────────────────────┘
  │ target_stream_              │ │ Stream_identifier descriptor                      │
  │    component_type = 3D       │ │    component_tag (= 0x1a)                         │
  │ target_stream_              │ └───────────────────────────────────────────────────┘
  │    component_tag = 0x2a      │ ┌───────────────────────────────────────────────────┐
  └──────────────────────────────┘ │ Stream_type (= private1 "subtitle")               │
                                    │ Elementary PID (PID2)                             │
                                    │ Subtitle descriptor                               │
                                    │    (Subtitling_type = 3D, composition_page_id = 0xXXXX)
                                    │ Stream_identifier descriptor                      │
                                    │    component_tag (= 0x2a)                         │
                                    └───────────────────────────────────────────────────┘
```

EP 2 600 619 A1

## FIG. 55

EP 2 600 619 A1

*FIG. 56*

## FIG. 57

EP 2 600 619 A1

FIG. 58

## FIG. 59

<u>10A</u>

```
┌─────────────────────────┐           ┌──────────────────────────────────────────┐
│   BROADCASTING          │           │                            TV              │
│      STATION            │           │  ┌──────────────┐      ┌──────────────┐   │
│        ┌──────────────┐ │    TS     │  │ BIT STREAM   │      │ 3D SIGNAL    │   │
│        │ TRANSMISSION │ │   ⇒       │  │ PROCESSING   │─────▶│ PROCESSING   │   │
│ 110 ～  │ DATA         │ │           │  │ UNIT         │      │ UNIT         │   │
│        │ GENERATING   │ │           │  └──────────────┘      └──────────────┘   │
│        │ UNIT         │ │           │         306                   301          │
│        └──────────────┘ │           │                                            │
└─────────────────────────┘           └──────────────────────────────────────────┘
              100                                          300
```

## FIG. 60

**INTERNATIONAL SEARCH REPORT**

| | International application No. |
|---|---|
| | PCT/JP2012/067014 |

A. CLASSIFICATION OF SUBJECT MATTER
*H04N13/00*(2006.01)i, *H04N7/173*(2011.01)i

According to International Patent Classification (IPC) or to both national classification and IPC

B. FIELDS SEARCHED

Minimum documentation searched (classification system followed by classification symbols)
H04N13/00, H04N7/173

Documentation searched other than minimum documentation to the extent that such documents are included in the fields searched
Jitsuyo Shinan Koho 1922–1996 Jitsuyo Shinan Toroku Koho 1996–2012
Kokai Jitsuyo Shinan Koho 1971–2012 Toroku Jitsuyo Shinan Koho 1994–2012

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2011-30200 A (Sony Corp.), 10 February 2011 (10.02.2011), paragraphs [0027] to [0146]; fig. 1 to 22 & US 2011/0134210 A1 | 1-15 |
| Y | JP 2008-85663 A (Toshiba Corp.), 10 April 2008 (10.04.2008), paragraphs [0027] to [0068]; fig. 1 to 5 (Family: none) | 1-15 |
| Y | JP 2011-30221 A (Panasonic Corp.), 10 February 2011 (10.02.2011), paragraphs [0786], [0787]; fig. 95 & US 2011/0090305 A1 & EP 2400771 A1 & CN 101933337 A & KR 10-2011-0126514 A | 14 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search 19 July, 2012 (19.07.12) | Date of mailing of the international search report 31 July, 2012 (31.07.12) |
|---|---|
| Name and mailing address of the ISA/ Japanese Patent Office | Authorized officer |
| Facsimile No. | Telephone No. |

Form PCT/ISA/210 (second sheet) (July 2009)

**INTERNATIONAL SEARCH REPORT**

| International application No. |
| --- |
| PCT/JP2012/067014 |

C (Continuation).    DOCUMENTS CONSIDERED TO BE RELEVANT

| Category* | Citation of document, with indication, where appropriate, of the relevant passages | Relevant to claim No. |
| --- | --- | --- |
| A | JP 2011-30193 A  (Sony Corp.),<br>10 February 2011 (10.02.2011),<br>entire text; all drawings<br>& US 2011/0134213 A1 | 1-15 |

Form PCT/ISA/210 (continuation of second sheet) (July 2009)

**EP 2 600 619 A1**

**Patent documents cited in the description**

• JP 2005006114 A